# EUROPEAN PATENT APPLICATION

(11) **EP 4 550 889 A1**
(43) Date of publication of application: **07.05.2025**
(21) Application number: 23843437.7
(22) Date of filing: 21.07.2023
(51) Int. Cl.: H04W 40/22, H04W 40/12, H04W 36/30, H04W 88/04

(54) **METHOD AND DEVICE FOR MANAGING RELAY CHANGE OF CONNECTION MODE REMOTE TERMINAL IN WIRELESS COMMUNICATION SYSTEM**

(30) Priority: 22.07.2022 KR 20220091116
(71) Applicant: Samsung Electronics Co., Ltd., Suwon-si, Gyeonggi-do 16677 (KR)
(72) Inventor: KANG, Hyunjeong, Suwon-si Gyeonggi-do 16677 (KR); BAE, Beomsik, Suwon-si Gyeonggi-do 16677 (KR)
(74) Representative: Gulde & Partner
(86) International application number: PCT/KR2023/010602
(87) International publication number: WO 2024/019591

(57) **Abstract**

The present disclosure relates to a 5G or 6G communication system for supporting a higher data transmission rate. A method performed by a terminal in a wireless communication system may comprise the steps of: receiving, from a base station, first configuration information for first sidelink measurement and second configuration information for second sidelink measurement through a first user equipment to network (U2N) relay for sidelink communication; performing the first sidelink measurement for the first U2N relay based on the first configuration information; performing the second sidelink measurement for a second U2N relay based on the second configuration information; when the result of the first sidelink measurement is lower (worse) than a first threshold and the result of the second sidelink measurement is higher (better) than a second threshold, transmitting, to the base station, information including the result of the first sidelink measurement and the result of the second sidelink measurement; receiving a message instructing to establish a connection for the sidelink communication with the second U2N relay based on the information; and establishing the connection with the second U2N relay based on the message.

## Description

### [Technical Field]

The disclosure relates to a wireless communication system. More specifically, the disclosure relates to a method and a device for processing connection mode mobility of a terminal, in which a connection to a base station is established base on a sidelink with a relay terminal in a wireless communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm Wave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure is to provide a device and a method capable of effectively providing services in a wireless communication system.

The technical subjects pursued in the disclosure may not be limited to the above-mentioned technical subjects, and other technical subjects which are not mentioned may be clearly understood from the following descriptions by those skilled in the art to which the disclosure pertains.

### [Solution to Problem]

According to an embodiment, a method performed by a terminal in a wireless communication system may include receiving, from a base station via a first user equipment to network (U2N) relay for sidelink communication, first configuration information for first sidelink measurement and second configuration information for second sidelink measurement, performing the first sidelink measurement for the first U2N relay based on the first configuration information, performing the second sidelink measurement for a second U2N relay based on the second configuration information, in case that a result of the first sidelink measurement is lower (worse) than a first threshold value and a result of the second sidelink measurement is higher (better) than a second threshold value, transmitting, to the base station, information including the result of the first sidelink measurement and the result of the second sidelink measurement, receiving a message indicating to establish a connection to the second U2N relay for the sidelink communication, based on the information, and establishing the connection to the second U2N relay based on the message.

According to an embodiment, a terminal in a wireless communication system may include a transceiver and a controller coupled with the transceiver. According to an embodiment, the controller may be configured to receive, from a base station via a first user equipment to network (U2N) relay for sidelink communication, first configuration information for first sidelink measurement and second configuration information for second sidelink measurement, perform the first sidelink measurement for the first U2N relay based on the first configuration information, perform the second sidelink measurement for a second U2N relay based on the second configuration information, in case that a result of the first sidelink measurement is lower (worse) than a first threshold value and a result of the second sidelink measurement is higher (better) than a second threshold value, transmit, to the base station, information including the result of the first sidelink measurement and the result of the second sidelink measurement, receive a message indicating to establish a connection to the second U2N relay for the sidelink communication, based on the information, and establish the connection to the second U2N relay based on the message.

According to an embodiment, a method performed by a first user equipment to network (U2N) relay for sidelink communication in a wireless communication system may include transmitting, to a terminal, first configuration information for first sidelink measurement and second configuration information for second sidelink measurement, transmitting, to the terminal, a signal for the first sidelink measurement, in case that a result of the first sidelink measurement based on the first configuration information is lower than a first threshold value and a result of second sidelink measurement for a second U2N relay, which is based on the second configuration information, is higher than a second threshold value, transmitting information including the result of the first sidelink measurement and the result of the second sidelink measurement to a base station, and transmitting, to the terminal, a message indicating to establish a connection to the second U2N relay for the sidelink communication. The message may be based on the information, and the connection for the sidelink communication may be established between the terminal and the second U2N relay based on the message.

According to an embodiment, a first user equipment to network (U2N) relay for sidelink communication in a wireless communication system may include a transceiver and a controller coupled with the transceiver, wherein the controller is configured to transmit, to a terminal, first configuration information for first sidelink measurement and second configuration information for second sidelink measurement, transmit, to a terminal, a signal for the first sidelink measurement, in case that a result of the first sidelink measurement based on the first configuration information is lower than a first threshold value and a result of second sidelink measurement for a second U2N relay, which is based on the second configuration information, is higher than a second threshold value, transmit, to a base station, information including the result of the first sidelink measurement and the result of the second sidelink measurement, and transmit, to the terminal, a message indicating to establish a connection to the second U2N relay for the sidelink communication. The message may be based on the information, and the connection for the sidelink communication may be established between the terminal and the second U2N relay based on the message.

### [Advantageous Effects of Invention]

According to an embodiment of the disclosure, a device and a method capable of effectively providing services and expanding service coverage in a wireless communication system can be provided.

Advantageous effects obtainable from the disclosure may not be limited to the above - mentioned effects, and other effects which are not mentioned may be clearly understood from the following descriptions by those skilled in the art to which the disclosure pertains.

### [Brief Description of Drawings]

FIG. 1A is a diagram illustrating a wireless communication system according to an embodiment of the disclosure;
FIG. 1B is a diagram illustrating the wireless communication system according to an embodiment of the disclosure;
FIG. 2 illustrates a structure of a base station in a wireless communication system according to an embodiment of the disclosure.
FIG. 3 illustrates a structure of a UE in a wireless communication system according to an embodiment of the disclosure.
FIG. 4 is a diagram illustrating a configuration of a communication unit in the wireless communication system according to an embodiment of the disclosure;
FIG. 5 is a diagram illustrating a structure of time-frequency resources of the wireless communication system according to an embodiment of the disclosure;
FIG. 6A is a diagram illustrating a path switching procedure of a UE within the same base station in the wireless communication system supporting layer-2 sidelink relay;
FIG. 6B is a diagram illustrating a path switching procedure of a UE within the same base station in the wireless communication system supporting layer-2 sidelink relay;
FIG. 7 is a diagram illustrating a path switching procedure of a UE between different base stations in the wireless communication system supporting layer-2 sidelink relay;
FIG. 8 is a diagram illustrating a path switching procedure of a UE between different base stations in the wireless communication system supporting layer-2 sidelink relay;
FIG. 9 is a diagram illustrating a path switching procedure of a UE between different base stations in the wireless communication system supporting layer-2 sidelink relay;
FIG. 10 is a diagram illustrating a path switching procedure of a UE between sidelink relays within a base station in the wireless communication system supporting layer-2 sidelink relay;
FIG. 11 is a diagram illustrating a path switching procedure of a UE in the wireless communication system supporting layer-3 sidelink relay;
FIG. 12 is a diagram illustrating a sidelink relay path switching operation of a UE between layer-3 sidelink relay and layer-2 sidelink relay according to an embodiment of the disclosure;
FIG. 13 is a diagram illustrating a sidelink relay path switching operation of a UE between layer-3 sidelink relay and layer-2 sidelink relay according to an embodiment of the disclosure;
FIG. 14 is a diagram illustrating a sidelink relay path switching operation of a UE between layer-3 sidelink relay and layer-2 sidelink relay according to an embodiment of the disclosure;
FIG. 15 is a diagram illustrating a sidelink relay path switching operation of a UE between layer-3 sidelink relay and layer-2 sidelink relay according to an embodiment of the disclosure;
FIG. 16 is a diagram illustrating a sidelink relay path switching operation of a UE between layer-3 sidelink relay and layer-2 sidelink relay according to an embodiment of the disclosure;
FIG. 17 is a diagram illustrating a sidelink relay path switching operation of a UE between layer-3 sidelink relay and layer-2 sidelink relay according to an embodiment of the disclosure;
FIG. 18 is a diagram illustrating a sidelink relay path switching operation of a UE between layer-3 sidelink relay and layer-2 sidelink relay according to an embodiment of the disclosure; and
FIG. 19 is a diagram illustrating a sidelink relay path switching operation of a UE between layer-3 sidelink relay and layer-2 sidelink relay according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms, and the embodiments of the disclosure are provided merely to completely disclose the disclosure and inform those skilled in the art of the scope of the disclosure. The disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Each block in the flowchart illustrations may represent a module, segment, or portion of code, which includes one or more executable instructions for implementing the specified logical function(s). In other embodiments, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

The following detailed description of embodiments of the disclosure is mainly directed to new RAN (NR) as a radio access network and packet core (5G system or 5G core network or next generation core (NG Core)) as a core network in the 5G mobile communication standards specified by the 3rd generation partnership project (3GPP) that is a mobile communication standardization group, but the main idea of the disclosure may be applied to other communication systems having similar backgrounds through some modifications without significantly departing from the scope of the disclosure. The modifications within the scope of the disclosure may be possible based on determinations by those skilled in the art.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions (NFs), and the analysis results may be used independently in each NF.

In the following description, some of terms and names defined in the 3rd generation partnership project long term evolution (3GPP LTE) standards (standards for 5G, NR, LTE, or similar systems) may be used for the convenience of description. However, the disclosure is not limited by these terms and names, and may be applied in the same way to systems that conform other standards.

Hereinafter, the disclosure relates to a method and a device for processing mobility of a connection mode of a UE when the UE is connected to a base station directly or via a sidelink relay in a wireless communication system. Specifically, the disclosure provides a method in which, when a UE supports a connection to a base station via a layer-2 sidelink relay or supports a connection to the base station via a layer-3 sidelink relay, the UE that has been connected to the base station via the layer-3 sidelink relay determines or identifies path switching to the layer-2 sidelink relay, transmits a measurement report for a neighboring layer-2 sidelink relay to the base station, determines or identifies whether an indication of path switching to a new layer-2 sidelink relay is acquired according to an indication of the base station, and performs path switching to the new layer-2 sidelink relay. Alternatively, the disclosure provides a method in which the UE that has been connected to the base station via the layer-2 sidelink relay determines path switching to the layer-3 sidelink relay, transmits a measurement report for a neighboring layer-3 sidelink relay to the base station, determines or identifies whether an indication of path switching to a new layer-3 sidelink relay is acquired according to an indication of the base station, and performs path switching to the new layer-3 sidelink relay. The disclosure provides a method in which the base station may acquire, from the UE, UE information on whether the UE is able to be connected to a network via relay transmission of the layer-2 sidelink relay or whether the UE is able to be connected to the network via relay transmission of the layer-3 sidelink relay. The disclosure provides a method in which the base station may acquire, from a sidelink relay within a base station area, which is capable of connecting the UE to the network, sidelink relay information on whether the sidelink relay supports a role of the layer-2 sidelink relay or supports a role of the layer-3 sidelink relay.

In the disclosure, a UE may expand service coverage, increase reliability of data transmission and reception, and minimize or reduce battery use of the UE by transmitting and receiving data/signaling to and from a base station via a sidelink relay.

In the following description, terms referring to signals, terms referring to channels, terms referring to control information, terms referring to network entities, and/or terms referring to device elements are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, and/or a multimedia system capable of performing a communication function. However, the above terms are merely an example, and the base station and the terminal are not limited thereto. In the disclosure, the term "eNB" may be interchangeably used with the term "gNB" for the sake of descriptive convenience. That is, a base station described as "eNB" may refer to "gNB". In the disclosure, the term "terminal" may refer to not only mobile phones, NB-IoT devices, and sensors, but also various wireless communication devices.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be referred to as radio resource control (RRC) signaling or a media access control (MAC) control element (CE).

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Furthermore, the embodiments of the disclosure will be described using terms employed in some communication standards (e.g., the 3rd generation partnership project (3GPP)), but they are for illustrative purposes only. The embodiments of the disclosure may be easily applied to other communication systems through modifications.

The disclosure may provide a method and a device for processing mobility of a connection mode (RRC_CONNECTED STATE) of a UE in the wireless communication system when the UE is connected to a base station via a sidelink relay or when the UE is directly connected to a base station. In a general communication system in which a UE is directly connected to a base station, mobility of a connection mode of the UE may be supported as a handover procedure. In a sidelink relay system in which a UE supports a connection to a base station via a sidelink relay, mobility of a connection mode of the UE may be supported as handover and path switching procedures. The disclosure may provide a method and a device for, when a UE supports a connection to a base station via relay transmission of a layer 3 sidelink relay or a layer 2 sidelink relay in the wireless communication system, processing sidelink relay-related configuration information and/or a path switching procedure of the UE when the UE changes a sidelink relay within the same base station, when the UE changes from a connection via a sidelink relay within the same base station to a direct connection to the base station, when the UE changes from a direct connection to the base station to a connection via a sidelink relay within the same base station, when the UE changes a sidelink relay between different base stations, when the UE changes from a direct connection to the base station to a connection via a sidelink relay of another base station, when the UE changes from a connection via a sidelink relay of the base station to a direct connection to another base station, and/or when the UE changes from a direct connection to the base station to a direct connection to another base station.

In addition, direct communication between UEs (sidelink communication) using a 5G communication system is being studied, and direct communication between UEs is applied to, for example, vehicle-to-everything communication (hereinafter, "V2X") and public safety networks, and is thus expected to provide various services to users.

Specifically, a method of using a sidelink relay which can support service coverage expansion, an increase in data transmission reliability, and reduction in UE power consumption is required.

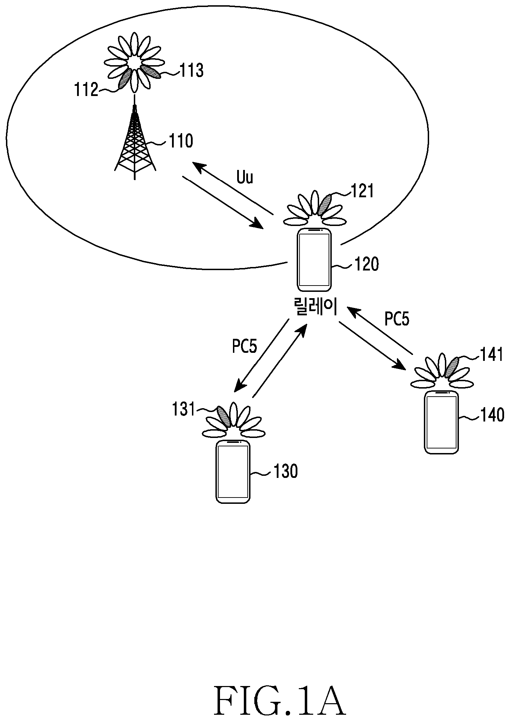

FIG. 1A is a diagram illustrating the wireless communication system according to an embodiment of the disclosure.

Referring to FIG. 1A, a base station 110, UEs 130 and 140, and/or a sidelink relay 120 capable of relaying data transmission and reception between the base station and the UE are illustrated as a part of nodes using wireless channels in the wireless communication system. In the disclosure, the sidelink relay may be a UE to network (U2N) relay. FIG. 1A illustrates only one base station, but the wireless communication system may further include another base station identical or similar to the base station 110 and may include more relays. That is, the configuration of the wireless communication system in FIG. 1A is an example, and may further include other components that are not illustrated in FIG. 1A.

According to an embodiment, the base station 110 may be a network infrastructure that provides wireless access to the UEs 130 and 140 and the relay 120. The base station 110 has coverage defined to be a predetermined geographic area, based on a distance over which a signal may be transmitted. For example, the base station 110 may be referred to as not only "base station" but also "access point (AP)", "eNodeB (eNB)", "5th generation node (5G node)", "next generation nodeB (gNB)", "wireless point", "transmission/reception point (TRP)", or other terms having equivalent technical meanings.

According to an embodiment, the relay 120 is a device used by a user or a network infrastructure, and may perform communication with the base station 110 via a wireless channel. A link from the base station 110 to the relay 120 may be referred to as a downlink (DL), and a link from the relay 120 to the base station 110 may be referred to as an uplink (UL). The base station 110 and the relay 120 may be connected via a Uu interface. The UL may refer to a wireless link via which the relay 120 transmits a data or control signal to the base station 110, and the DL may refer to a wireless link via which the base station 110 transmits a data or control signal to the relay 120.

According to an embodiment, the relay 120 may perform communication via a wireless channel between the UE 130 and the UE 140. A link between the relay 120 and the UE 130 and a link between the relay 120 and the UE 140 may be referred to as a sidelink, and the sidelink may also be referred to as a PC5 interface.

According to an embodiment, each of the UEs 130 and 140 is a device used by a user and may communicate with the base station 110 via a wireless channel or communicate with the relay 120 via a wireless channel.

In the disclosure, each of the UE 130 and the UE 140 may communicate with the relay 120 via a wireless channel. At least one of the UE 130 and the UE 140 may be operated without involvement of a user. That is, at least one of the UE 130 and the UE 140 is a device that performs machine type communication (MTC) and may not be carried by a user. For example, each of the UE 130 and the UE 140 may be referred to as not only "user equipment (UE)", but also "terminal", "mobile station", "subscriber station", "remote terminal", "wireless terminal", "user device", or other terms having equivalent technical meanings.

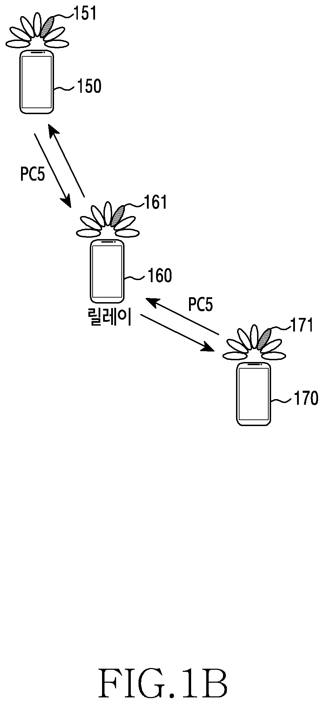

FIG. 1B is a diagram illustrating the wireless communication system according to an embodiment of the disclosure;

Referring to FIG. 1B, the wireless communication system including UEs 150 and 170 and a sidelink relay 160 capable of relaying data transmission and reception between the UEs is illustrated as a part of nodes using wireless channels in the wireless communication system. The sidelink relay 160 may be a UE-to-UE (U2U) relay. Of course, the wireless communication system is not limited to the example described above. That is, the configuration of the wireless communication system in FIG. 1B is an example, and may further include other components that are not illustrated in FIG. 1B.

According to an embodiment, the relay 160 may perform communication with the UE 150 and the UE 170 via a wireless channel. In this case, a link between the relay 160 and the UE 150 and a link between the relay 160 and the UE 170 may be referred to as a sidelink, and the sidelink may also be referred to as a PC5 interface.

According to an embodiment, each of the UE 150 and the UE 170 is a device used by a user, and may perform direct communication via a wireless channel or perform communication with a counterpart UE via the relay 160 and a wireless channel. In this case, a link between the UE 150 and the UE 170, a link between the UE 150 and the relay 160, and a link between the UE 170 and the relay 160 are referred to as sidelinks, and the sidelinks may be referred to as PC5 interfaces.

According to an embodiment, at least one of the UE 150 and the UE 170 may be operated without involvement of a user. That is, at least one of the UE 150 and the UE 170 is a device that performs machine type communication (MTC) and may not be carried by a user. For example, each of the UE 150 and the UE 170 may be referred to as not only "user equipment (UE)", but also "terminal", "mobile station", "subscriber station", "remote terminal", "wireless terminal", "user device", or other terms having equivalent technical meanings.

In the following description, uplink or downlink and Uu interface, sidelink, and PC-5 may be used interchangeably.

The base station 110, the relays 120 and 160, and the UEs 130, 140, 150, and 170 illustrated in FIG. 1A and FIG. 1B may transmit and receive wireless signals in millimeter wave (mmWave) bands (e.g., 28 GHz, 30 GHz, 38 GHz, and 60 GHz). In this case, in order to improve channel gain, the base station 110, the relays 120 and 160, and the UEs 130, 140, 150, and 170 may perform beamforming. Here, the beamforming may include transmission beamforming and reception beamforming. That is, the base station 110, the relays 120 and 160, and the UEs 130, 140, 150, and 170 may give directionality to a transmission signal or a reception signal. To this end, the base station 110, the relays 120 and 160, and the UEs 130, 140, 150, and 170 may select serving beams 112, 113, 121, 131, 141, 151, 161, and 171 via a beam search or beam management procedure. After the serving beams 112, 113, 121, 131, 141, 151, 161, and 171 are selected, communication may be performed via resources that are in quasi co-located (QCL) relationship with resources in which the serving beams 112, 113, 121, 131, 141, 151, 161, and 171 have been transmitted.

According to an embodiment, in case that large-scale characteristics of a channel, via which a symbol on a first antenna port has been transferred, can be inferred from a channel via which a symbol on a second antenna port has been transferred, it may be evaluated or identified that the first antenna port and the second antenna port are in a QCL relationship. For example, the large-scale characteristics may include at least one of a delay spread, a Doppler spread, a Doppler shift, average gain, an average delay, or a spatial receiver parameter.

The UE 130, UE 140, UE 150, and/or UE 170 illustrated in FIG. 1A and FIG. 1B may support vehicle communication. For vehicle communication, in an LTE system, the standardization on a vehicle-to-everything (V2X) technology has been completed based on a device-to-device (D2D) structure in 3GPP Release 14 and Release 15, and the standardization on the V2X technology has been completed based on 5G NR in 3GPP Release 16. NR V2X may support UE-to-UE unicast communication, groupcast (or multicast) communication, and broadcast communication. In addition, unlike LTE V2X aiming at transmission and/or reception of basic safety information required for road driving of vehicles, NR V2X aims to provide more advanced services, such as platooning, advanced driving, extended sensors, and/or remote driving. V2X services may be divided into a basic safety service and an advanced service. The basic safety service may include services from a vehicle notification (cooperative awareness messages (CAM) or basic safety message (BSM)) service to detailed services, such as a left turn notification service, a front vehicle crash alert service, an emergency vehicle approach notification service, a forward obstacle alert service, and/or an intersection signal information service. V2X information may be transmitted or received using a broadcast, unicast, or groupcast transmission scheme. The advanced service not only has enhanced quality of service (QoS) requirements compared to the basic safety service, but also requires a scheme capable of transmitting and/or receiving V2X information by using the unicast and groupcast transmission schemes in addition to the broadcast transmission scheme so that the V2X information may be transmitted and received within a specific vehicle group or between two vehicles. The advanced service may include detailed services, such as a platooning service, an autonomous driving service, a remote-driving service, and/or an extended sensor-based V2X service. In addition, NR V2X may provide a public safety service by supporting a direct communication service between UEs in an area with no network infrastructure.

Hereinafter, a sidelink (SL) refers to a transmission and reception path for a signal between UEs or a transmission and reception path for a signal between a UE and a relay, and may be used interchangeably with a PC5 interface. Hereinafter, a base station is a subject that performs resource allocation for a UE and a relay, and may be a base station that supports both V2X communication and general cellular communication, or may be a base station that supports only V2X communication. That is, a base station may refer to an NR base station (e.g., gNB), an LTE base station (e.g., eNB), or a road site unit (RSU). A UE (terminal) may include not only a general user equipment and a mobile station, but also a vehicle that supports vehicle-to-vehicle (V2V) communication, a vehicle or a pedestrian's handset (e.g., a smartphone) that supports vehicle-to-pedestrian (V2P) communication, a vehicle that supports vehicle-to-network (V2N) communication, a vehicle that supports vehicle-to-infrastructure (V2I) communication, an RSU equipped with UE functions, an RSU equipped with base station functions, an RSU equipped with some of the base station functions and some of the UE functions, and/or the like.

In the disclosure, a UE may refer to a vehicle that supports vehicle-to-vehicle (V2V) communication, a vehicle or a pedestrian's handset (e.g., a smartphone) that supports vehicle-to-pedestrian (V2P) communication, a vehicle that supports a vehicle-to-network (V2N) communication, and/or a vehicle that supports vehicle-to-infrastructure (V2I) communication. A UE may refer to a user device supporting device-to-device communication of a public safety network.

In the disclosure, a UE may refer to a road side unit (RSU) equipped with UE functions, an RSU equipped with base station functions, or an RSU equipped with some of the base station functions and some of the UE functions.

In the disclosure, a relay may refer to a vehicle supporting V2X communication or a user device supporting device-to-device communication of a public safety network. In addition, in the disclosure, a relay may refer to a device equipped with UE functions, a device equipped with base station functions, or a device equipped with some of the base station functions and some of the UE functions.

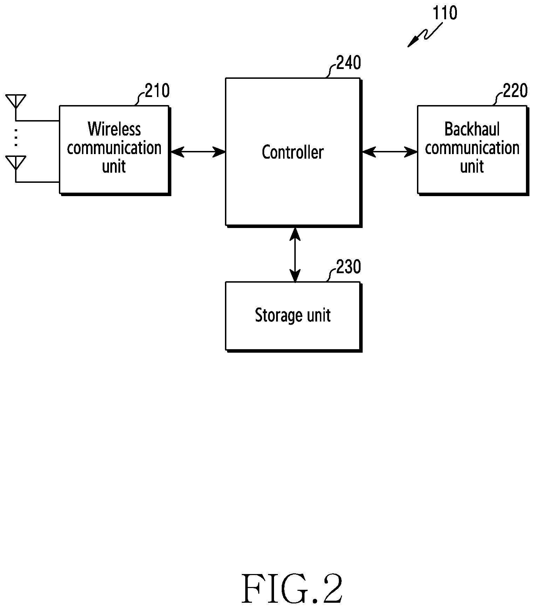

FIG. 2 illustrates a structure of a base station in a wireless communication system according to an embodiment of the disclosure.

Referring to FIG. 2, the structure illustrated in FIG. 2 may be understood as a structure of the base station 110. The terms "... unit", "... device", etc. used hereinafter refer to a unit configured to process at least one function or operation, and may be implemented as hardware, software, or a combination of hardware and software.

The base station 110 according to an embodiment may include a wireless communication unit 210, a backhaul communication unit 220, a storage unit 230, and/or a controller 240. However, components of the base station 110 are not limited to the above-described example. For example, the base station may include a larger or smaller number of components than the above-described components. In addition, the wireless communication unit 210, the backhaul communication unit 220, the storage unit 230, and the controller 240 may be implemented in the form of a single chip. In addition, the controller 240 may include one or more processors.

The wireless communication unit 210 may perform functions for transmitting/receiving signals through a radio channel. For example, the wireless communication unit 210 may perform functions of conversion between baseband signals and bitstrings according to the physical layer specifications of the system. For example, during data transmission, the wireless communication unit 210 may encode and modulate a transmitted bitstring to generate complex symbols. In addition, during data reception, the wireless communication unit 210 may demodulate and decode a baseband signal to reconstruct a received bitstring.

In addition, the wireless communication unit 210 may up-convert a baseband signal to an RF band signal, transmit the same through an antenna, and down-convert an RF band signal received through the antenna to a baseband signal. To this end, the wireless communication unit 210 may include a transmission filter, a reception filter, an amplifier, a mixer, an oscillator, a digital to analog converter (DAC), an analog to digital converter (ADC), and the like. In addition, the wireless communication unit 210 may include multiple transmission/reception paths. Furthermore, the wireless communication unit 210 may include at least one antenna array including multiple antenna elements.

In terms of hardware, the wireless communication unit 210 may include a digital unit and an analog unit, and the analog unit may include multiple sub-units according to operation power, frequencies, etc. The digital unit may be implemented as at least one processor (e.g., a digital signal processor (DSP)). As used herein, the expression "may be configured by" may be replaced with the expression "may include". For example, the analog unit may include multiple sub-units according to operating power and/or operating frequencies. For example, the digital unit may include at least one processor.

The wireless communication unit 210 transmits and receives signals as described above. Accordingly, all or part of the wireless communication unit 210 may be referred to as a "transmitter", a "receiver", or a "transceiver". In addition, as used in the following description, the meaning of "transmission and reception performed through a radio channel" includes the meaning that the above-described processing is performed by the wireless communication unit %n.

The backhaul communication unit 210 may provide an interface for performing communication with other nodes in the network. That is, the backhaul communication unit 220 may convert a bitstring, transmitted from the base station to any other node, for example, any other access node, any other base station, an upper node, or a core network, into a physical signal, and convert a physical signal, received from any other node, into a bitstring.

The storage unit 230 may store basic programs, application programs, and data such as configuration information necessary for operations of the base station. The storage unit 230 may include a volatile memory, a nonvolatile memory, or a combination of a volatile memory and a nonvolatile memory. In addition, the storage unit 230 may provide data stored therein at the request of the controller 230.

According to an embodiment, the controller 240 may control the overall operation of the base station 110. For example, the controller 240 may transmit/receive signals through the wireless communication unit %n or the backhaul communication unit 220. In addition, the controller 240 may record data in the storage unit 230 and reads the data from the storage unit 230. Furthermore, the controller 240 may perform functions of protocol stacks required by communication specifications. According to another embodiment, the protocol stacks may be included in the wireless communication unit 210. To this end, the controller 240 may include at least one processor. According to an embodiment, the controller 240 may control the base station 110 to perform operations according to embodiments as described below.

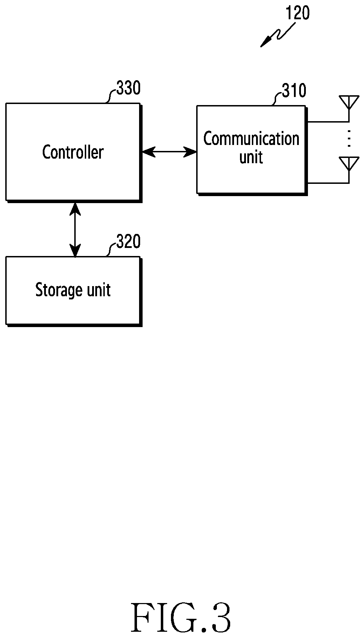

FIG. 3 illustrates a structure of a UE in a wireless communication system according to an embodiment of the disclosure.

Referring to FIG. 3, the structure illustrated in FIG. 3 may be understood as a structure of the UE 120. The terms "... unit", "... device", etc. used hereinafter refer to a unit configured to process at least one function or operation, and may be implemented as hardware, software, or a combination of hardware and software.

The UE according to an embodiment may include a communication unit 310, a storage unit 320, and/or a controller 330. However, components of the UE 120 are not limited to the above-described example. For example, the UE 120 may include a larger or smaller number of components than the above-described components. Furthermore, the communication unit 310, the storage unit 320, and the controller 330 may be implemented in the form of a single chip. In addition, the controller 330 may include one or more processors.

According to an embodiment, the communication unit 310 may perform functions for transmitting/receiving signals via a radio channel. For example, the wireless communication unit 310 may performs functions of conversion between baseband signals and bitstrings according to the physical layer specifications of the system. For example, during data transmission, the communication unit 310 may encode and modulate a transmitted bitstring to generate complex symbols. In addition, during data reception, the communication unit 310 may demodulate and decode a baseband signal to restore a received bitstring. In addition, the communication unit 310 may up-convert a baseband signal to an RF band signal, transmits the same through an antenna, and down-convert an RF band signal received through the antenna to a baseband signal. For example, the communication unit 310 may include a transmission filter, a reception filter, an amplifier, a mixer, an oscillator, a DAC, an ADC, and the like.

In addition, the wireless communication unit 310 may include multiple transmission/reception paths. Moreover, the communication unit 310 may include at least one antenna array configured by multiple antenna elements. In terms of hardware, the communication unit 310 may include a digital circuit and an analog circuit (e.g., a radio frequency integrated circuit (RFIC)). The digital circuit and the analog circuit may be implemented as a single package. In addition, the communication unit 310 may include multiple RF chains. Furthermore, the communication unit 310 may perform beamforming.

According to an embodiment, the communication unit 310 may transmit/receive signals as described above. Accordingly, all or part of the communication unit 310 may be referred to as a "transmitter", a "receiver", or a "transceiver". In addition, as used in the following description, the meaning of "transmission and reception performed through a radio channel" includes the meaning that the above-described processing is performed by the communication unit %n.

The storage 320 stores data such as basic programs, application programs, and configuration information for operations of the UE. The storage 320 may include a volatile memory, a nonvolatile memory, or a combination of a volatile memory and a nonvolatile memory. In addition, the storage unit 320 may provide data stored therein at the request of the controller 330.

According to an embodiment, the controller 330 may control the overall operation of the UE 120. For example, the controller 330 transmits/receives signals through the communication unit 310. In addition, the controller 330 records data in the storage unit 320 and reads the data from the storage unit 320. In addition, the controller 330 may perform functions of protocol stacks required by communication specifications. To this end, the controller 330 may include at least one processor or microprocessor, or may be a part of a processor. In addition, a part of the communication unit 310 and the controller 330 may be referred to as a communication processor (CP). According to an embodiment, the controller 330 may control the base station to perform operations according to embodiments as described below.

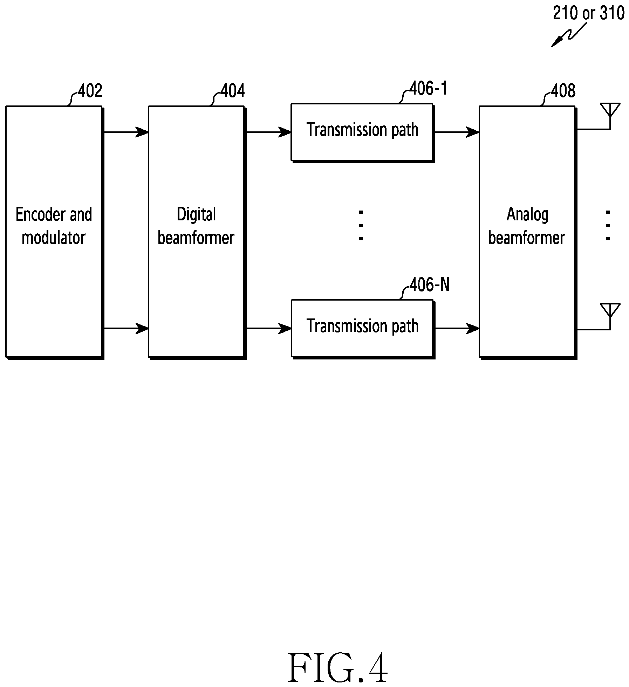

FIG. 4 is a diagram illustrating a configuration of a communication unit in the wireless communication system according to an embodiment of the disclosure.

FIG. 4 illustrates an example of a detailed configuration of the wireless communication unit 210 of FIG. 2 or the communication unit 310 of FIG. 3. Specifically, FIG. 4 illustrates components to perform beamforming, as a part of the wireless communication unit 210 of FIG. 2 or the communication unit 310 of FIG. 3.

Referring to FIG. 4, the wireless communication unit 210 or the communication unit 310 according to an embodiment may include an encoder and modulator 402, a digital beamformer 404, multiple transmission paths 406-1 to 406-N, and/or an analog beamformer 408.

According to an embodiment, the encoder and modulator 402 may perform channel encoding. For channel encoding, at least one of a low-density parity check (LDPC) code, a convolution code, and a polar code may be used. The encoder and modulator 402 may generate modulation symbols by performing constellation mapping.

According to an embodiment, the digital beamformer 404 may perform beamforming for digital signals (e.g., modulation symbols). To this end, the digital beamformer 404 may multiply the modulation symbols by beamforming weights. The beamforming weights are used to change magnitudes and phases of signals, and may be referred to as "precoding matrix", "precoder", or the like. The digital beamformer 404 may output digitally beamformed modulation symbols to the multiple transmission paths 406-1 to 406-N. In this case, according to a multiple-input multiple-output (MIMO) transmission technique, the modulation symbols may be multiplexed, or the same modulation symbols may be provided to the multiple transmission paths 406-1 to 406-N.

According to an embodiment, the multiple transmission paths 406-1 to 406-N may convert digitally beamformed digital signals into analog signals. To this end, each of the multiple transmission paths 406-1 to 406-N may include an inverse fast Fourier transform (IFFT) operator, a cyclic prefix (CP) inserter, a DAC, and/or an up-converter. The CP inserter is for an orthogonal frequency division multiplexing (OFDM) scheme, and may be excluded when another physical layer scheme (e.g., a filter bank multi-carrier (FBMC)) is applied. That is, the multiple transmission paths 406-1 to 406-N may provide independent signal processing processes to multiple streams generated via digital beamforming. However, depending on an implementation scheme, some components of the multiple transmission paths 406-1 to 406-N may be used in common.

According to an embodiment, the analog beamformer 408 may perform beamforming on an analog signal. To this end, the digital beamformer 404 may multiply analog signals by beamforming weights. The beamforming weights may be used to change the magnitudes and phases of the signals. For example, depending on a connection structure between the multiple transmission paths 406-1 to 406-N and antennas, the analog beamformer 440 may be configured in various ways. For example, each of the multiple transmission paths 406-1 to 406-N may be connected to one antenna array. As another example, the multiple transmission paths 406-1 to 406-N may be connected to one antenna array. As another example, the multiple transmission paths 406-1 to 406-N may be adaptively connected to one antenna array or may be connected to two or more antenna arrays.

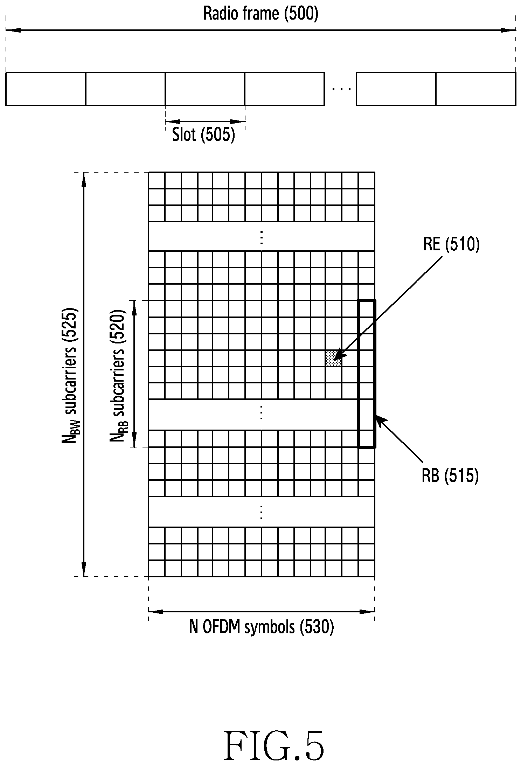

FIG. 5 is a diagram illustrating a structure of time-frequency resources of the wireless communication system according to an embodiment of the disclosure.

Referring to FIG. 5, in a radio resource area according to an embodiment, the horizontal axis represents the time domain and the vertical axis represents the frequency domain. A minimum transmission unit in the time domain is an OFDM symbol or a DFT-S-OFDM symbol, and N_{symb} OFDM symbols or DFT-S-OFDM symbols 530 may be included in one slot 505.

For example, in the NR system, unlike a slot, a length of a subframe may be defined to be 1.0 ms, and a length of a radio frame 500 may be defined to be 10 ms.

According to an embodiment, a minimum transmission unit in the frequency domain is a subcarrier, and a bandwidth of the entire system transmission bandwidth may include a total of N_{BW} subcarriers 525. Specific values, such as N_{symb} and N_{BW}, may be variably applied according to the system.

A basic unit of a time-frequency resource area is a resource element (RE) 510 and may be represented by an OFDM symbol index or a DFT-S-OFDM symbol index and a subcarrier index. A resource block (RB) 515 may be defined to be N_{RB} consecutive subcarriers 520 in the frequency domain. In general, a minimum transmission unit of data may be an RB unit, and generally, N_{symb} = 14 and N_{RB} = 12 in the NR system.

The structure of time-frequency resources as in FIG. 5 may be applied to a Uu interface. In addition, the structure of time-frequency resources as in FIG. 5 may also be similarly applied to a sidelink.

According to an embodiment, descriptions are provided for an operation procedure of a UE, a sidelink relay, and a base station for processing mobility of a connected mode (RRC_CONNECTED state) of the UE when the UE (also referred to as remote UE) performs data transmission and reception via a direct connection to the base station and when the UE performs data transmission and reception via a connection to the base station via the sidelink relay (also referred to as relay or relay UE).

The sidelink relay according to an embodiment of the disclosure may be authenticated to be used for at least one or a combination of a specific service, a specific UE, a specific sidelink flow, a specific sidelink bearer, a specific unicast link, a specific source identifier, and a specific destination identifier. The sidelink relay may establish a direct connection to an authenticated UE at a time of installation.

The sidelink relay according to an embodiment of the disclosure may establish a direct sidelink connection to an authenticated UE when a relay discovery message is received from the authenticated UE. When the sidelink relay receives, from an authenticated UE, a relay discovery message as a response to a relay discovery message that the sidelink relay itself has transmitted, the sidelink relay may establish a direct sidelink connection to the authenticated UE.

According to an embodiment, the sidelink relay may establish a direct sidelink connection to the authenticated UE when a PC5 direct link establishment request is received from the authenticated UE. The method of the PC5 direct link establishment request used by the sidelink relay and the UE for the relay connection may include at least one or a combination of methods of adding "a connection indication via relay" to a general PC5 direct link establishment request message, defining a separately defined "PC5 direct link establishment message for relay use", or configuring the use of the general PC5 direct link establishment request message transmitted in a sidelink bearer for relay use (sidelink radio bearer which may be denoted as SLRB). Of course, the method of the PC5 direct link establishment request used by the sidelink relay and the UE for the relay connection is not limited to the example described above.

According to an embodiment, in case that the UE determines that a direction connection to the base station is not easy, the UE may be connected to the base station via a sidelink relay connection so as to transmit and/or receive data. The sidelink relay may be classified into a layer-2 sidelink relay or a layer-3 sidelink relay depending on a layer where a routing function is located. The UE may be connected to the base station via a connection to the layer-2 sidelink relay or may be connected to the base station via a connection to the layer-3 sidelink relay. The UE may support only a layer-2 sidelink relay, support only a layer-3 sidelink relay, or support both types of the sidelink relays. In case that the UE is connected to the base station via a connection to the layer-2 sidelink relay, the base station may determine that the UE is connected via the layer-2 sidelink relay, and may acquire a measurement report of the UE for a neighboring layer-2 sidelink relay even when the UE is directly connected to the base station. In case that the UE is connected to the base station via a connection to the layer-3 sidelink relay, the base station does not need to recognize or identify that the UE is connected via the layer-3 sidelink relay, and does not need to acquire a measurement report of the UE for a neighboring layer-3 sidelink relay even in case that the UE is directly connected to the base station. In other words, an operation in which the UE is connected to the layer-3 sidelink relay to perform data transmission and reception to and from a network may be processed transparently to the base station. In other words, the operation in which the UE is connected to the layer-3 sidelink relay to perform data transmission and reception to and from the network may be performed without involvement of the base station.

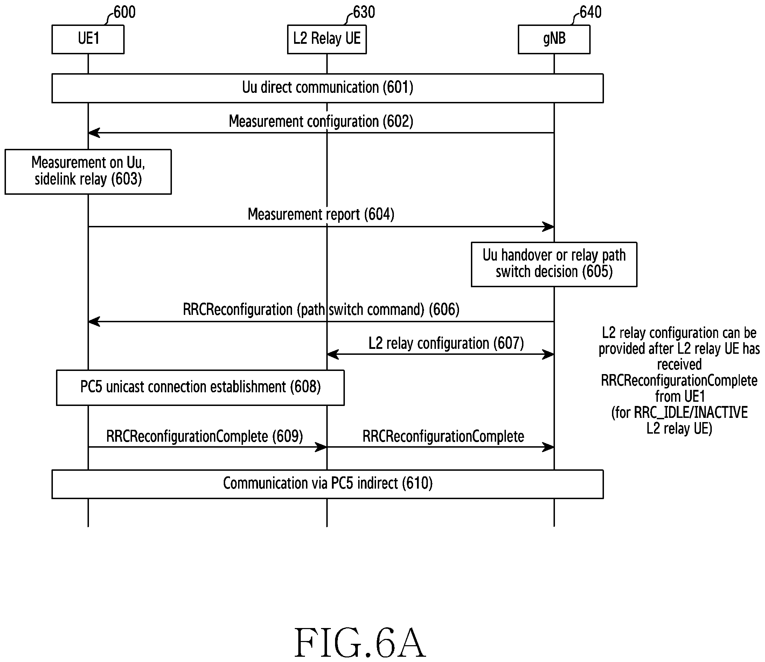

According to an embodiment, in case that the UE is able to support a connection to the layer-2 sidelink relay, the UE may perform a path switching procedure of, while making a direct connection to the base station, making a connection to a neighboring layer-2 sidelink relay. Alternatively, in case that the UE is able to support a connection to the layer-2 sidelink relay, the UE may perform a path switching procedure of, while being connected to the base station via relay transmission of the layer-2 sidelink relay, making a direct connection to the base station. The UE may perform a path switching procedure of, while being directly connected to one base station, changing a path to a layer-2 sidelink relay connected to another base station, and may perform a path switching procedure of, while being connected to a layer-2 sidelink relay connected to one base station, making a direct connection to another base station. The UE may perform a path switching procedure between different layer-2 sidelink relays within the same base station, and may perform a path switching procedure between different layer-2 sidelink relays connected to respective different base stations. In case that the UE supports a connection to a layer-2 sidelink relay, embodiments of path switching procedures of the UE may be described with reference to FIG. 6A, FIG. 6B, FIG. 7, FIG. 8, FIG. 9, and FIG. 10.

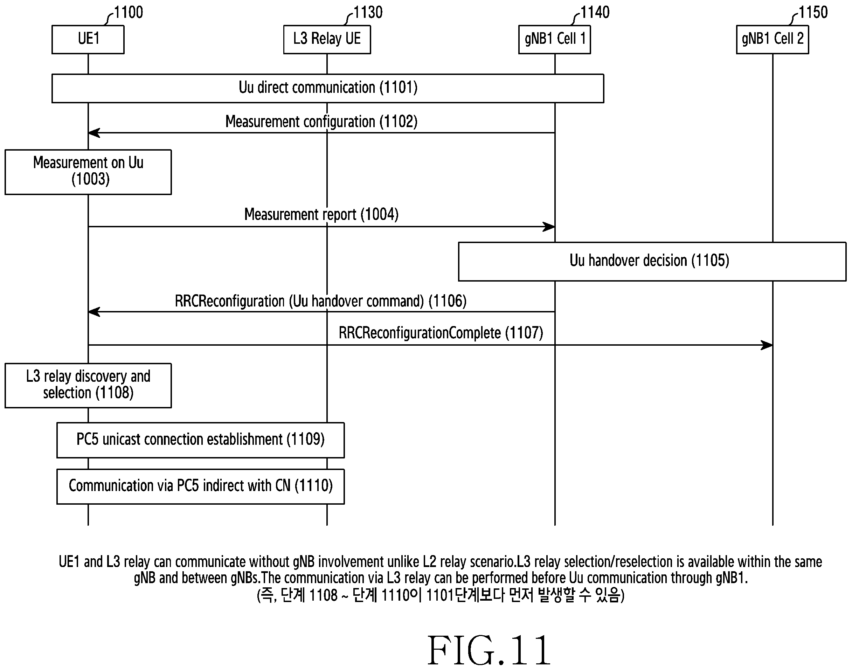

According to an embodiment, in case that the UE is able to support a connection to a layer-3 sidelink relay, the UE may perform a path switching procedure of, while making a direct connection to a base station, making a connection to a layer-3 sidelink relay, and in this case, the base station may not be involved in the path switching procedure. Alternatively, in case that the UE is able to support a connection to a layer-3 sidelink relay, the UE may perform a path switching procedure of, while being connected to the layer-3 sidelink relay and performing data transmission and reception to and from the network, making a direct connection to a base station, and in this case, the base station may not be involved in the path switching procedure. An embodiment of a path switching procedure of the UE in case that the UE supports a connection to a layer-3 sidelink relay is described with reference to FIG. 11.

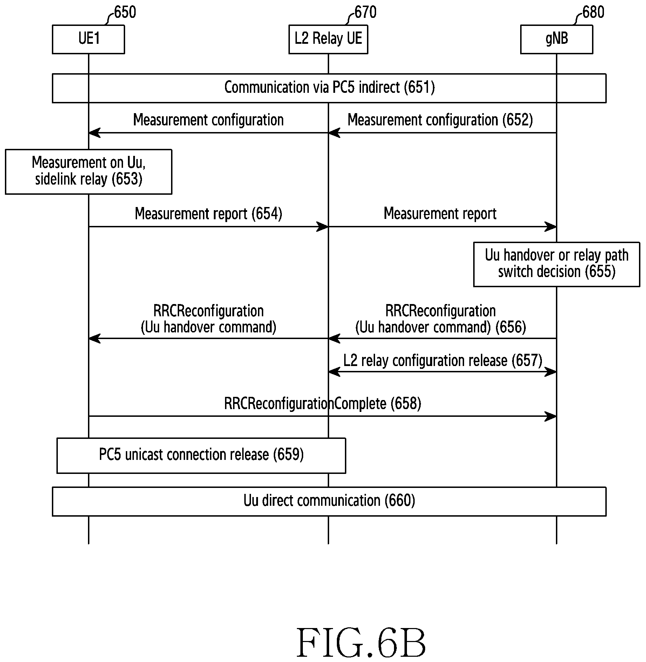

Referring to FIG. 6A and FIG. 6B, illustrated is a scenario in which a UE performs a sidelink relay change procedure (e.g., changing from a direct connection to a sidelink relay connection or changing from a connection to a sidelink relay to a direct connection) within the same base station.

FIG. 6A is a diagram illustrating a path switching procedure of a UE within the same base station in the wireless communication system supporting layer-2 sidelink relay.

Referring to FIG. 6A, a UE 600 (e.g., user equipment 1, UE 1) according to an embodiment may be directly connected to a cell of a base station (e.g., gNB) 640 to perform Uu direct communication data transmission and reception in operation 601.

The UE 600 according to an embodiment of the disclosure may be known to the base station 640, as a UE which is able to support a connection to a layer-2 sidelink relay. The base station 640 may support handover and sidelink relay path switching of the UE 600, and may configure a measurement configuration message and transmit the same to the UE 600 in operation 602. Although the measurement configuration message is indicated in the disclosure, the message may be transmitted from the base station to the UE in form of an RRCReconfiguration message including a measurement configuration. The measurement configuration of operation 602 may include configuration information for a Uu measurement object, a sidelink relay measurement object, and a measurement report.

The UE 600 according to an embodiment of the disclosure may perform Uu cell and layer-2 sidelink relay measurement in operation 603, based on the measurement configuration information (or measurement configuration message) of operation 602. The UE 600 may transmit a measurement result of operation 603 to the base station 640 in operation 604. In the disclosure, a message including the measurement result is indicated as a measurement report message, but this is merely an example, and the UE may transmit the message in the form of a MeasurementReport message including the measurement result.

The base station 640 according to an embodiment of the disclosure may determine handover to a Uu cell or path switching to a sidelink relay in operation 605 by referring to the UE measurement result of operation 604. The base station 640 may transmit, to the UE 600 in operation 606, an RRCReconfiguration message indicating handover or sidelink relay path switching (e.g., determining path switching to a sidelink relay in the embodiment of FIG. 6A) according to the determination of operation 605. The base station 640 may transmit, to a target sidelink relay 630 (e.g., an L2 relay UE) in operation 607, configuration information required to perform layer-2 sidelink relay data transmission and reception to and from the UE 600. In case that the target sidelink relay 630 is not in an RRC_CONNECTED state, the procedure of operation 607 may be performed after the target sidelink relay 630 transitions to the RRC_CONNECTED state. For example, the target sidelink relay 630 may determine that the UE 600 has transmitted an RRCReconfigurationComplete message to the target sidelink relay 630, and perform transition to the RRC_CONNECTED state.

The UE 600 according to an embodiment of the disclosure may perform a PC5 unicast connection establishment procedure with respect to the layer-2 sidelink relay 630 in operation 608. The UE 600 may transmit the RRCReconfigurationComplete message to the base station 640 in operation 609 by using relay transmission of the layer-2 sidelink relay 630. Then, the UE 600 may perform data transmission and reception to and from the base station 640 via the layer-2 sidelink relay 630 in operation 610. The configuration information of operation 607, which is required to perform layer-2 sidelink relay data transmission and reception, may be provided or transmitted to the layer-2 sidelink relay 630 after the layer-2 sidelink relay 630 receives the RRCReconfigurationComplete message from the UE 600 and transitions to RRC_CONNECTED.

FIG. 6B is a diagram illustrating a path switching procedure of a UE within the same base station in the wireless communication system supporting layer-2 sidelink relay.

Referring to FIG. 6B, a UE 650 (e.g., UE 1) according to an embodiment may transmit data to and/or receive data from a base station 680 (e.g., gNB) via relay transmission of a layer-2 sidelink relay 670 (e.g., L2 relay UE) in operation 651. The UE 650 may be known to the base station 680, as a UE which is able to support a connection to a layer-2 sidelink relay.

According to an embodiment, the base station 680 may support handover and/or sidelink relay path switching of the UE 650, and may configure a measurement configuration message and transmit the same to the UE 650 in operation 652. The measurement configuration message of operation 652 may be transmitted or transferred to the UE 650 via relay transmission of the layer-2 sidelink relay 670. The measurement configuration of operation 652 may include configuration information for a Uu measurement object, a sidelink relay measurement object, and a measurement report.

According to an embodiment of the disclosure, the UE 650 may perform Uu cell and layer-2 sidelink relay measurement in operation 653, based on the measurement configuration information (or measurement configuration message) of operation 652. The UE 650 may transmit a measurement result of operation 653 to the base station 680 in operation 654. The measurement report message of operation 654 may be transmitted to the base station 680 by using relay transmission of the layer-2 sidelink relay 670. The base station 680 may determine handover to a Uu cell or path switching to a sidelink relay in operation 655 by referring to the UE measurement result of operation 654.

According to an embodiment of the disclosure, the base station 650 may transmit, to the UE 650 in operation 656, an RRCReconfiguration message indicating handover or sidelink relay path switching (e.g., determining path switching so as to be directly connected to a cell in the base station 680 in the embodiment of FIG. 6B) according to the determination of operation 655. The RRCReconfiguration message of operation 656 may be transmitted to the UE 650 by using relay transmission of the layer-2 sidelink relay 670. In case that the base station 680 determines path switching of the UE 600 to a direct connection to the cell in the base station 680 from the layer-2 sidelink relay, information notifying to release configuration information configured for the UE 600 may be included in the RRCReconfiguration message of operation 656, the configuration information being required for performing layer-2 sidelink relay data transmission and reception. The base station 680 may transmit, in operation 657 to the layer-2 sidelink relay 670 currently connected to the UE 650, a message indicating to release configuration information required to perform layer-2 sidelink relay data transmission and reception to and from the UE 650.

According to an embodiment of the disclosure, the UE 650 having processed the RRCReconfiguration message from the base station 680, which indicates a direct connection to the cell, may perform a path switching procedure to the target cell and transmit an RRCReconfigurationComplete message to the base station 680 via the target cell in operation 658, thereby notifying that the path switching procedure is completed. The UE 650 and the sidelink relay 670 may perform a PC5 unicast connection release procedure in operation 659. A point in time for performing the procedure of operation 659 illustrated in FIG. 6B is merely an example, and the procedure of operation 659 may be performed at any time after the base station 680 indicates the UE 650 and the sidelink relay 670 to release the layer 2 configuration information due to the path switching of the UE. After this, the UE 650 may perform data transmission and reception via a direct connection to the base station 680 in operation 660.

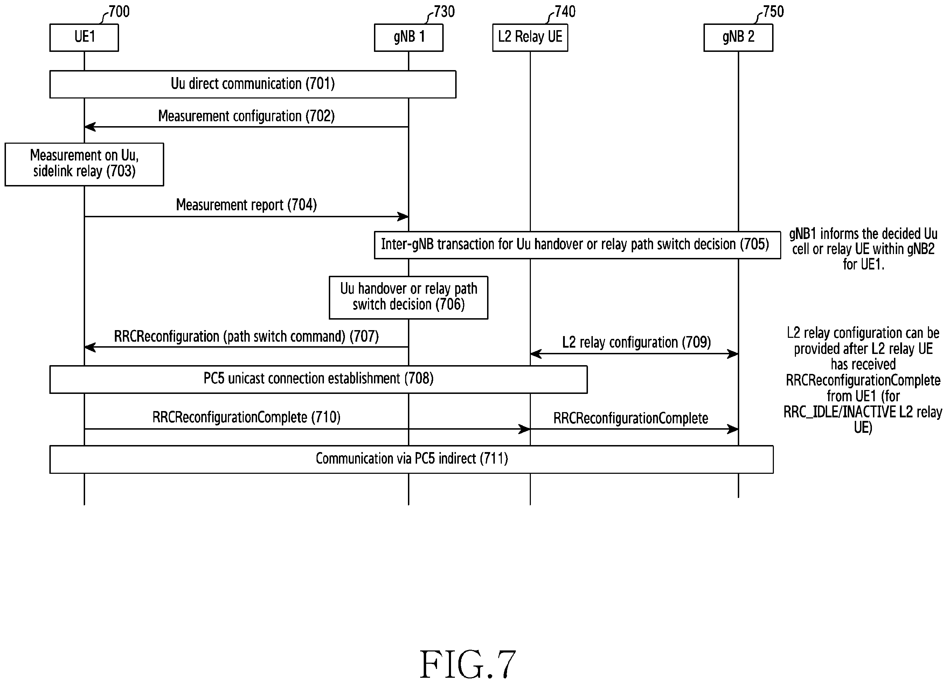

FIG. 7 is a diagram illustrating a path switching procedure of a UE between different base stations in the wireless communication system supporting layer-2 sidelink relay.

Referring to FIG. 7, a UE 700 (e.g., UE 1) according to an embodiment may be directly connected to a cell of base station 1 730 (e.g., gNB 1) so as to perform data transmission and reception in operation 701. The UE 700 may be known to base station 1 730 (e.g., gNB 1), as a UE which is able to support a connection to a layer-2 sidelink relay. For example, base station 1 730 (e.g., gNB 1) may identify or determine the UE 700 as a UE which is able to support a connection to a layer-2 sidelink relay.

According to an embodiment, base station 1 730 may support handover and sidelink relay path switching of the UE 700, and base station 1 730 may configure a measurement configuration message and transmit the same to the UE 700 in operation 702. The measurement configuration of operation 702 may include configuration information for a Uu measurement object, a sidelink relay measurement object, and a measurement report. The UE 700 may perform Uu cell and layer-2 sidelink relay measurement in operation 703, based on the measurement configuration information of operation 702. The UE 700 may transmit a measurement result of operation 703 to base station 1 730 in operation 704.

According to an embodiment of the disclosure, base station 1 730 may determine handover to a Uu cell or path switching to a sidelink relay in operation 706 by referring to the UE measurement result of operation 704. For the determination of operation 706, base station 1 730 may exchange, in operation 705, information for inter-base station handover or relay path switching of the UE with respect to a sidelink relay or a cell belonging to an adjacent base station (e.g., base station 2 750), based on the measurement result report of the UE 700.

According to an embodiment of the disclosure, in case that base station 1 730 (e.g., gNB 1) and base station 2 750 (e.g., gNB 2) are able to support sidelink relay, base station 1 730 and base station 2 750 may exchange, via an inter-node message, sidelink relay information managed by the base stations. Base station 1 730 (e.g., gNB 1) and base station 2 750 (e.g., gNB 2) may exchange, via the inter-node message, information on the cell of base station 2 750 or the sidelink relay of base station 2 750, to which the UE may perform handover and sidelink relay path switching, based on the Uu link measurement result and sidelink measurement result reported by the UE for connection mode mobility (e.g., handover or sidelink relay path switching) of the UE.

According to an embodiment of the disclosure, in case that the UE performs a handover procedure to the cell of base station 2 750 or performs a path switching procedure to the sidelink relay of the base station 2 750, base station 1 730 and base station 2 750 may exchange, via the inter-node message, at least one or a combination of a Uu capability of the UE, a sidelink capability of the UE, Uu signaling radio bearer/data radio bearer (SRB/DRB) configuration information of the UE, PC5 SRB/DRB configuration information of the UE, and PC5 SRB/DRB configuration information that may correspond to an end-to-end connection between the UE and base station 2 750, wherein the capabilities and the configuration information are required for establishing a connection to the cell of base station 2 750 or to the sidelink relay of base station 2 750.

According to an embodiment, in case that the cell or sidelink relay determined in operation 706 is determined or identified to belong to base station 2 750, base station 1 730 may transmit information of the determined cell or sidelink relay to base station 2 750. Base station 1 730 may transmit, to the UE 700 in operation 707, an RRCReconfiguration message indicating handover or sidelink relay path switching (e.g., determining path switching to the sidelink relay in the embodiment of FIG. 7) according to the determination of operation 706.

According to an embodiment of the disclosure, base station 2 750 corresponding to a serving base station of a sidelink relay 740 (e.g., L2 relay UE) to which the UE 700 is to be newly connected may transmit, to the sidelink relay 740 in operation 709, layer-2 sidelink relay configuration information required for the sidelink relay 740 to perform relay transmission for data transmission and reception of the UE 700 based on information exchange with base station 1 730 as shown in operation 705.

According to an embodiment of the disclosure, in case that the target sidelink relay 740 is not in an RRC_CONNECTED state, the procedure of operation 709 may be performed between base station 2 750 and the sidelink relay 740 after the target sidelink relay 740 transitions to the RRC_CONNECTED state. For example, the target sidelink relay 740 may determine that the UE 700 has transmitted an RRCReconfigurationComplete message to the target sidelink relay 740, and perform transition to the RRC_ONNECTED state.

According to an embodiment, the UE 700 may perform a PC5 unicast connection establishment procedure with respect to the layer-2 sidelink relay 740 in operation 708.

According to an embodiment, the UE 700 may transmit the RRCReconfigurationComplete message to base station 2 750 in operation 710 by using relay transmission of the layer-2 sidelink relay 740. Then, the UE 700 may perform data transmission and reception to and from base station 2 750 via the layer-2 sidelink relay 740 in operation 711. The configuration information of operation 709, which is required to perform layer-2 sidelink relay data transmission and reception, may be provided or transmitted to the layer-2 sidelink relay 740 after the layer-2 sidelink relay 740 receives the RRCReconfigurationComplete message from the UE 700 and transitions to the RRC_CONNECTED state.

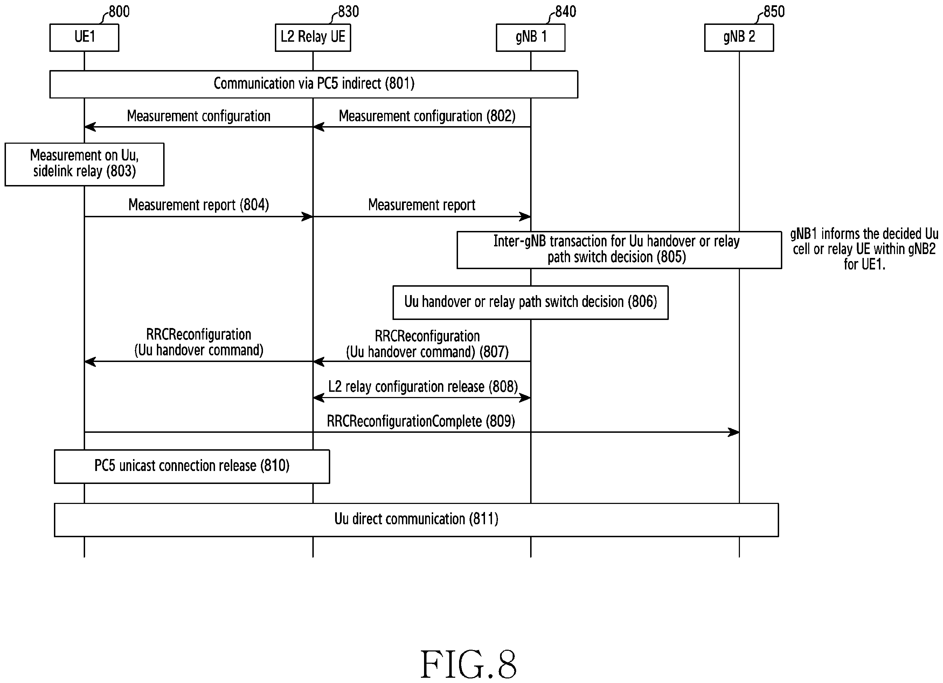

FIG. 8 is a diagram illustrating a path switching procedure of a UE between different base stations in the wireless communication system supporting layer-2 sidelink relay.

Referring to FIG. 8, a UE 800 (e.g., UE 1) according to an embodiment may perform data transmission and reception to and from base station 1 840 (e.g., gNB 1) via relay transmission of a layer-2 sidelink relay 830 in operation 801. The UE 800 may be known to base station 1 840, as a UE which is able to support a connection to a layer-2 sidelink relay.

According to an embodiment of the disclosure, base station 1 840 may support handover and sidelink relay path switching of the UE 800, and may configure a measurement configuration message and transmit the same to the UE 800 in operation 802. The measurement configuration message of operation 802 may be transmitted to the UE 800 via relay transmission of the layer-2 sidelink relay 830. The measurement configuration of operation 802 may include configuration information for a Uu measurement object, a sidelink relay measurement object, and a measurement report.

According to an embodiment of the disclosure, the UE 800 may perform Uu cell and layer-2 sidelink relay measurement in operation 803, based on the measurement configuration information (or measurement configuration message) of operation 802. The UE 800 may transmit a measurement result of operation 803 to base station 1 840 in operation 804. The measurement report message of operation 804 may be transmitted to base station 1 840 by using relay transmission of the layer-2 sidelink relay 830.

According to an embodiment of the disclosure, base station 1 840 may determine or identify handover to a Uu cell or path switching to a sidelink relay in operation 806 by referring to the UE measurement result of operation 804. For the determination of operation 806, base station 1 840 may exchange, in operation 805, information for inter-base station handover or relay path switching of the UE with respect to a sidelink relay or a cell belonging to an adjacent base station, for example, base station 2 850, based on the measurement result report of the UE 800. In case that base station 1 840 and base station 2 850 are able to support sidelink relay, base station 1 840 and base station 2 850 (e.g., gNB 2) may exchange, via an inter-node message, sidelink relay information managed by the base stations. In case that base station 1 840 and base station 2 850 are able to support sidelink relay, base station 1 840 and base station 2 850 may exchange, via the inter-node message, information on the cell of base station 2 850 or the sidelink relay of base station 2 850, to which the UE may perform handover and sidelink relay path switching, based on the Uu link measurement result and sidelink measurement result reported by the UE for connection mode mobility (e.g., handover or sidelink relay path switching) of the UE.

According to an embodiment of the disclosure, in case that the UE performs a handover procedure to the cell of base station 2 850 or performs a path switching procedure to the sidelink relay of base station 2 850, base station 1 840 (e.g., gNB 1) and base station 2 850 (e.g., gNB 2) may exchange, via the inter-node message, at least one or a combination of a Uu capability of the UE, a sidelink capability of the UE, Uu signaling radio bearer (SRB)/data radio bearer (DRB) configuration information of the UE, PC5 SRB/DRB configuration information of the UE, and PC5 SRB/DRB configuration information that may correspond to an end-to-end connection between the UE and base station 2 850, wherein the capabilities and the configuration information are required for establishing a connection to the cell of base station 2 850 or to the sidelink relay of base station 2 850.

According to an embodiment of the disclosure, in case that the cell or sidelink relay determined in operation 806 is determined or identified to belong to base station 2 850, base station 1 840 may transmit or provide information of the determined cell or sidelink relay to base station 2 850. For example, in case that the cell or sidelink relay is determined or identified to belong to coverage of base station 850, base station 1 840 may transmit or provide information of the determined cell or sidelink relay to base station 2 850. Base station 1 840 may transmit, to the UE 800 in operation 807, an RRCReconfiguration message indicating handover or sidelink relay path switching

(e.g., determining a direct connection to the cell in base station 2 850 in the embodiment of FIG. 8) according to the determination of operation 806. The RRCReconfiguration message of operation 807 may be transmitted or provided to the UE 800 by using relay transmission of the layer-2 sidelink relay 830. In case that base station 1 840 determines a direct connection of the UE 800 to the cell in base station 2 850 from the layer-2 sidelink relay, base station 1 840 may include, in the RRCReconfiguration message of operation 807, information notifying to release configuration information configured for the UE 800, the configuration information being required for performing layer-2 sidelink relay data transmission and reception.

According to an embodiment of the disclosure, base station 1 840 may transmit, in operation 808 to the layer-2 sidelink relay 830 currently connected to the UE 800, a message indicating to release configuration information required to perform layer-2 sidelink relay data transmission and reception to and from the UE 800. The UE 800 having processed the RRCReconfiguration message from base station 1 840, which indicates a direct connection to the cell in base station 2 850, may perform a path switching procedure to the target cell and transmit an RRCReconfigurationComplete message to base station 2 850 via the target cell in operation 809, thereby notifying that the path switching procedure is completed.

According to an embodiment of the disclosure, the UE 800 and the sidelink relay 830 (e.g., L2 relay UE) may perform a PC5 unicast connection release procedure in operation 810. A point in time for performing the procedure of operation 810 illustrated in FIG. 8 is an example, and the procedure of operation 810 may be performed at any time after base station 1 840 indicates the UE 800 and the sidelink relay 830 to release the layer 2 configuration information due to the path switching of the UE. After this, the UE 800 may perform data transmission and reception via a direct connection to base station 2 850 in operation 811.

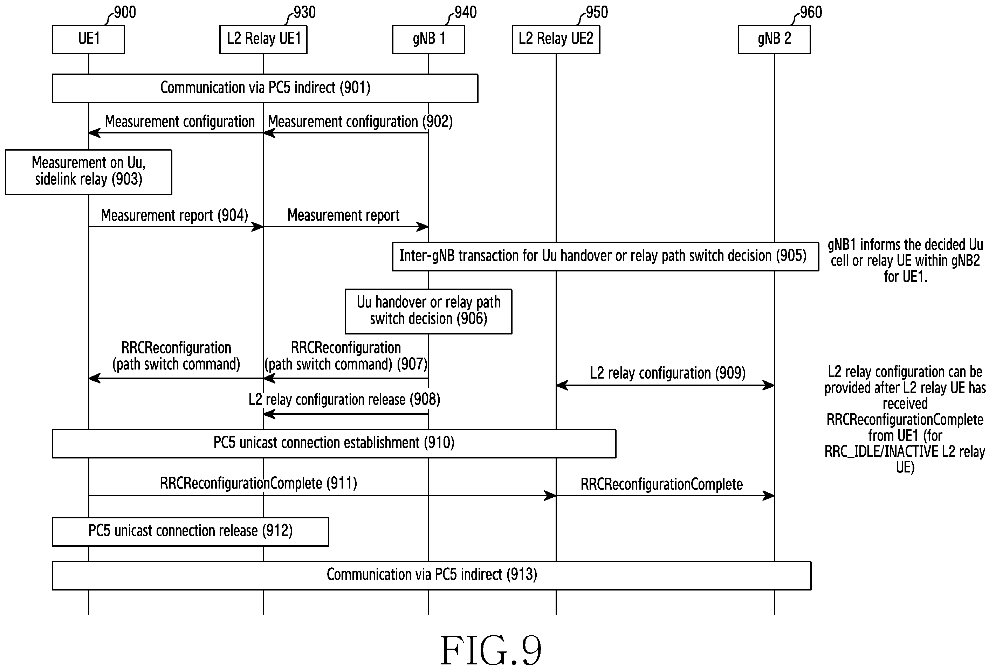

FIG. 9 is a diagram illustrating a path switching procedure of a UE between different base stations in the wireless communication system supporting layer-2 sidelink relay.

Referring to FIG. 9, a UE 900 (e.g., UE 1) according to an embodiment may perform data transmission and reception to and from base station 1 940 (e.g., gNB 1) via relay transmission of layer-2 sidelink relay 1 930 (e.g., L2 relay UE 1) in operation 901. The UE 900 may be known to base station 1 940, as a UE which is able to support a connection to a layer-2 sidelink relay.

According to an embodiment, base station 1 940 may support handover and sidelink relay path switching of the UE 900, and may configure a measurement configuration message and transmit or provide the same to the UE 900 in operation 902. The measurement configuration message of operation 902 may be transmitted or provided to the UE 900 via relay transmission of layer-2 sidelink relay 1 930. The measurement configuration of operation 902 may include configuration information for a Uu measurement obj ect, a sidelink relay measurement object, and a measurement report.

According to an embodiment of the disclosure, the UE 900 may perform Uu cell and layer-2 sidelink relay measurement in operation 903, based on the measurement configuration information of operation 902. The UE 900 may transmit a measurement result of operation 903 to base station 1 940 in operation 904. The measurement report message of operation 904 may be transmitted to base station 1 940 by using relay transmission of layer-2 sidelink relay 1 930. Base station 1 940 may determine or identify handover to a Uu cell or path switching to a sidelink relay in operation 906 by referring to the UE measurement result of operation 904. For the determination of operation 906, base station 1 940 may exchange, in operation 905, information for inter-base station handover or relay path switching of the UE with respect to a sidelink relay or a cell belonging to an adjacent base station (e.g., base station 2 960), based on the measurement result report of the UE 900.

According to an embodiment of the disclosure, in case that base station 1 940 (e.g., gNB 1) and base station 2 960 (e.g., gNB 2) are able to support sidelink relay, base station 1 940 and base station 2 960 may exchange, via an inter-node message, sidelink relay information managed by the base stations. In case that base station 1 940 and base station 2 960 are able to support sidelink relay, base station 1 940 and base station 2 960 may exchange, via the inter-node message, information on the cell of base station 2 960 or the sidelink relay of base station 2 960, to which the UE may perform handover and sidelink relay path switching, based on the Uu link measurement result and sidelink measurement result reported by the UE for connection mode mobility (e.g., handover or sidelink relay path switching) of the UE.

According to an embodiment of the disclosure, in case that the UE performs a handover procedure to the cell of base station 2 960 or performs a path switching procedure to the sidelink relay of the base station 2 960, base station 1 940 and base station 2 960 may exchange, via the inter-node message, at least one or a combination of a Uu capability of the UE, a sidelink capability of the UE, Uu SRB/DRB configuration information of the UE, PC5 SRB/DRB configuration information of the UE, and PC5 SRB/DRB configuration information that may correspond to an end-to-end connection between the UE and base station 2 960, wherein the capabilities and the configuration information are required for establishing a connection to the cell of base station 2 960 or to the sidelink relay of base station 2 960.

According to an embodiment of the disclosure, in case that the cell or sidelink relay determined in operation 906 is determined or identified to belong to base station 2 960, base station 1 940 may transmit information of the determined cell or sidelink relay to base station 2 960. For example, in case that the cell or sidelink relay determined in operation 906 is determined to be included in coverage of base station 2 960, base station 1 940 may transmit information of the determined cell or sidelink relay to base station 2 960. Base station 1 940 may transmit, to the UE 900 in operation 907, an RRCReconfiguration message indicating handover or sidelink relay path switching (e.g., determining sidelink path switching to a sidelink relay 950 in base station 2 960 in the embodiment of FIG. 9) according to the determination of operation 906.

According to an embodiment, the RRCReconfiguration message of operation 907 may be transmitted to the UE 900 by using relay transmission of layer-2 sidelink relay 1 930 (e.g., L2 relay UE 1). In case that base station 1 940 determines or identifies sidelink path switching of the UE 900 to the sidelink relay 950 in base station 2 960 from the layer-2 sidelink relay, base station 1 940 may include, in the RRCReconfiguration message of operation 907, information notifying to release configuration information configured for the UE 900, the configuration information being required for performing layer-2 sidelink relay data transmission and reception to and from sidelink relay 1 930. Base station 1 940 may transmit or provide, in operation 908 to layer-2 sidelink relay 1 930 currently connected to the UE 900, a message indicating to release configuration information required to perform layer-2 sidelink relay data transmission and reception to and from the UE 900.

According to an embodiment of the disclosure, base station 2 960 corresponding to a serving base station of sidelink relay 2 950 (e.g., L2 relay UE 2) to which the UE 900 is to be newly connected may transmit, to sidelink relay 2 950 in operation 909, layer-2 sidelink relay configuration information required for sidelink relay 2 950 to perform relay transmission for data transmission and reception of the UE 900 based on information exchange with base station 1 930 as shown in operation 905.

According to an embodiment of the disclosure, in case that target sidelink relay 2 950 is not in an RRC_CONNECTED state, the procedure of operation 909 may be performed between base station 2 960 and sidelink relay 2 950 after target sidelink relay 2 950 transitions to the RRC_CONNECTED state.

For example, target sidelink relay 2 950 may determine that the UE 900 has transmitted an RRCReconfigurationComplete message to target sidelink relay 2 950, and perform transition to the RRC _CONNECTED state. The UE 900 may perform a PC5 unicast connection establishment procedure with respect to layer-2 sidelink relay 2 950 in operation 910.

According to an embodiment of the disclosure, the UE 900 having processed the RRCReconfiguration message from base station 1 940, which indicates sidelink path switching to the sidelink relay 950 in base station 2 960, may perform a path switching procedure to the sidelink relay 950 and transmit an RRCReconfigurationComplete message to base station 2 960 via the sidelink relay 950 in operation 911, thereby notifying that the path switching procedure is completed. In addition, the UE 900 and sidelink relay 1 930 may perform a PC5 unicast connection release procedure in operation 912. A point in time for performing the procedure of operation 912 illustrated in FIG. 9 is an example, and the procedure may be performed at any time after base station 1 940 indicates the UE 900 and sidelink relay 1 930 to release the layer 2 configuration information due to the path switching of the UE. The UE 900 may perform data transmission and reception to and from base station 2 960 via layer-2 sidelink relay 2 950 in operation 913.

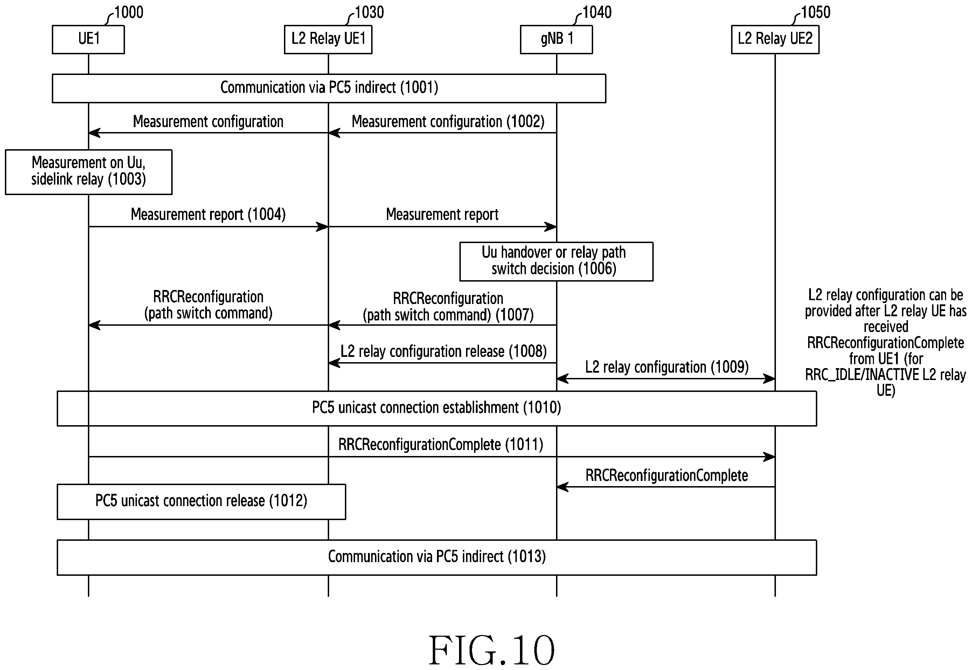

FIG. 10 is a diagram illustrating a path switching procedure of a UE between sidelink relays within a base station in the wireless communication system supporting layer-2 sidelink relay.

Referring to FIG. 10, a UE 1000 according to an embodiment may perform data transmission and reception to and from base station 1 1040 (e.g., gNB 1) via relay transmission of layer-2 sidelink relay 1 1030 in operation 1001. The UE 1000 may be known to base station 1 1040, as a UE which is able to support a connection to a layer-2 sidelink relay.

According to an embodiment of the disclosure, base station 1 1040 may support handover and sidelink relay path switching of the UE 1000, and may configure a measurement configuration message and transmit or provide the same to the UE 1000 in operation 1002. The measurement configuration message of operation 1002 may be transmitted to the UE 1000 via relay transmission of layer-2 sidelink relay 1 1030 (e.g., L2 relay UE 1). The measurement configuration of operation 1002 may include configuration information for a Uu measurement object, a sidelink relay measurement object, and a measurement report.

According to an embodiment, the UE 1000 may perform Uu cell and layer-2 sidelink relay measurement in operation 1003, based on the measurement configuration information of operation 1002. The UE 1000 may transmit a measurement result of operation 1003 to base station 1 1040 in operation 1004. The measurement report message of operation 1004 may be transmitted to base station 1 1040 by using relay transmission of layer-2 sidelink relay 1 1030.

According to an embodiment of the disclosure, base station 1 1040 may determine or identify handover to a Uu cell or path switching to a sidelink relay in operation 1006 by referring to the UE measurement result of operation 1004. Although not illustrated in FIG. 10, for the determination of operation 1006, base station 1 1040 may exchange information for inter-base station handover or relay path switching of the UE with respect to a sidelink relay or a cell belonging to an adjacent base station, based on the measurement result report of the UE 1000.

According to an embodiment of the disclosure, base station 1 1040 may transmit, to the UE 1000 in operation 1007, an RRCReconfiguration message indicating handover or sidelink relay path switching (e.g., determining sidelink path switching to a sidelink relay 2 1050 in base station 1 1040 in the embodiment of FIG. 10) according to the determination of operation 1006. The RRCReconfiguration message of operation 1007 may be transmitted to the UE 1000 by using relay transmission of layer-2 sidelink relay 1 1030. In case that base station 1 1040 determines or identifies sidelink path switching of the UE 1000 from layer-2 sidelink relay 1 1030 to sidelink relay 2 1050, base station 1 1040 may include, in the RRCReconfiguration message of operation 1007, information notifying to release configuration information configured for the UE 1000, the configuration information being required for performing layer-2 sidelink relay data transmission and reception to and from sidelink relay 1 1030.

According to an embodiment of the disclosure, base station 1 1040 may transmit, in operation 1008 to layer-2 sidelink relay 1 1030 currently connected to the UE 1000, a message indicating to release configuration information required to perform layer-2 sidelink relay data transmission and reception to and from the UE 1000. In addition, in operation 1009, base station 1 1040 may transmit layer-2 sidelink relay configuration information required for sidelink relay 2 1050 (e.g., L2 relay UE 2), to which the UE 1000 is to be newly connected, to perform relay transmission of data of the UE 1000. In case that target sidelink relay 2 1050 is not in an RRC_CONNECTED state, the procedure of operation 1009 may be performed between base station 1 1040 and sidelink relay 2 1050 after target sidelink relay 2 1050 transitions to the RRC _CONNECTED state. For example, target sidelink relay 2 1050 may determine or identify that the UE 1000 has transmitted an RRCReconfigurationComplete message to target sidelink relay 2 1050, and perform transition to the RRC_CONNECTED state.

According to an embodiment, the UE 1000 may perform a PC5 unicast connection establishment procedure with respect to layer-2 sidelink relay 2 1050 in operation 1010. The UE 1000 having processed the RRCReconfiguration message from base station 1 1040, which indicates sidelink path switching to sidelink relay 2 1050, may perform a path switching procedure to sidelink relay 2 1050 and transmit an RRCReconfigurationComplete message to base station 1 1040 via sidelink relay 2 1050 in operation 1011, thereby notifying that the path switching procedure is completed.

According to an embodiment, the UE 1000 and sidelink relay 1 1030 may perform a PC5 unicast connection release procedure in operation 1012. A point in time for performing the procedure of operation 1012 illustrated in FIG. 10 is an example, and the procedure of operation 1012 may be performed at any time after base station 1 1040 indicates the UE 1000 and sidelink relay 1 1030 to release the layer 2 configuration information due to the path switching of the UE. The UE 1000 may perform data transmission and reception to and from base station 1 1040 via layer-2 sidelink relay 2 1050 in operation 1013.

FIG. 11 is a diagram illustrating a path switching procedure of a UE in the wireless communication system supporting layer-3 sidelink relay.

Referring to FIG. 11, a UE 1100 (e.g., UE 1) according to an embodiment may perform data transmission and reception in operation 1101 via a direct connection to a serving cell 1140 in base station 1. The UE 1100 may be a UE that is able to support data transmission and reception to and from a network via a connection to a layer-3 sidelink relay. Base station 1 may not be involved in a procedure in which the UE 1100 performs data transmission and reception to and from a network via a connection to a layer-3 sidelink relay. That is, base station 1 may not receive a report of a UE 1100 capability of supporting data transmission and reception via a layer-3 sidelink relay. For example, base station 1 of FIG. 11 of the disclosure may correspond to base station 1 of FIG. 6A, FIG. 6B, and FIG. 7 to FIG. 10.

According to an embodiment, base station 1 may configure a measurement configuration (or measurement configuration message) and transmit the same to the UE 1100 in operation 1102 in order to support RRC connection mode mobility of the UE 1100 in case that the UE 1100 performs data transmission and reception via a direct connection to the serving cell 1140 (e.g., gNB1 cell 1). The measurement configuration of operation 1102 may include configuration information for a Uu measurement object and a measurement report. The UE 1100 may perform Uu cell measurement in operation 1103, based on the measurement configuration information of operation 1102. The UE 1100 may transmit a measurement result of operation 1103 to the serving cell 1140 in operation 1104.

According to an embodiment, based on the measurement report of the UE 1100 acquired in operation 1104, base station 1 may determine or identify necessity of changing a cell (e.g., handover) to which the UE 1140 is to be connected and determine a target cell of the UE 1100 in operation 1105. In the embodiment of FIG. 11, it is assumed that cell 2 1150 (e.g., gNB 1 cell 2) in base station 1 is selected as the target cell of the UE. Of course, the target cell may be selected from the same base station or another base station.

According to an embodiment, in operation 1106, base station 1 may transmit, to the UE 1100, an RRCReconfiguration message including a handover indication message including information of cell 2 1150 corresponding to the target cell determined in operation 1105. The UE 1100 may process the handover indication in the RRCReconfiguration message acquired in operation 1106, and transmit an RRCReconfigurationComplete message to base station 1 via the target cell 1150 (e.g., cell 2 1150) in operation 1107.

According to an embodiment of the disclosure, the UE 1100 may perform a layer-3 sidelink relay discovery procedure and/or selection procedure for data transmission and reception to and from the network via relay transmission of a layer-3 sidelink relay in operation 1108. When a layer-3 sidelink relay 1130 is selected in operation 1109, the UE 1100 may perform a PC5 unicast connection establishment procedure with respect to the selected layer-3 sidelink relay 1130. The UE 1100 may perform data transmission and reception to and from the network via relay transmission of the layer-3 sidelink relay 1130 as shown operation 1110.

Operations 1108 to 1110 of FIG. 11 may be processed between the UE 1100 and the layer-3 sidelink relay 1130 without involvement of base station 1. It is obvious that the layer-3 sidelink relay 1130 may be located within an area of base station 1 or located outside the area of base station 1. It is also obvious that operation 1108 to operation 1110 may be performed at any time regardless of whether the UE 1100 is connected to cell 1 1140 or to cell 2 1150 of base station 1. In addition, the UE 1100 may perform a layer-3 sidelink relay change procedure of discovering and selecting a layer-3 sidelink relay other than the sidelink relay 1130 without involvement of base station 1. In the embodiment of FIG. 11, it has been assumed that the UE 1100 has the capability of transmitting and receiving data via a direct connection to the cell of base station 1 and via a connection to the layer-3 sidelink relay 1130, and is authenticated to maintain both the direct connection and the connection via the sidelink relay. In case that the UE 1100 does not have a capability of maintaining both the direct connection to the cell of base station 1 and the connection to the layer-3 sidelink relay 1130, or is not authenticated to maintain both connections, the UE 1100 may maintain either the direct connection to the cell of base station 1 or the connection to the layer-3 sidelink relay 1130, based on cell selection/relay selection conditions.

In the embodiments of FIGS. 7, 8, 9 and 10, in case that the UE performs a path switching procedure between different layer-2 sidelink relays within the same base station or in case that the UE performs a layer-2 sidelink relay path switching procedure from one base station to another base station (i.e., in case that the UE performs path switching of, while being directly connected to a cell of one base station, making a connection to a layer-2 sidelink relay of another base station, in case that the UE performs path switching of, while being connected to a layer-2 sidelink relay of one base station, making a direct connection to a cell of another base station, or in case that the UE supports a path switching procedure of, while being connected to a layer-2 sidelink relay of one base station, making a connection to a layer-2 sidelink relay of another base station), events that trigger the UE to measure a signal strength for the cell or measure signal strengths for the layer-2 sidelink relays and to report the measurements may be defined as in [Table 1].

According to an embodiment, configuration information required for the UE to measure a signal strength for a Uu cell and/or measure a signal strength for a sidelink relay based on [Table 1] may be transferred as a measurement configuration information element that is transmitted to the UE. Results of measurement performed according to the configuration information required for the UE to measure a signal strength for a Uu cell and/or measure a signal strength for a sidelink relay according to [Table 1] may be transferred as a measurement report information element that is transmitted to the base station.

**[Table 1]**

| |
|---|
| Event X1, Event X2, Event Y1 and/or Event Y2 may be used as events that trigger signal strength measurement on a sidelink relay, signal strength measurement on Uu (base station cell), and measurement reporting, which may be applied in a path switching procedure where a UE is connected to a layer-2 sidelink within the same base station or a path switching procedure where a UE is directly connected to a cell of a base station. The events may be applied to events for signal measurement on a sidelink relay, signal strength measurement on Uu (base station cell), and signal strength reporting in relay path switching between base stations and path switching between different sidelink relays between two base stations. The events may be applied to sidelink relays in which a cell of a base station other than the same base station and/or another base station function as a serving base station. |
| Event X1 (Serving L2 U2N Relay UE becomes worse than threshold1 and NR Cell becomes better than threshold2) |
| Event X2 (Serving L2 U2N Relay UE becomes worse than threshold) |
| Event Y1 (PCell becomes worse than threshold1 and candidate L2 U2N Relay UE becomes better than threshold2) |
| Event Y2 (Candidate L2 U2N Relay UE becomes better than threshold) |
| In addition to Event X1, Event X2, Event Y1, and/or Event Y2, the following events (e.g., new event 1, new event 2, and new event 3) may be defined. The additionally defined events (e.g., new event 1, new event 2, and new event 3) may be applied to events for signal measurement on a sidelink relay, signal strength measurement on Uu (base station cell), and signal strength reporting in path switching of a UE between sidelink relays within the same base station and relay path switching from one base station to another base station. |
| The events may be applied to a sidelink relay in which a cell of a base station other than the same base station and/or another base station function as a serving base station. |
| New event 1: Neighbor (candidate) U2N Relay UE becomes amount of offset better than serving U2N Relay UE. |
| New event 2: Serving U2N Relay UE becomes worse than threshold 1 and neighbor (candidate) U2N Relay UE becomes better than threshold 2. |
| New event 3: Serving U2N Relay UE becomes better than absolute threshold. |
| In case that the UE is able to support both layer-3 sidelink relay and layer-2 sidelink relay, the events may be applied as events of signal strength measurement for sidelink relay (layer-2 sidelink relay and layer-3 sidelink relay), signal strength measurement for Uu (base station cell), and signal strength measurement reporting of the UE in order to perform a relay path switching procedure of the UE in consideration of both layer-3 sidelink relay and layer-2 sidelink relay. |

The newly defined events in [Table 1] may be specified as in [Table 2] below.

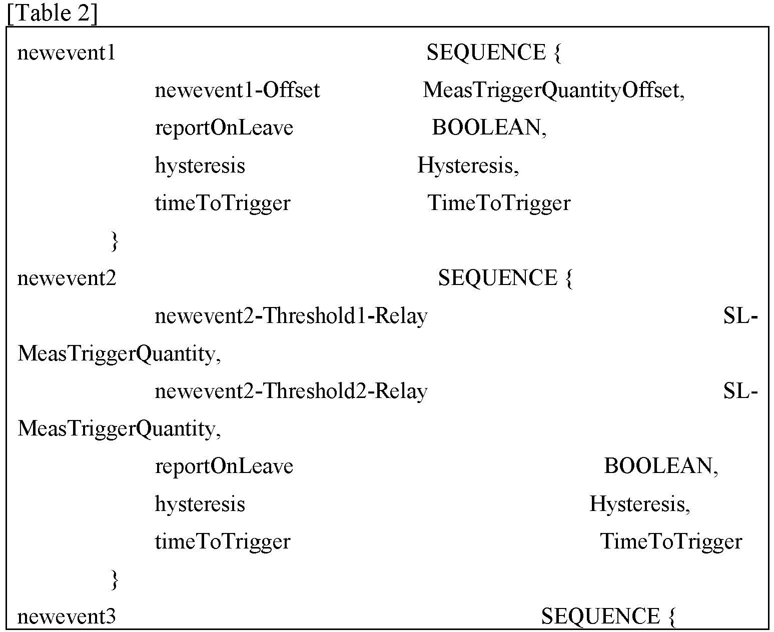

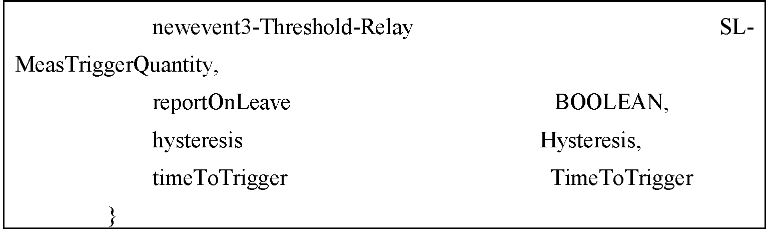

According to an embodiment, in case that the UE is able to support both a connection to a layer-2 sidelink relay and a connection to a layer-3 sidelink relay, the UE may perform, while being directly connected to a cell of one base station, relay path switching to a layer-2 sidelink relay of the same base station. Alternatively, the UE may perform, while being directly connected to a cell of one base station, relay path switching to a layer-3 sidelink relay of the same base station. Alternatively, the UE may perform relay path switching from a connection to a layer-2 sidelink relay of one base station to a connection to a layer-3 sidelink relay of the same base station. Alternatively, the UE may perform relay path switching from a connection to a layer-3 sidelink relay of one base station to a connection to a layer-2 sidelink relay of the same base station. Alternatively, the UE may perform relay path switching from a connection to a layer-2 sidelink relay of one base station to a direct connection to a cell of the same base station. Alternatively, the UE that is being connected to a layer-3 sidelink relay of one base station may make a direct connection to a cell of the same base station.

According to an embodiment, in case that the UE is able to support both a connection to a layer-2 sidelink relay and a connection to a layer-3 sidelink relay, the UE may perform relay path switching between a base station and another base station similarly to relay path switching within the same base station. **In** case that the UE is able to perform relay path switching between different relay types, i.e., a layer-2 sidelink relay and a layer-3 sidelink relay, a base station may be involved in the relay path switching procedure of the UE, or the relay path switching procedure may be performed by operations of the UE and the sidelink relays without involvement of the base station.

According to an embodiment, in case that the UE is able to support both layer-2 sidelink relay and layer-3 sidelink relay and support a relay path switching procedure including sidelink relays of different types, signal strength measurement and signal strength measurement result reporting processed by the UE for the sidelink relay path switching procedure may include at least some of information in [Table 3] below.

**[Table 3]**

| |
|---|
| Object information measurable by UE |
| (1) Uu measurement: Uu frequency for signal strength measurement as in a conventional handover or conventional sidelink relay path switching procedure |
| (2) Sidelink measurement: Sidelink frequency of a sidelink relay for signal strength measurement (SL frequency for a layer-2 U2N relay UE and/or SL frequency for a layer-3 U2N relay UE). Sidelink discovery RSRP (SD-RSRP) measurement or sidelink RSRP (SL-RSRP) measurement. |
| Information that may be included in measurement report of UE (including at least one or a combination of the following) |
| - measResultNeighCells (measurement results of candidate layer-2 U2N relay UEs: sl-MeasResultsCandRelay) |
| - measurement results of serving layer-2 U2N relay UE (sl-MeasResultServingRelay) |
| - measResultNeighCells includes at least one or combination of candidate Layer-2 U2N relay UE of inter-gNB, candidate Layer-3 U2N relay UE of intra gNB, candidate Layer-3 U2N relay UE of inter-gNB |
| - include a parameter to explicitly identify layer-3 U2N relay UE or layer-2 U2N relay UE in measResultNeighCells |
| - Source layer-2 ID of U2N relay UE (layer-3 relay UE or layer-2 relay UE) |
| - According to report period or triggered report event, remote UE can report measured relay UE(s). The relay type of reported relay UE(s) i.e., layer-3 relay UE or layer-2 relay UE can be determined by the remote UE) based on higher layer's indication of which relay type (layer-3 or layer-2). Remote UE's higher layer can select/determine relay type based on URSP (UE route selection policy) and ProSe policy. In case that the remote UE is able to support both layer-3 sidelink relay and layer-2 sidelink relay, the higher layer of the UE (e.g., discovery layer or ProSe layer) may determine |
| whether to connect to the layer-3 sidelink relay or the layer-2 sidelink relay, based on the URSP or ProSe policy. The determination or selection may be forwarded to an RRC layer of the UE, and the RRC layer of the UE may process a sidelink path switching procedure, a sidelink relay selection/reselection procedure, or a sidelink relay discovery procedure so as to enable a connection to the selected relay type. For example, in case of processing the sidelink path switching procedure, the remote UE may add only measurement information on a sidelink relay corresponding to the relay type selected by the higher-layer of the UE to a signal strength measurement result report message transmitted to a base station, so that the base station is able to indicate path switching to the sidelink relay of the selected relay type. The base station may determine a direct connection to a cell or a connection to a sidelink relay. |

According to an embodiment of the disclosure, in case that measObject of a measurement configuration transmitted by the base station is applicable to a layer-2 sidelink relay, an embodiment of a signal strength measurement operation of the UE for the layer-2 sidelink relay is as in [Table 4] below. The layer-2 sidelink relay may include a serving sidelink relay to which the UE is currently connected, and a candidate sidelink relay to which the UE may perform sidelink relay path switching.

**[Table 4]**

| |
|---|
| 5> if the measObject is associated to L2 U2N Relay UE: |
| 6> perform the corresponding measurements associated to candidate Relay UEs on the frequencies indicated in the concerned measObject, as described in 5.5.3.4; 5.5.3.4 Derivation of L2 U2N Relay UE measurement results |
| A UE may be configured by network to derive NR sidelink measurement results of serving L2 U2N Relay UE or candidate L2 U2N Relay UEs associated to the measurement objects configured in the measObjectRelay. |
| The UE shall: |
| 1> for each L2 U2N Relay UE measurement quantity to be derived: |
| 2> derive the corresponding measurement quantity based on DMRS of the L2 U2N Relay UE associated to the NR sidelink frequency indicated in the concerned measObjectRelay; |
| 2> apply layer 3 filtering; |

According to an embodiment of the disclosure, in case that measObject of the measurement configuration transmitted by the base station is applicable to the layer-2 sidelink relay, an embodiment of an operation of selecting a target sidelink relay that the UE is to report to the base station for the layer-2 sidelink relay (including a candidate sidelink relay to which the UE may perform sidelink relay path switching) is as in [Table 5] below.

**[Table 5]**

| |
|---|
| 3> else if the corresponding measObject concerns L2 U2N Relay UE: |
| 4> if eventY 1-Relay or eventY2-Relay or newevent1 or newevent2 is configured in the corresponding reportConfig; or |
| 4> if corresponding reportConfig includes reportType set to periodical: |
| 5> consider any L2 U2N Relay UE fulfilling upper layer criteria detected on the associated frequency to be applicable for this measId; |

According to an embodiment of the disclosure, in case that measObject of the measurement configuration transmitted by the base station is applicable to the layer-2 sidelink relay, an embodiment of an operation of configuring a measurement report to be transmitted by the UE to the base station for the layer-2 sidelink relay (including the serving sidelink relay to which the UE is currently connected and the candidate sidelink relay to which the UE may perform sidelink relay path switching) and a cell connected via Uu is as in [Table 6] below.

**[Table 6]**

| |
|---|
| 2> if the *reportType* is set to *eventTriggered* and if the entry condition applicable for this event, i.e. the event corresponding with the *eventId* of the corresponding *reportConfig* within *VarMeasConfig,* is fulfilled for one or more applicable L2 U2N Relay UEs for all measurements after layer 3 filtering taken during *timeToTrigger* defined for this event within the *VarMeasConfig,* while the *VarMeasReportList* does not include a measurement reporting entry for this *measld* (a first L2 U2N Relay UE triggers the event): |
| 3> include a measurement reporting entry within the *VarMeasReportList* for this *measld;* |
| 3> set the *numberOfReportsSent* defined within the *VarMeasReportList* for this *measld* to 0; |
| 3> include the concerned L2 U2N Relay UE(s) in the *relaysTriggeredList* defined within the *VarMeasReportList* for this *measld;* |
| 3> initiate the measurement reporting procedure; |
| 2> else if the *reportType* is set to *eventTriggered* and if the entry condition applicable for this event, i.e. the event corresponding with the *eventId* of the corresponding *reportConfig* within *VarMeasConfig,* is fulfilled for one or more applicable L2 U2N Relay UEs not included in the *relaysTriggeredList* for all measurements after layer 3 filtering taken during *timeToTrigger* defined for this event within the *VarMeasConfig* (a subsequent L2 U2N Relay UE triggers the event): |
| 3> set the *numberOfReportsSent* defined within the *VarMeasReportList* for this *measld* to 0; |
| 3> include the concerned L2 U2N Relay UE(s) in the *relaysTriggeredList* defined within the *VarMeasReportList* for this *measld;* |
| 3> initiate the measurement reporting procedure; |
| 2> else if the *reportType* is set to *eventTriggered* and if the leaving condition applicable for this event is fulfilled for one or more of the L2 U2N Relay UEs included in the *relaysTriggeredList* defined within the *VarMeasReportList* for this *measld* for all measurements after layer 3 filtering taken during *timeToTrigger* defined within the *VarMeasConfig* for this event: |
| 3> remove the concerned L2 U2N Relay UE(s) in the *relaysTriggeredList* defined within the *VarMeasReportList* for this *measld;* |
| 3> if *reportOnLeave* is set to *true* for the corresponding reporting configuration: |
| 4> initiate the measurement reporting procedure; |
| 3> if the *relaysTriggeredList* defined within the *VarMeasReportList* for this *measld* is empty: |
| 4> remove the measurement reporting entry within the *VarMeasReportList* for this *measld;* |
| 4> stop the periodical reporting timer for this *measld,* if running; |
| 2> if *reportType* is set to *periodical* and if a (first) measurement result is available: |
| 3> include a measurement reporting entry within the *VarMeasReportList* for this *measld;* |
| 3> set the *numberOfReportsSent* defined within the *VarMeasReportList* for this *measld* to 0; |
| 3> else if the *reportAmount* exceeds 1: |
| 4> initiate the measurement reporting procedure, immediately after the quantity to be reported becomes available for the NR SpCell or for the serving L2 U2N Relay UE (if the UE is a L2 U2N Remote UE); |
| 3> else (i.e. the *reportAmount* is equal to 1): |
| 4> initiate the measurement reporting procedure, immediately after the quantity to be reported becomes available for the NR SpCell and for the strongest cell among the applicable cells, or for the NR SpCell and for the strongest L2 U2N Relay UEs among the applicable L2 U2N Relay UEs; or initiate the measurement reporting procedure, immediately after the quantity to be reported becomes available for the serving L2 U2N Relay UE and for the strongest cell among the applicable cells (if the UE is a L2 U2N Remote UE); |
| 1> if there is at least one applicable neighbouring cell/ or candidate L2 U2N Relay UE to report: |
| 2> if the *reportType* is set to *eventtriggered* or *periodical:* |
| 3> if the measurement report concerns the candidate L2 U2N Relay UE: |
| 4> set the *sl-MeasResultsCandRelay* in *measResultNeighCells* to include the best candidate L2 U2N Relay UEs up to *maxReportCells* in accordance with the following: |
| 5> if the *reportType* is set to *eventTriggered:* |
| 6> include the L2 U2N Relay UEs included in the *relaysTriggeredList* as defined within the *VarMeasReportList* for this *measld;* |
| 5> else: |
| 6> include the applicable L2 U2N Relay UEs for which the new measurement results became available since the last periodical reporting or since the measurement was initiated or reset; |
| 5> for each L2 U2N Relay UE that is included in the *sl-MeasResultsCandRelay:* |
| 6> include the *sl-RelayUE-Identity;* |
| 5> for each included L2 U2N Relay UE, include the layer 3 filtered measured results in accordance with the *reportConfig* for this *measld,* ordered as follows: |
| 6> set the *sl-MeasResult* to include the quantity(ies) indicated in the *reportQuantityRelay* within the concerned *reportConfigRelay* in decreasing order of the sorting quantity, i.e. the best L2 U2N Relay UE is included first; |

According to an embodiment of the disclosure, in case that measObject of the measurement configuration transmitted by the base station is applicable to a layer-3 sidelink relay, an embodiment of a signal strength measurement operation of the UE for the layer-3 sidelink relay is as in [Table 7] below. The layer-3 sidelink relay may include a serving sidelink relay to which the UE is currently connected, and a candidate sidelink relay to which the UE may perform sidelink relay path switching.

**[Table 7]**

| |
|---|
| 5> if the measObject is associated to L3 U2N Relay UE: |
| 6> perform the corresponding measurements associated to candidate Relay UEs on the frequencies indicated in the concerned measObject, as described in 5.5.3.X; |
| 5.5.3.X Derivation of L3 U2N Relay UE measurement results |
| A UE may be configured by network to derive NR sidelink measurement results of serving L3 U2N Relay UE or candidate L3 U2N Relay UEs associated to the measurement objects configured in the measObjectRelay. |
| The UE shall: |
| 1> for each L3 U2N Relay UE measurement quantity to be derived: |
| 2> derive the corresponding measurement quantity based on DMRS as described in TS 38.215 of the L3 U2N Relay UE associated to the NR sidelink frequency indicated in the concerned measObjectRelay; |
| 2> apply layer 3 filtering; |

According to an embodiment of the disclosure, in case that measObject of the measurement configuration transmitted by the base station is applicable to the layer-3 sidelink relay, an embodiment of an operation of selecting a target sidelink relay that the UE is to report to the base station for the layer-3 sidelink relay is as in [Table 8] below. The layer-3 sidelink relay may include the serving sidelink relay to which the UE is currently connected, and the candidate sidelink relay to which the UE may perform sidelink relay path switching.

**[Table 8]**

| |
|---|
| 3> else if the corresponding measObject concerns L3 U2N Relay UE: |
| 4> if eventY 1-Relay or eventY2-Relay or neweventl or newevent2 is configured in the corresponding reportConfig; or |
| 4> if corresponding reportConfig includes reportType set to periodical: |
| 5> consider any L3 U2N Relay UE fulfilling upper layer criteria detected on the associated frequency to be applicable for this measId; |

According to an embodiment of the disclosure, in case that measObject of the measurement configuration transmitted by the base station is applicable to the layer-3 sidelink relay, an embodiment of an operation of configuring a measurement report to be transmitted by the UE to the base station for the layer-3 sidelink relay and a cell connected via Uu is as in [Table 9] below. The layer-3 sidelink relay may include the serving sidelink relay to which the UE is currently connected, and the candidate sidelink relay to which the UE may perform sidelink relay path switching.

**[Table 9]**

| |
|---|
| 2> if the *reportType* is set to *eventTriggered* and if the entry condition applicable for this event, i.e., the event corresponding with the *eventId* of the corresponding *reportConfig* within *VarMeasConfig,* is fulfilled for one or more applicable L3 U2N Relay UEs for all measurements after layer 3 filtering taken during *timeToTrigger* defined for this event within the *VarMeasConfig,* while the *VarMeasReportList* does not include a measurement reporting entry for this *measld* (a first L3 U2N Relay UE triggers the event): |
| 3> include a measurement reporting entry within the *VarMeasReportList* for this *measld;* |
| 3> set the *numberOfReportsSent* defined within the *VarMeasReportList* for this *measld* to 0; |
| 3> include the concerned L3 U2N Relay UE(s) in the *relaysTriggeredList* defined within the *VarMeasReportList* for this *measld;* |
| 3> initiate the measurement reporting procedure; |
| 2> else if the *reportType* is set to *eventTriggered* and if the entry condition applicable for this event, i.e., the event corresponding with the *eventId* of the corresponding *reportConfig* within *VarMeasConfig,* is fulfilled for one or more applicable L3 U2N Relay UEs not included in the *relaysTriggeredList* for all measurements after layer 3 filtering taken during *timeToTrigger* defined for this event within the *VarMeasConfig* (a subsequent L3 U2N Relay UE triggers the event): |
| 3> set the *numberOfReportsSent* defined within the *VarMeasReportList* for this *measld* to 0; |
| 3> include the concerned L3 U2N Relay UE(s) in the *relaysTriggeredList* defined within the *VarMeasReportList* for this *measld;* |
| 3> initiate the measurement reporting procedure; |
| 2> else if the *reportType* is set to *eventTriggered* and if the leaving condition applicable for this event is fulfilled for one or more of the L3 U2N Relay UEs included in the *relaysTriggeredList* defined within the *VarMeasReportList* for this *measld* for all measurements after layer 3 filtering taken during *timeToTrigger* defined within the *VarMeasConfig* for this event: |
| 3> remove the concerned L3 U2N Relay UE(s) in the *relaysTriggeredList* defined within the *VarMeasReportList* for this *measld;* |
| 3> if *reportOnLeave* is set to *true* for the corresponding reporting configuration: |
| 4> initiate the measurement reporting procedure; |
| 3> if the *relaysTriggeredList* defined within the *VarMeasReportList* for this *measld* is empty: |
| 4> remove the measurement reporting entry within the *VarMeasReportList* for this *measld;* |
| 4> stop the periodical reporting timer for this *measld,* if running; |
| 2> if *reportType* is set to *periodical* and if a (first) measurement result is available: |
| 3> include a measurement reporting entry within the *VarMeasReportList* for this *measld;* |
| 3> set the *numberOfReportsSent* defined within the *VarMeasReportList* for this *measld* to 0; |
| 3> else if the *reportAmount* exceeds 1: |
| 4> initiate the measurement reporting procedure, immediately after the quantity to be reported becomes available for the NR SpCell or for the serving L3 U2N Relay UE (if the UE is a L3 U2N Remote UE); |
| 3> else (i.e., the *reportAmount* is equal to 1): |
| 4> initiate the measurement reporting procedure, immediately after the quantity to be reported becomes available for the NR SpCell and for the strongest cell among the applicable cells, or for the NR SpCell and for the strongest L3 U2N Relay UEs among the applicable L3 U2N Relay UEs; or initiate the measurement reporting procedure, immediately after the quantity to be reported becomes available for the serving L3 U2N Relay UE and for the strongest cell among the applicable cells (if the UE is a L3 U2N Remote UE); |
| 1> if there is at least one applicable neighbouring cell/ or candidate L3 U2N Relay UE to report: |
| 2> if the *reportType* is set to *eventTriggered* or *periodical:* |
| 3> if the measurement report concerns the candidate L3 U2N Relay UE: |
| 4> set the *sl-MeasResultsCandRelay* in *measResultNeighCells* to include the best candidate L3 U2N Relay UEs up to *maxReportCells* in accordance with the following: |
| 5> if the *reportType* is set to *eventTriggered:* |
| 6> include the L3 U2N Relay UEs included in the *relaysTriggeredList* as defined within the *VarMeasReportList* for this *measld;* |
| 5> else: |
| 6> include the applicable L3 U2N Relay UEs for which the new measurement results became available since the last periodical reporting or since the measurement was initiated or reset; |
| 5> for each L3 U2N Relay UE that is included in the *sl-MeasResultsCandRelay:* |
| 6> include the *sl-RelayUE-Identity;* |
| 5> for each included L3 U2N Relay UE, include the layer 3 filtered measured results in accordance with the *reportConfig* for this *measId,* ordered as follows: |
| 6> set the *sl-MeasResult* to include the quantity(ies) indicated in the *reportQuantityRelay* within the concerned *reportConfigRelay* in decreasing order of the sorting quantity, i.e., the best L3 U2N Relay UE is included first; |

According to an embodiment, in case that the UE is able to support both a connection to a layer-3 sidelink relay and a connection to a layer-2 sidelink relay, the UE may inform the base station about support information of the UE. The UE may determine or identify relay type information based on AS layer information, signal measurement results, and/or higher-layer information (e.g., a service type, a UE route selection policy (URSP), and a ProSe policy) of the UE, and may inform the base station about the determined relay type. For example, when the UE that has been connected to the layer-3 sidelink relay determines or identifies that a connection to the layer-2 sidelink relay is necessary, the UE may perform reporting by including measurement information on the layer-2 sidelink relay in a measurement report message transmitted to the base station. For example, when the UE that has been connected to the layer-2 sidelink relay determines that a connection to the layer-3 sidelink relay is necessary, the UE may perform reporting by including measurement information on the layer-3 sidelink relay in the measurement report message transmitted to the base station. For this, as illustrated in FIG. 11, unlike a case where the UE needs a connection to a layer-3 sidelink relay and thus a procedure of discovering, selecting, and connecting to the layer-3 sidelink relay is processed transparently to the base station, a method may be required for the UE to notify the base station that a connection to the layer-3 sidelink relay is needed.

According to an embodiment, the UE may support layer-2 sidelink relay, and may inform the base station about capability information that the UE is able to support layer-3 sidelink relay. The capability information of the UE may include at least some of information in [Table 10].

**[Table 10]**

| |
|---|
| remoteUE-Operation-L2 {supported} // Indicating that the UE is able to support layer-2 sidelink relay |
| remoteUE-Operation-L3 {supported} // Indicating that the UE is able to support layer-3 sidelink relay |
| For example, if remoteUE-Operation-L2 is configured to be {supported} and remoteUE-Operation-L3 is configured to be {supported}, the base station may determine that the UE is able to support both a connection to the layer-3 sidelink relay and a connection to the layer-2 sidelink relay. |

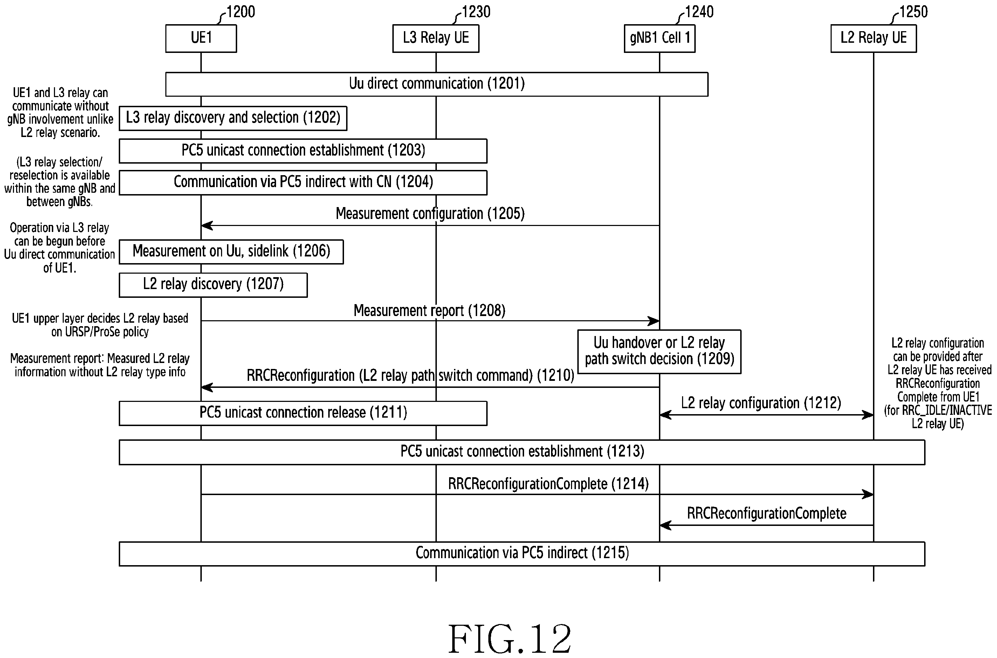

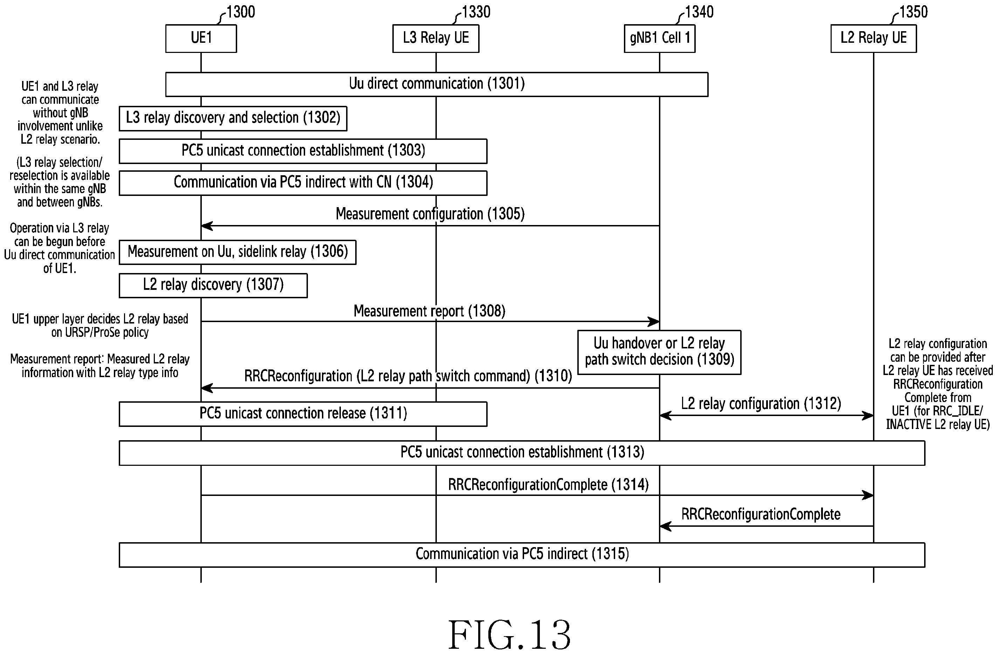

In FIG. 12 and FIG. 13, descriptions are provided for an embodiment where, in case that a UE is able to perform data transmission and reception to and from a network via relay transmission of a layer-3 sidelink relay, and the UE is able to perform data transmission and reception to and from the network via relay transmission of a layer-2 sidelink relay, the UE that has been connected to the layer-3 sidelink relay performs a sidelink path switching procedure to the layer-2 sidelink relay.

FIG. 12 is a diagram illustrating a sidelink relay path switching operation of a UE between layer-3 sidelink relay and layer-2 sidelink relay according to an embodiment of the disclosure.

Referring to FIG. 12, a UE 1200 according to an embodiment of the disclosure may perform data transmission and reception in operation 1201 via a direct connection to a cell in base station 1 1240 (e.g., gNB 1 cell 1). The UE 1200 may support a connection to a layer-3 sidelink relay and support a connection to a layer-2 sidelink relay. Since supporting of layer-3 sidelink relay by the UE 1200 does not need to be reported to base station 1 1240, i.e., supporting of layer-3 sidelink relay by the UE 1200 may be transparent to base station 1 1240, whether the UE supports layer-3 sidelink relay may not be notified to base station 1 1240, and the UE 1200 may inform base station 1 1240 about capability information regarding supporting of layer-2 sidelink relay.

According to an embodiment of the disclosure, as in the embodiment of FIG. 11, the UE 1200 may determine or identify that data transmission and reception to or from the network is required via a connection to a layer-3 sidelink relay without involvement of base station 1 1240, and may perform a discovery procedure and a selection procedure for the layer-3 sidelink relay in operation 1202. When a layer-3 sidelink relay 1230 is discovered and selected, the UE 1200 may perform a PC5 unicast connection establishment procedure with respect to the layer-3 sidelink relay 1230 in operation 1203. The UE 1200 may perform data transmission and reception to and from the network via relay transmission of the layer-3 sidelink relay 1230 in operation 1204. The UE 1200 may perform a sidelink relay change procedure by discovering and selecting a layer-3 sidelink other than the layer-3 sidelink relay 1230.

According to an embodiment of the disclosure, since the UE 1200 is able to perform data transmission and reception also via a direct connection to base station 1 1240 as in operation 1201, the UE 1200 may acquire a measurement configuration from base station 1 1240 in operation 1205. That is, base station 1 1240 may configure the measurement configuration to support RRC connection mode mobility of the UE 1200 and transmit the same to the UE 1200. The measurement configuration of operation 1205 may include configuration information for a Uu measurement object and a measurement report.

According to an embodiment of the disclosure, base station 1 1240 may transmit the measurement configuration, which includes a sidelink relay measurement object and a measurement report, to the UE in operation 1205, based on support capability information that the UE 1200 is able to support layer-2 sidelink relay. The measurement configuration transmitted by the base station 1240 to the UE 1200 may include at least some of the information included in [Table 1], [Table 2], and/or [Table 3], and in case that the base station 1240 is not involved in the layer-3 sidelink relay operation, the base station 1240 may configure the measurement configuration for layer-2 sidelink relay and provide the same to the UE 1200.

According to an embodiment of the disclosure, the UE 1200 may determine or identify that a connection to a layer-2 sidelink relay is required instead of the connection to the layer-3 sidelink relay. The determination or identification of the UE may be performed by a higher layer of the UE 1200 according to a UE route selection policy (URSP) or a ProSe policy. The UE 1200 may perform Uu cell and layer-2 sidelink relay measurement in operation 1206, based on the measurement configuration information of operation 1205. In addition, the UE 1200 may perform a layer-2 sidelink relay discovery procedure in operation 1207. The UE 1200 may transmit a measurement report as measurement results to base station 1 1240 in operation 1208, based on the layer-2 sidelink relay measurement in operation 1206, the layer-2 sidelink relay discovery in operation 1207, and/or determination criteria for layer-2 sidelink relay, which is determined by the higher layer of the UE 1200.

According to an embodiment, in case that the UE 1200 determines or identifies that sidelink path switching is required from the connection to the layer-3 sidelink relay to a connection to a layer-2 sidelink relay, the measurement report of operation 1208 may include a measurement result for layer-2 sidelink relay. The measurement report including the measurement result for layer-2 sidelink relay in operation 1208 may not separately include relay type information of layer-2 sidelink relay. The operation of configuring the measurement report for layer-2 sidelink relay by the UE 1200 is as in the embodiments of [Table 4], [Table 5], and/or [Table 6]. For example, information included in the measurement report transmitted by the UE 1200 may include at least some of information in [Table 11].

**[Table 11]**

| | | | |
|---|---|---|---|
| | • Measurement report | | |
| | | • measResultNeighCells | |
| | | | • Measurement results of candidate L2 U2N relay UEs: sl-MeasResultsCandRelay-r17 SL-MeasResultsRelay-r17 |
| (i.e., measResultNeighCells can include candidate L2 U2N relay wo relay type indicator) | | | |

Base station 1 1240 may determine handover to a Uu cell or path switching to a layer-2 sidelink relay in operation 1209 by referring to the UE measurement results of operation 1208. Base station 1 1240 may transmit, to the UE 1200 in operation 1210, an RRCReconfiguration message indicating handover or layer-2 sidelink relay path switching (e.g., determining path switching to a layer-2 sidelink relay in the embodiment of FIG. 12) according to the determination of operation 1209.

According to an embodiment of the disclosure, in operation 1212, base station 1 1240 may transmit or provide, to a target sidelink relay 1250, information required to perform layer-2 sidelink relay data transmission and reception to or from the UE 1200. In case that the target sidelink relay 1250 is not in an RRC_CONNECTED state, the procedure of operation 1212 may be performed after the target sidelink relay 1250 transitions to the RRC_CONNECTED state. For example, the target sidelink relay 1250 may determine or identify that the UE 1200 has transmitted an RRCReconfigurationComplete message to the target sidelink relay 1250, and perform transition to the RRC_CONNECTED state. Although not illustrated in FIG. 12, in case that the target sidelink relay 1250 is determined or identified to be in a base station other than base station 1 1240, base station 1 1240 may exchange, with a target base station via an inter-node message, sidelink relay information managed by base stations. Base station 1 1240 may exchange, via the inter-node message, information on a cell of the target base station or a sidelink relay of the target base station, to which the UE may perform handover and sidelink relay path switching, based on the Uu link measurement result and sidelink measurement result reported by the UE for connection mode mobility (e.g., handover or sidelink relay path switching) of the UE.

According to an embodiment of the disclosure, base station 1 1240 and the target base station may exchange, via the inter-node message, at least one or a combination of a Uu capability of the UE 1200, a sidelink capability of the UE 1200, Uu SRB/DRB configuration information of the UE 1200, PC5 SRB/DRB configuration information of the UE 1200, and PC5 SRB/DRB configuration information that may correspond to an end-to-end connection between the UE 1200 and the target base station, wherein the UE 1200 performs a handover procedure to the cell of the target base station or perform a path switching procedure to the sidelink relay of the target base station, and the capabilities and the configuration information are required for establishing a connection to the cell of the target base station or to the sidelink relay of the target base station.

According to an embodiment of the disclosure, the UE 1200 may perform a PC5 unicast connection establishment procedure with respect to the layer-3 sidelink relay 1230 in operation 1211. The UE 1200 may perform a PC5 unicast connection establishment procedure with respect to a layer-2 sidelink relay 1250 in operation 1213. The UE 1200 may transmit or provide the RRCReconfigurationComplete message to the base station 1240 in operation 1214 by using relay transmission of the layer-2 sidelink relay 1250. The UE 1200 may perform data transmission and reception to and from the base station 1240 via the layer-2 sidelink relay 1250 in operation 1215.

FIG. 13 is a diagram illustrating a sidelink relay path switching operation of a UE between layer-3 sidelink relay and layer-2 sidelink relay according to an embodiment of the disclosure.

Referring to FIG. 13, a UE 1300 (e.g., UE 1) according to an embodiment may perform data transmission and reception in operation 1301 via a direct connection to a cell in base station 1 1340 (e.g., gNB cell 1).

The UE 1300 according to an embodiment may support a connection to a layer-3 sidelink relay and support a connection to a layer-2 sidelink relay. The UE 1300 may report, to base station 1 1340, capability information on supporting of layer-2 sidelink relay and capability information on supporting of layer-3 sidelink relay. As in the embodiment of FIG. 11, the UE 1300 may determine that data transmission and reception to or from the network is required via a connection to a layer-3 sidelink relay without involvement of base station 1 1340, and may perform a discovery procedure and a selection procedure for the layer-3 sidelink relay in operation 1302.

When the UE 1300 according to an embodiment of the disclosure discovers and selects a layer-3 sidelink relay 1330, the UE 1300 may perform a PC5 unicast connection establishment procedure with respect to the layer-3 sidelink relay 1330 in operation 1303. The UE 1300 may perform data transmission and reception to and from the network via relay transmission of the layer-3 sidelink relay 1330 in operation 1304. The UE 1300 may perform a sidelink relay change procedure by discovering and selecting a layer-3 sidelink other than the layer-3 sidelink relay 1330. Since the UE 1300 is able to perform data transmission and reception also via a direct connection to base station 1 1340 as in operation 1301, the UE 1300 may acquire a measurement configuration from base station 1 1340 in operation 1305. For example, base station 1 1340 may configure the measurement configuration to support RRC connection mode mobility of the UE 1300 and transmit the same to the UE 1300. The measurement configuration of operation 1305 may include configuration information for a Uu measurement object and a measurement report. Base station 1 1340 may transmit the measurement configuration, which includes a sidelink relay measurement object and a measurement report, to the UE 1300 in operation 1305, based on support capability information that the UE 1300 is able to support layer-2 sidelink relay.

According to an embodiment of the disclosure, the measurement configuration transmitted by base station 1 1340 to the UE 1300 may include at least some of the information included in [Table 1], [Table 2], and/or [Table 3], and in case that base station 1 1340 is not involved in the layer-3 sidelink relay operation, base station 1 1340 may configure the measurement configuration for layer-2 sidelink relay and provide the same to the UE 1300. The UE 1300 may determine that a connection to a layer-2 sidelink relay is required instead of the connection to the layer-3 sidelink relay. The determination that a connection to a layer-2 sidelink relay is required may be made by a higher layer of the UE 1300 according to a URSP or a ProSe policy.

According to an embodiment of the disclosure, the UE 1300 may perform Uu cell and layer-2 sidelink relay measurement in operation 1306, based on the measurement configuration information of operation 1305. In addition, the UE 1300 may perform a layer-2 sidelink relay discovery procedure in operation 1307. The UE 1300 may transmit or provide a measurement report as measurement results to base station 1 1340 in operation 1308, based on the layer-2 sidelink relay measurement in operation 1306, the layer-2 sidelink relay discovery in operation 1307, and/or determination criteria on layer-2 sidelink relay, which is determined by the higher layer of the UE 1300. In case that the UE 1300 determines or identifies that sidelink path switching is required from the connection to the layer-3 sidelink relay to a connection to a layer-2 sidelink relay, the measurement report of operation 1308 may include a measurement result for layer-2 sidelink relay. The measurement report including the measurement result for layer-2 sidelink relay in operation 1308 may separately include relay type information of layer-2 sidelink relay. The operation of configuring the measurement report for layer-2 sidelink relay by the UE 1300 is as in the embodiments of [Table 4], [Table 5], and/or [Table 6]. For example, information included in the measurement report transmitted by the UE 1300 may include [Table 12] below.

**[Table 12]**

| | | | |
|---|---|---|---|
| | • Measurement report | | |
| | | • measResultNeighCells | |
| | | | • Measurement results of candidate L2 U2N relay UEs: sl-MeasResultsCandRelay-r17 SL-MeasResultsRelay-r17 |
| (i.e., measResultNeighCells can include candidate L2 U2N relay with relay type indicator) | | | |

According to an embodiment of the disclosure, base station 1 1340 may determine or identify handover to a Uu cell or path switching to a layer-2 sidelink relay in operation 1309 by referring to the UE measurement results of operation 1308. Base station 1 1340 may transmit, to the UE 1300 in operation 1310, an RRCReconfiguration message indicating handover or layer-2 sidelink relay path switching (e.g., determining path switching to a layer-2 sidelink relay in the embodiment of FIG. 13) according to the determination of operation 1309.

According to an embodiment of the disclosure, in operation 1312, base station 1 1340 may transmit, to a target sidelink relay 1350, information required to perform layer-2 sidelink relay data transmission and reception to or from the UE 1300. In case that the target sidelink relay 1350 is not in an RRC_CONNECTED state, the procedure of operation 1312 may be performed after the target sidelink relay 1350 transitions to the RRC_CONNECTED state. For example, the target sidelink relay 1350 may determine that the UE 1300 has transmitted an RRCReconfigurationComplete message to the target sidelink relay 1350, and perform transition to the RRC_CONNECTED state.

Although not illustrated in FIG. 13, in case that the target sidelink relay 1350 is determined or identified to be in a base station other than base station 1 1340, base station 1 1340 may exchange, with a target base station via an inter-node message, sidelink relay information managed by base stations. In addition, base station 1 1340 may exchange, via the inter-node message, information on a cell of the target base station or a sidelink relay of the target base station, to which the UE may perform handover and sidelink relay path switching, based on the Uu link measurement result and sidelink measurement result reported by the UE for connection mode mobility (e.g., handover or sidelink relay path switching) of the UE.

According to an embodiment of the disclosure, base station 1 1340 and the target base station may exchange, via the inter-node message, at least one or a combination of a Uu capability of the UE 1300, a sidelink capability of the UE 1300, Uu SRB/DRB configuration information of the UE 1300, PC5 SRB/DRB configuration information of the UE 1300, and PC5 SRB/DRB configuration information that may correspond to an end-to-end connection between the UE 1300 and the target base station, wherein the UE 1300 may perform a handover procedure to the cell of the target base station or perform a path switching procedure to the sidelink relay of the target base station, and the capabilities and the configuration information are required for establishing a connection to the cell of the target base station or to the sidelink relay of the target base station. The UE 1300 may perform a PC5 unicast connection release procedure with respect to the layer-3 sidelink relay 1330 in operation 1311. The UE 1300 may perform a PC5 unicast connection establishment procedure with respect to the layer-2 sidelink relay 1350 in operation 1313. The UE 1300 may transmit the RRCReconfigurationComplete message to the base station 1340 in operation 1314 by using relay transmission of the layer-2 sidelink relay 1350. The UE 1300 may perform data transmission and reception to and from the base station 1340 via the layer-2 sidelink relay 1350 in operation 1315.

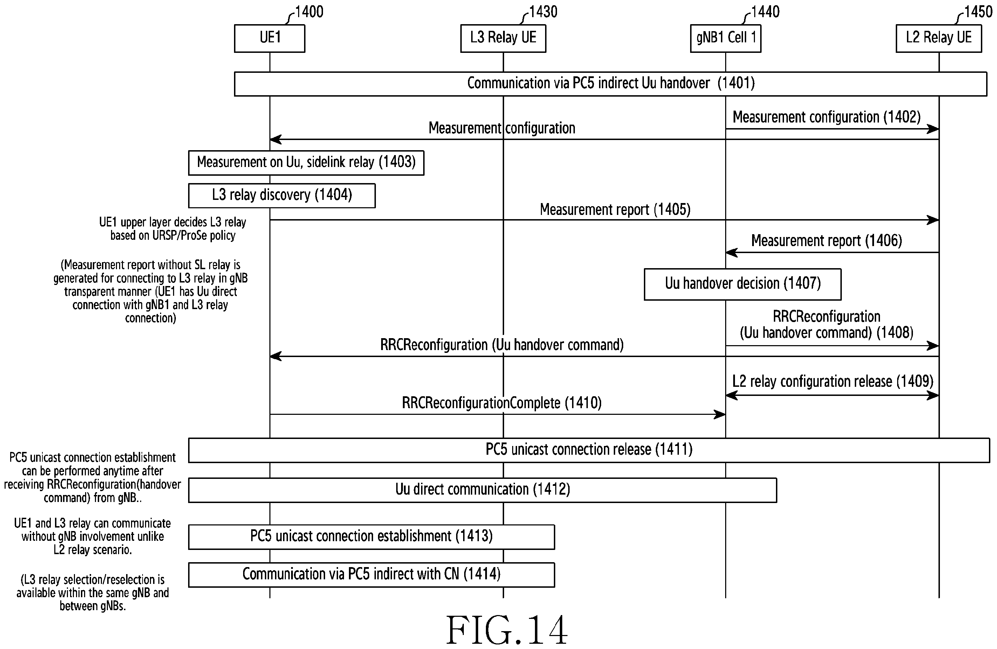

Referring to FIGS. 14, 15, 16, and 17, descriptions are provided for an embodiment where, in case that a UE is able to perform data transmission and reception to and from a network via relay transmission of a layer-3 sidelink relay, and the UE is able to perform data transmission and reception to and from the network via relay transmission of a layer-2 sidelink relay, the UE that has been connected to the layer-2 sidelink relay performs a sidelink path switching procedure to the layer-3 sidelink relay.

FIG. 14 is a diagram illustrating a sidelink relay path switching operation of a UE between layer-3 sidelink relay and layer-2 sidelink relay according to an embodiment of the disclosure.

Referring to FIG. 14, a UE 1400 according to an embodiment of the disclosure may perform data transmission and reception to and from base station 1 1440 (e.g., gNB1 cell 1) via relay transmission of layer-2 sidelink relay 1 1450 in operation 1401.

According to an embodiment of the disclosure, the UE 1400 may support a connection to a layer-3 sidelink relay and support a connection to a layer-2 sidelink relay. Since supporting of layer-3 sidelink relay by the UE 1400 does not need to be reported to base station 1 1440, i.e., supporting of layer-3 sidelink relay by the UE 1400 may be transparent to base station 1 1440, whether the UE 1400 supports layer-3 sidelink relay may not be notified to base station 1 1440, and the UE 1400 may inform base station 1 1440 about capability information regarding supporting of layer-2 sidelink relay. The UE 1400 may be known to base station 1 1440, as a UE which is able to support a connection to a layer-2 sidelink relay.

According to an embodiment of the disclosure, base station 1 1440 may support handover and sidelink relay path switching of the UE 1400, and may configure a measurement configuration message and transmit or provide the same to the UE 1400 via relay transmission of the layer-2 sidelink relay 1450 in operation 1402. The measurement configuration of operation 1402 may include configuration information for a Uu measurement obj ect, a sidelink relay measurement object, and a measurement report, for example, at least some of the information in [Table 1], [Table 2], and/or [Table 3].

According to an embodiment of the disclosure, the UE 1400 may perform Uu cell and layer-2 sidelink relay measurement in operation 1403, based on the measurement configuration information of operation 1402. The UE 1400 may determine that a connection to a layer-3 sidelink relay is required instead of the connection to the layer-2 sidelink relay. The determination that a connection to a layer-3 sidelink relay is required may be made by a higher layer of the UE 1400 according to a URSP or a ProSe policy. The UE 1400 may perform measurement on layer-3 side link relay while measuring a Uu cell, based on the measurement configuration information of operation 1402.

According to an embodiment of the disclosure, the UE 1400 may perform a layer-3 sidelink relay discovery procedure in operation 1404. The UE 1400 may transmit a measurement report as measurement results to base station 1 1440 via relay transmission of the layer-2 sidelink relay 1450 in operations 1405 and 1406 according to the layer-3 sidelink relay measurement in operation 1403, the layer-3 sidelink relay discovery in operation 1404, and/or determination criteria for layer-3 sidelink relay, which is determined by the higher layer of the UE 1400. When configuring the measurement report, the UE 1400 may perform at least one or a combination of procedures in [Table 7], [Table 8], and [Table 9]. When the UE 1400 determines that a connection to a layer-3 sidelink relay is required instead of the connection to the layer-2 sidelink relay, the measurement report of operations 1405 and 1406 may not include a measurement result for sidelink relay. The UE 1400 may determine or identify to connect to a layer-3 sidelink relay without involvement of base station 1 1440, and when configuring the measurement report of operation 1405 and operation 1406, the measurement report may include a measurement result for a Uu cell without including sidelink relay information.

According to an embodiment, base station 1 1440 may determine handover to the Uu cell in operation 1407 by referring to the UE measurement result of operations 1405 and 1406. Although not illustrated in FIG. 14, for the determination of operation 1407, base station 1 1440 may exchange information for handover to a cell belonging to an adjacent base station, based on the measurement result report of the UE 1400. Base station 1 1440 may transmit, to the UE 1400 in operation 1408, an RRCReconfiguration message indicating handover (e.g., indicating a direct connection to the cell in base station 1 1440 in the embodiment of FIG. 14) according to the determination of operation 1407. The RRCReconfiguration message of operation 1408 may be transmitted to the UE 1400 by using relay transmission of the layer-2 sidelink relay 1450. In case that base station 1 1440 determines sidelink path switching of the UE 1400 from the layer-2 sidelink relay 1450 to the cell in base station 1 1440, base station 1 1440 may include, in the RRCReconfiguration message of operation 1408, information notifying to release configuration information configured for the UE 1400, the configuration information being required for performing layer-2 sidelink relay data transmission and reception to and from the layer-2 sidelink relay 1450.

According to an embodiment, base station 1 1440 may transmit, in operation 1409 to the layer-2 sidelink relay 1450 currently connected to the UE 1400, a message indicating to release configuration information required to perform layer-2 sidelink relay data transmission and reception to and from the UE 1400. The UE 1400 having processed the RRCReconfiguration message from base station 1 1440, which indicates handover, may perform handover to the target cell and transmit an RRCReconfigurationComplete message to base station 1 1440 in operation 1410, thereby notifying that the handover procedure is completed. In addition, the UE 1400 and the layer-2 sidelink relay 1450 may perform a PC5 unicast connection release procedure in operation 1411.

A point in time for performing the procedure of operation 1411 illustrated in FIG. 14 is an example, and the procedure of operation 1411 may be performed at any time after base station 1 1440 indicates the UE 1400 and the layer-2 sidelink relay 1450 to release the layer 2 configuration information due to the handover of the UE.

According to an embodiment, the UE 1400 may select a layer-3 sidelink relay 1430 via a discovery procedure and a selection procedure without involvement of base station 1 1440 as in the embodiment of FIG. 11, and may perform a PC5 unicast connection establishment procedure with respect to the layer-3 sidelink relay 1430 in operation 1413. Operation 1413 may be performed at any time after the UE 1400 determines to connect to the layer-3 sidelink relay 1430 without connecting to the layer-2 sidelink relay 1450. The UE 1400 may perform data transmission and reception to and from the network via relay transmission of the layer-3 sidelink relay 1430 in operation 1414. The UE 1400 may perform a sidelink relay change procedure by discovering and selecting a layer-3 sidelink other than the layer-3 sidelink relay 1330 without involvement of base station 1 1400.

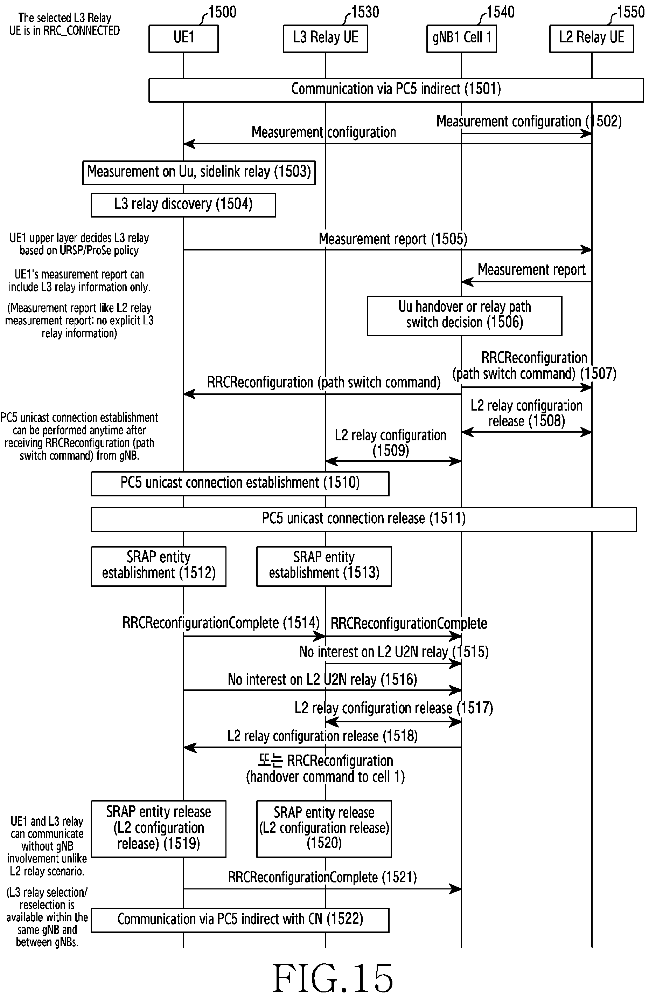

FIG. 15 is a diagram illustrating a sidelink relay path switching operation of a UE between layer-3 sidelink relay and layer-2 sidelink relay according to an embodiment of the disclosure.

Referring to FIG. 15, a UE 1500 according to an embodiment of the disclosure may perform data transmission and reception to and from base station 1 1540 via relay transmission of a layer-2 sidelink relay 1550 in operation 1501.

According to an embodiment, the UE 1500 may support a connection to a layer-3 sidelink relay and support a connection to a layer-2 sidelink relay. Since supporting of layer-3 sidelink relay by the UE 1500 does not need to be reported to base station 1 1540, i.e., supporting of layer-3 sidelink relay by the UE 1500 may be transparent to base station 1 1540, whether the UE 1500 supports layer-3 sidelink relay may not be notified to the base station 1540, and the UE 1500 may inform base station 1 1540 about capability information regarding supporting of layer-2 sidelink relay. For example, the UE 1500 may be known to base station 1 1540, as a UE which is able to support a connection to a layer-2 sidelink relay.

According to an embodiment of the disclosure, base station 1 1540 may support handover and layer-2 sidelink relay path switching of the UE 1500, and may configure a measurement configuration message and transmit the same to the UE 1500 via relay transmission of the layer-2 sidelink relay 1550 in operation 1502. The measurement configuration of operation 1502 may include configuration information for a Uu measurement obj ect, a sidelink relay measurement object, and a measurement report, for example, at least some of the information in [Table 1], [Table 2], and/or [Table 3].

According to an embodiment of the disclosure, the UE 1500 may perform Uu cell and layer-2 sidelink relay measurement in operation 1503, based on the measurement configuration information of operation 1502. The UE 1500 may determine or identify that a connection to a layer-3 sidelink relay is required instead of the connection to the layer-2 sidelink relay. The determination that a connection to a layer-3 sidelink relay is required may be made by a higher layer of the UE 1500 according to a URSP or a ProSe policy. The UE 1500 may perform measurement on layer-3 side link relay while measuring a Uu cell, based on the measurement configuration information of operation 1502.

According to an embodiment of the disclosure, the UE 1500 may perform a layer-3 sidelink relay discovery procedure in operation 1504. The UE 1500 may transmit a measurement report as measurement results to base station 1 1540 via relay transmission of the layer-2 sidelink relay 1550 in operation 1505 according to the layer-3 sidelink relay measurement in operation 1503, the layer-3 sidelink relay discovery in operation 1504, and/or determination criteria for layer-3 sidelink relay, which is determined by the higher layer of the UE 1500.

According to an embodiment, when configuring the measurement report, the UE 1500 may perform at least one or a combination of procedures in [Table 7], [Table 8], and [Table 9]. When the UE 1500 determines that a connection to a layer-3 sidelink relay is required instead of the connection to the layer-2 sidelink relay, the measurement report of operation 1505 may be configured to include a measurement result for layer-3 sidelink relay. A case where the UE 1500 includes the measurement result for layer-3 sidelink relay may correspond to a case where a measurement object corresponding to the layer-2 sidelink relay of the measurement configuration provided by the base station 1540 in operation 1502 is also applicable to layer-3 sidelink relay.

According to an embodiment, base station 1 1540 has configured the measurement and report configuration applicable to the layer-2 sidelink relay, but if the measurement and report configuration for layer-2 sidelink relay is determined to be applicable to layer-3 sidelink relay, the UE 1500 may use the configuration for measurement on layer-3 sidelink relay, and transmit a result of the measurement on layer-3 sidelink relay to base station 1 1540 by including the same in the measurement report. In case that the measurement and report configuration, which has been configured by base station 1 1540 and is applicable to layer-2 sidelink relay, is determined not to be applicable to layer-3 sidelink relay, the UE 1500 may configure the measurement report not to include the measurement result for sidelink relay, and transmit the measurement report to base station 1 1540. The measurement report of operation 1505 may include a result of Uu cell measurement. The base station 1 1540 may determine and process, as a layer-2 sidelink relay, the layer-3 sidelink relay included in the measurement report transmitted by the UE 1500 in operation 1505.

According to an embodiment, base station 1 1540 may determine handover to a Uu cell or path switching to a sidelink relay in operation 1506 by referring to the UE measurement result of operation 1505. For the determination of operation 1506, base station 1 1540 may exchange, with a target base station, information for inter-base station handover or relay path switching with respect to a sidelink relay or a cell belonging to the target base station, based on the measurement result report of the UE 1500. Base station 1 1540 may exchange, with the target base station via an inter-node message, sidelink relay information managed by base stations, and may exchange, via the inter-node message, information on the cell of the target base station or the sidelink relay of the target base station, to which the UE may perform handover and sidelink relay path switching, based on the Uu link measurement result and sidelink measurement result reported by the UE for connection mode mobility (e.g., handover or sidelink relay path switching) of the UE.

According to an embodiment, in case that the UE performs a handover procedure to the cell of the target base station or performs a path switching procedure to the sidelink relay of the target base station, base station 1 1540 and the target base station may exchange, via the inter-node message, at least one or a combination of a Uu capability of the UE, a sidelink capability of the UE, Uu SRB/DRB configuration information of the UE, PC5 SRB/DRB configuration information of the UE, and PC5 SRB/DRB configuration information that may correspond to an end-to-end connection between the UE and the target base station, wherein the capabilities and the configuration information are required for establishing a connection to the cell of the target base station or to the sidelink relay of the target base station.

According to an embodiment of the disclosure, base station 1 1540 may transmit, to the UE 1500 in operation 1507, an RRCReconfiguration message indicating handover or sidelink relay path switching (e.g., determining sidelink path switching to a layer-3 sidelink relay 1530 in base station 1 1540 in the embodiment of FIG. 15) according to the determination of operation 1506. The RRCReconfiguration message of operation 1507 may be transmitted or provided to the UE 1500 by using relay transmission of the layer-2 sidelink relay 1550. When base station 1 1540 determines sidelink path switching of the UE 1500 from the layer-2 sidelink relay 1550 to the layer-3 sidelink relay 1530, base station 1 1540 may include, in the RRCReconfiguration message of operation 1507, information notifying to release configuration information configured for the UE 1500, the configuration information being required for performing layer-2 sidelink relay data transmission and reception to and from the layer-2 sidelink relay 1550.

According to an embodiment, base station 1 1540 may transmit, in operation 1508 to the layer-2 sidelink relay 1550 currently connected to the UE 1500, a message indicating to release configuration information required to perform layer-2 sidelink relay data transmission and reception to and from the UE 1500. In addition, in case that the layer-3 sidelink relay 1530 to which the UE 1500 is to be newly connected is in an RRC_CONNECTED state, base station 1 1540 or the target base station may transmit layer-2 sidelink relay configuration information to the layer-3 sidelink relay 1530 in operation 1509.

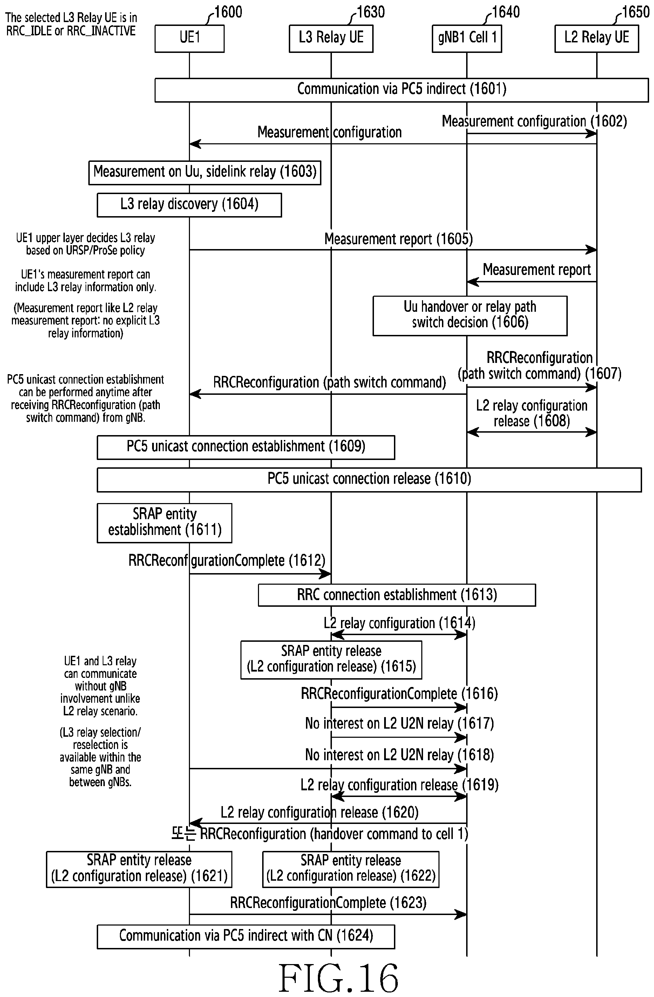

According to an embodiment, the layer-3 sidelink relay 1530 may be managed as a layer-2 sidelink relay to base station 1 1540 or the target base station, or may be in an RRC_IDLE state or an RRC_INACTIVE state other than the RRC_CONNECTED state. In case that the layer-3 sidelink relay 1530 is in the RRC_CONNECTED state, the layer-3 sidelink relay 1530 may acquire the layer-2 sidelink relay configuration information from a connected base station. In case that the layer-3 sidelink relay 1530 is not in the RRC_CONNECTED state, the layer-3 sidelink relay 1530 may perform a procedure of acquiring layer-2 sidelink relay configuration information from a connected base station (e.g., see FIG. 16) after transitioning to the RRC_CONNECTED state as in a general layer-2 sidelink path switching procedure, or since the layer-3 sidelink relay 1530 does not need layer-2 sidelink relay configuration information, a procedure of notifying the base station that the layer-3 sidelink relay 1530 is no longer interested in layer-2 sidelink relay may be performed instead of the procedure of acquiring the layer-2 sidelink relay configuration information, thereby stopping the operation as a layer-2 sidelink relay. The procedure of notifying the base station that the layer-3 sidelink relay 1530 is no longer interested in layer-2 sidelink relay will be described later.

According to an embodiment, the UE 1500 may perform a PC5 unicast connection establishment procedure with respect to the layer-3 sidelink relay 1530 in operation 1510. The UE 1500 may perform a PC5 unicast connection release procedure with respect to the layer-2 sidelink relay 1550 in operation 1511. The UE 1500 and the layer-3 sidelink relay 1530 may use the layer-2 configuration, which is acquired from base station 1 1540 in each of operations 1507 and 1509, to configure a sidelink relay adaptation layer protocol (SRAP) entity for layer-2 sidelink relay and perform an operation of processing the configuration for layer-2 sidelink relay, in operations 1512 and 1513. The configuration information for layer-2 sidelink relay, which the UE 1500 and the layer-3 sidelink relay 1530 acquire from base station 1 1540, may include at least some of information in [Table 13] below.

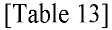

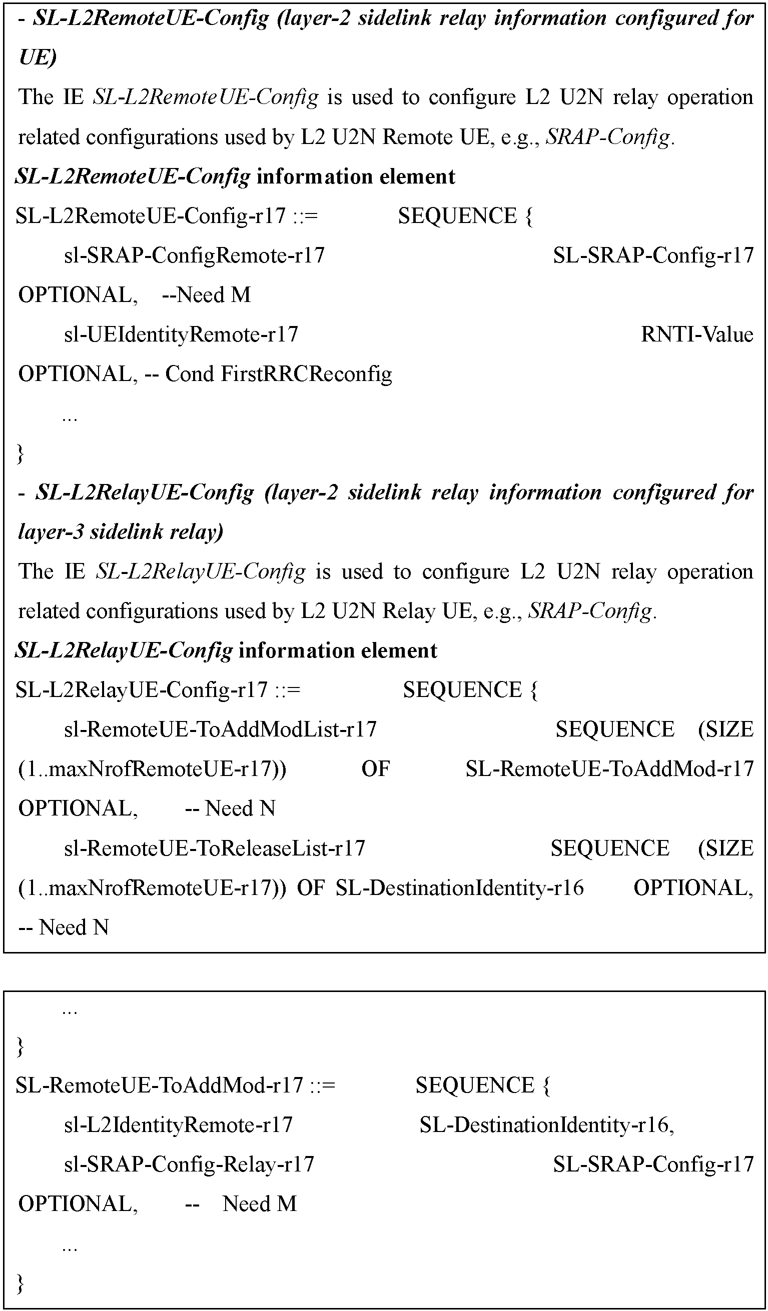

According to an embodiment, the UE 1500 may configure an RRCReconfigurationComplete message to notify completion of the sidelink path switching procedure according to the indication of base station 1 1540 in operation 1507, and transmit the message to base station 1 1540 via relay transmission of the layer-3 sidelink relay in operation 1514. Since the UE 1500 and the layer-3 sidelink relay 1530 are able to perform layer-3 sidelink relay operations, there is no need to maintain the layer-2 sidelink relay configuration information for layer-2 sidelink relay, which has been configured by base station 1 1540. The UE 1500 and the layer-3 sidelink relay 1530 may transmit, to base station 1 1540, an RRC message including information indicating no interest in layer-2 U2N relay in operations 1516 and 1515 in order to release the unnecessarily configured SRAP entity for layer-2 sidelink relay and the configuration for layer-2 sidelink relay. An example of the RRC message that the UE 1500 and the layer-3 sidelink relay 1530 may transmit in operations 1516 and 1515 may include a SidelinkUEInformationNR message. A procedure performed by the UE 1500 and the layer-3 sidelink relay 1530 to process the SidelinkUEInformationNR message transmitted to release the layer-2 sidelink relay configuration and an example of the message are as in [Table 14] below.

According to an embodiment, the current SidelinkUEInformationNR message may be used to acquire layer-2 sidelink relay configuration information from the base station or to report the same to the base station, the layer-2 sidelink relay configuration information being required for the UE and sidelink relay, which are capable of supporting layer-2 U2N relay, to operate as a layer-2 U2N relay UE or as a layer-2 U2N remote UE. In the disclosure, the SidelinkUEInformationNR message may be used for the UE and/or the layer-3 sidelink relay, which intend to perform a layer-3 sidelink relay operation, to release the unnecessary layer-2 sidelink relay configuration information configured by the base station.

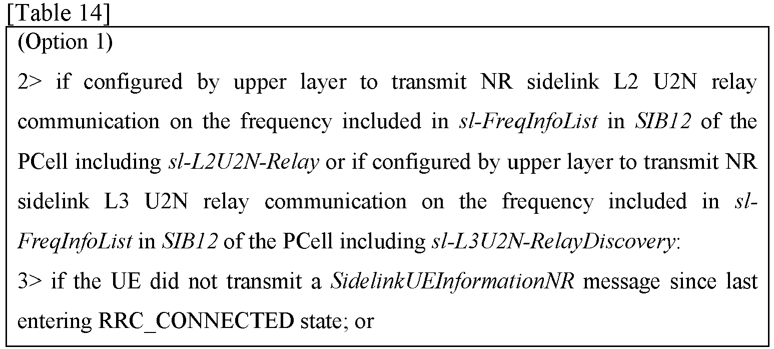

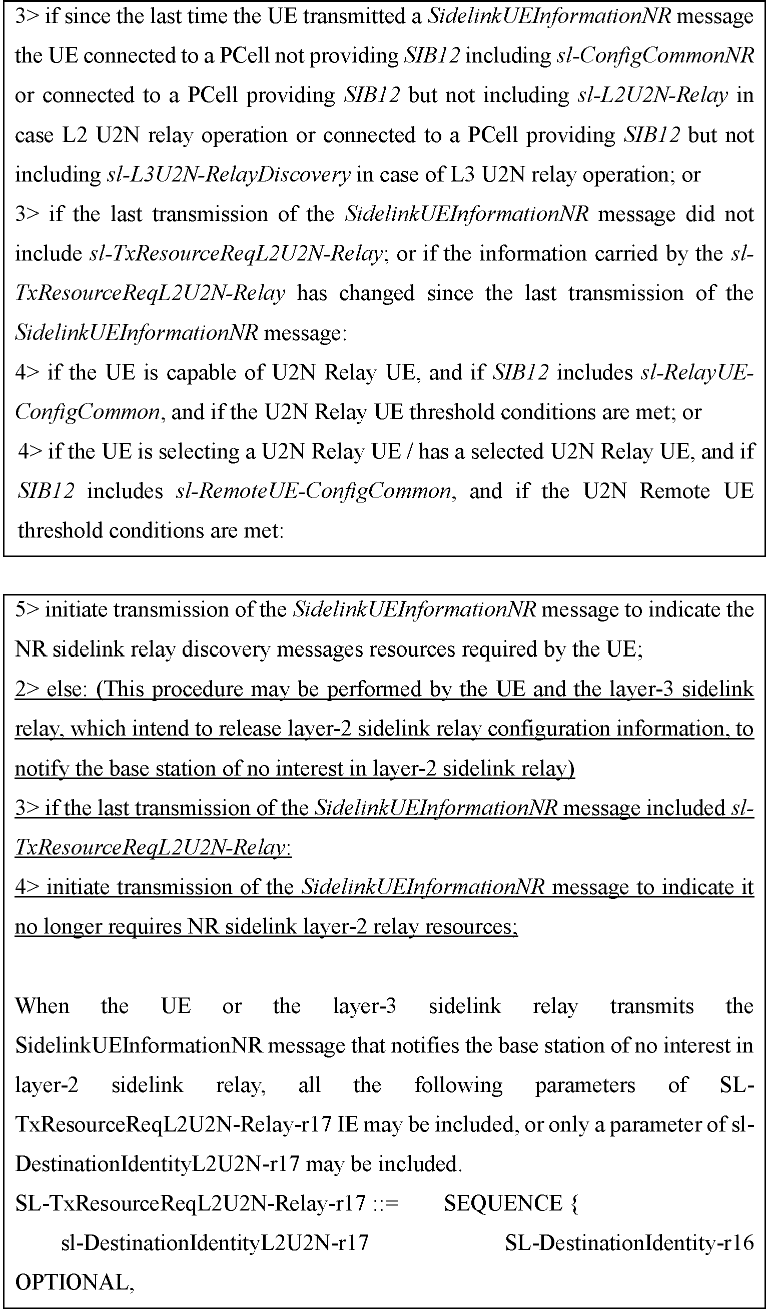

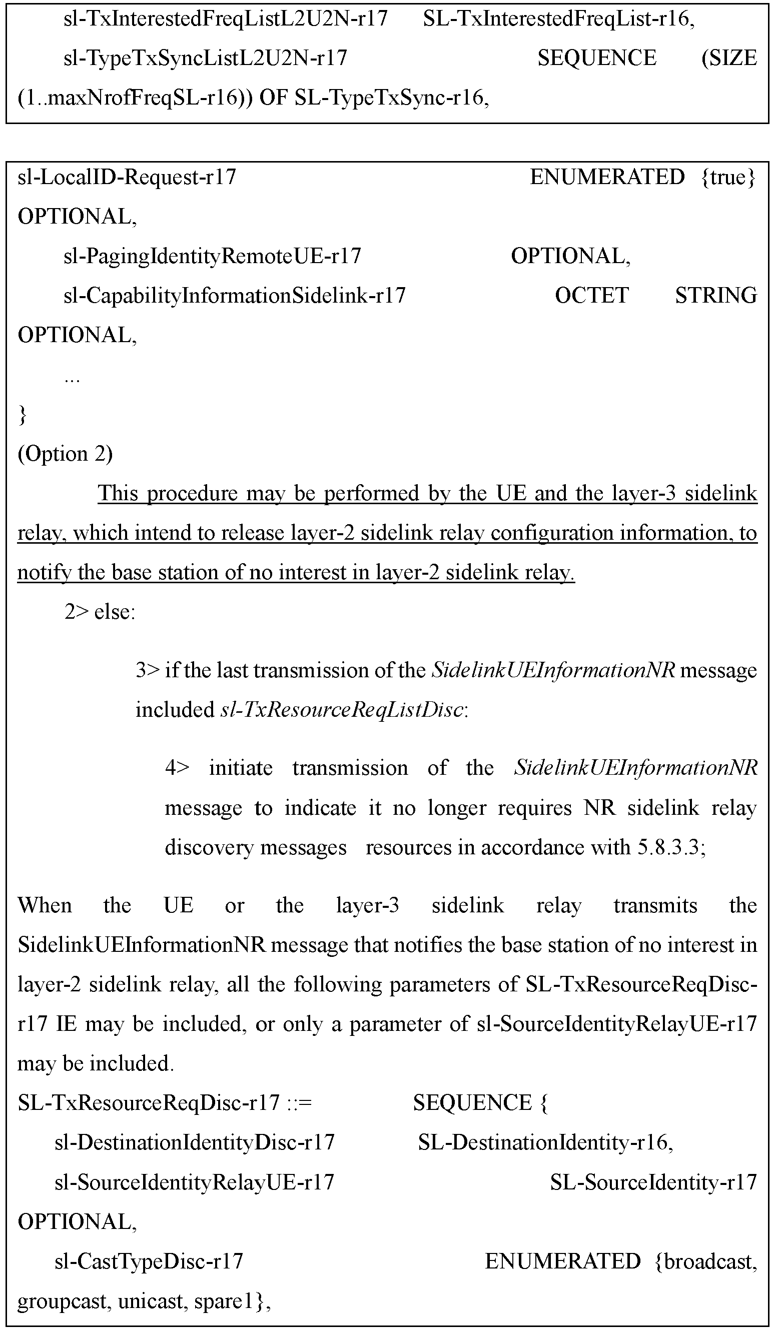

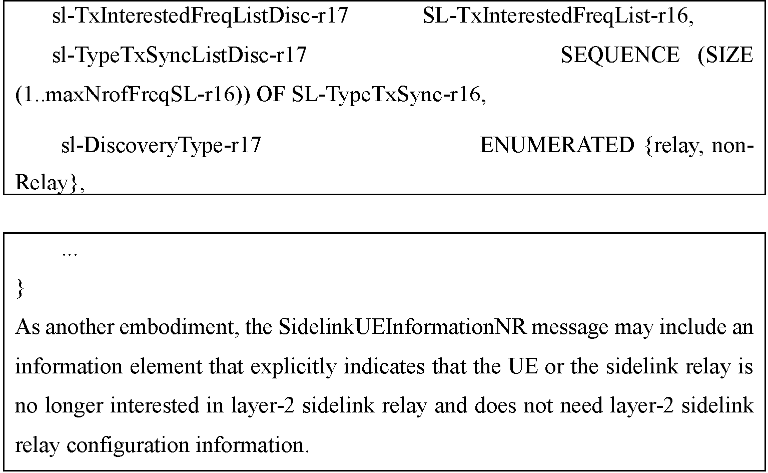

According to an embodiment, when base station 1 1540 receives, from the UE 1500 and the layer-3 sidelink relay 1530, the SidelinkUEInformationNR message reporting that the layer-2 U2N relay operation will no longer be performed, base station 1 1540 may transmit or provide RRC messages to the UE 1500 and the layer-3 sidelink relay 1530 to release the layer-2 sidelink relay configuration information in operations 1518 and 1517, respectively. Base station 1 1540 may transmit or provide RRCReconfiguration with sync (as handover command) which indicates path switching to the UE 1500 so that the UE 1500 is directly connected to the cell of base station 1 1540.

According to an embodiment, the UE 1500 and the layer-3 sidelink relay 1530 may process indication information of operations 1518 and 1517, and release the layer-2 sidelink relay configuration information (including SRAP layer entity configuration) in operations 1519 and 1520. The UE 1500 may transmit an RRCReconfigurationComplete message to base station 1 1540 in operation 1521. The UE 1500 may perform data transmission and reception to and from the network via relay transmission of the layer-3 sidelink relay 1530 in operation 1522. The UE 1500 may perform a sidelink relay change procedure by discovering and/or selecting a layer-3 sidelink other than the layer-3 sidelink relay 1530 without involvement of base station 1 1540.

FIG. 16 is a diagram illustrating a sidelink relay path switching operation of a UE between layer-3 sidelink relay and layer-2 sidelink relay according to an embodiment of the disclosure.

Referring to FIG. 16, a UE 1600 according to an embodiment of the disclosure may perform data transmission and reception to and from base station 1 1640 via relay transmission of a layer-2 sidelink relay 1650 in operation 1601. The UE 1600 may support a connection to a layer-3 sidelink relay and support a connection to a layer-2 sidelink relay. Since supporting of layer-3 sidelink relay by the UE 1600 does not need to be reported to base station 1 1640, i.e., supporting of layer-3 sidelink relay by the UE 1600 may be transparent to base station 1 1640, whether the UE 1600 supports layer-3 sidelink relay may not be notified to base station 1 1640, and the UE 1600 may inform base station 1 1640 about capability information regarding supporting of layer-2 sidelink relay. The UE 1600 may be known to base station 1 1640, as a UE which is able to support a connection to a layer-2 sidelink relay.

According to an embodiment, base station 1 1640 may support handover and layer-2 sidelink relay path switching of the UE 1600, and may configure a measurement configuration message and transmit the same to the UE 1600 via relay transmission of the layer-2 sidelink relay 1650 in operation 1602. The measurement configuration of operation 1602 may include configuration information for a Uu measurement object, a sidelink relay measurement object, and a measurement report, for example, at least some of the information in [Table 1], [Table 2], and/or [Table 3].

According to an embodiment, the UE 1600 may perform Uu cell and layer-2 sidelink relay measurement in operation 1603, based on the measurement configuration information of operation 1602. The UE 1600 may determine or identify that a connection to a layer-3 sidelink relay is required instead of the connection to the layer-2 sidelink relay. The determination that a connection to a layer-3 sidelink relay is required may be made by a higher layer of the UE 1600 according to a URSP or a ProSe policy. The UE 1600 may perform measurement on layer-3 side link relay while measuring a Uu cell, based on the measurement configuration information of operation 1602.

According to an embodiment, the UE 1600 may perform a layer-3 sidelink relay discovery procedure in operation 1604. The UE 1600 may transmit a measurement report as measurement results to base station 1 1640 via relay transmission of the layer-2 sidelink relay 1650 in operation 1605 according to the layer-3 sidelink relay measurement in operation 1603, the layer-3 sidelink relay discovery in operation 1604, and/or determination criteria for layer-3 sidelink relay, which is determined by the higher layer of the UE 1600.

According to an embodiment, when configuring the measurement report, the UE 1600 may perform at least one or a combination of procedures in [Table 7], [Table 8], and [Table 9]. When the UE 1600 determines that a connection to a layer-3 sidelink relay is required instead of the connection to the layer-2 sidelink relay, the measurement report of operation 1605 may be configured to include a measurement result for layer-3 sidelink relay. A case where the UE 1600 includes the measurement result for layer-3 sidelink relay may correspond to a case where a measurement object corresponding to the layer-2 sidelink relay of the measurement configuration provided by base station 1 1640 in operation 1602 is also applicable to layer-3 sidelink relay.

According to an embodiment, base station 1 1640 has configured the measurement and report configuration applicable to layer-2 sidelink relay, but if the measurement and report configuration for layer-2 sidelink relay is determined to be applicable to layer-3 sidelink relay, the UE 1600 may use the configuration for measurement on layer-3 sidelink relay, and transmit a result of the measurement on layer-3 sidelink relay to base station 1 1640 by including the same in the measurement report. In addition, in case that the measurement and report configuration, which has been configured by base station 1 1640 and is applicable to layer-2 sidelink relay, is determined or identified not to be applicable to layer-3 sidelink relay, the UE 1600 may configure the measurement report not to include the measurement result for sidelink relay, and transmit or provide the measurement report to base station 1 1640. The measurement report of operation 1605 may include a result of Uu cell measurement. Base station 1 1640 may determine and process the layer-3 sidelink relay, which is included in the measurement report transmitted by the UE 1600, as layer-2 sidelink relay in operation 1605.

According to an embodiment, base station 1 1640 may determine or identify handover to a Uu cell or path switching to a sidelink relay in operation 1606 by referring to the UE measurement result of operation 1605. For the determination of operation 1606, base station 1 1640 may exchange, with a target base station, information for inter-base station handover or relay path switching with respect to a sidelink relay or a cell belonging to the target base station, based on the measurement result report of the UE 1600. Base station 1 1640 may exchange, with the target base station via an inter-node message, sidelink relay information managed by base stations. Base station 1 1640 may exchange, via the inter-node message, information on the cell of the target base station or the sidelink relay of the target base station, to which the UE may perform handover and sidelink relay path switching, based on the Uu link measurement result and sidelink measurement result reported by the UE for connection mode mobility (handover or sidelink relay path switching) of the UE.

According to an embodiment, in case that the UE performs a handover procedure to the cell of the target base station or performs a path switching procedure to the sidelink relay of the target base station, base station 1 1640 and the target base station may exchange, via the inter-node message, at least one or a combination of a Uu capability of the UE, a sidelink capability of the UE, Uu SRB/DRB configuration information of the UE, PC5 SRB/DRB configuration information of the UE, and PC5 SRB/DRB configuration information that may correspond to an end-to-end connection between the UE and the target base station, wherein the capabilities and the configuration information are required for establishing a connection to the cell of the target base station or to the sidelink relay of the target base station.

According to an embodiment of the disclosure, base station 1 1640 may transmit, to the UE 1600 in operation 1607, an RRCReconfiguration message indicating handover or sidelink relay path switching (e.g., determining sidelink path switching to a layer-3 sidelink relay 1630 in base station 1 1640 in the embodiment of FIG. 16) according to the determination of operation 1606. The RRCReconfiguration message of operation 1607 may be transmitted or provided to the UE 1600 by using relay transmission of the layer-2 sidelink relay 1650. In case that base station 1 1640 determines sidelink path switching of the UE 1600 from the layer-2 sidelink relay 1650 to the layer-3 sidelink relay 1630, base station 1 1640 may include, in the RRCReconfiguration message of operation 1607, information notifying to release configuration information configured for the UE 1600, the configuration information being required for performing layer-2 sidelink relay data transmission and reception to and from the layer-2 sidelink relay 1650.

According to an embodiment of the disclosure, base station 1 1640 may transmit, in operation 1608 to the layer-2 sidelink relay 1650 currently connected to the UE 1600, a message indicating to release configuration information required to perform layer-2 sidelink relay data transmission and reception to and from the UE 1600.

According to an embodiment, the UE 1600 may perform a PC5 unicast connection establishment procedure with respect to the layer-3 sidelink relay 1630 in operation 1609. The UE 1600 may perform a PC5 unicast connection release procedure with respect to the layer-2 sidelink relay 1650 in operation 1610. The UE 1600 may use the layer-2 configuration, which is acquired from base station 1 1640 in operation 1607, to configure a sidelink relay adaptation layer protocol (SRAP) entity for layer-2 sidelink relay and perform an operation of processing the configuration for layer-2 sidelink, in operation 1611.

According to an embodiment, the configuration information for layer-2 sidelink relay, which is acquired by the UE 1600 from base station 1 1640, may include at least some of information in [Table 13] below. The UE 1600 may transmit or provide an RRCReconfigurationComplete message to the layer-3 sidelink relay 1630 to transmit the RRCReconfigurationComplete message to base station 1 1640 so as to notify that the sidelink path switching has been completed. The layer-3 sidelink relay 1630 may perform an RRC connection establishment procedure with respect to base station 1 1640 so as to transition to the RRC_CONNECTED state, in operation 1613. It is obvious that, when the layer-3 sidelink relay 1630 is connected to a base station other than base station 1 1640, an operation of transitioning to the RRC_CONNECTED state may be performed in operation 1613 via the base station.

According to an embodiment, base station 1 1640 or the target base station may transmit or provide layer-2 sidelink relay configuration information to the layer-3 sidelink relay 1630 in operation 1614. The layer-3 sidelink relay 1630 may use the layer-2 configuration, which is acquired from base station 1 1640 in operation 1614, to configure a sidelink relay adaptation layer protocol (SRAP) entity for layer-2 sidelink relay and perform an operation of processing the configuration for layer-2 sidelink, in operation 1615. The configuration information for layer-2 sidelink relay, which is acquired by the layer-3 sidelink relay 1630 from base station 1 1640, may include at least some of information in [Table 13] below.

According to an embodiment, the layer-3 sidelink relay 1630 may transmit or provide, to base station 1 1640 in operation 1616, the RRCReconfigurationComplete message received from the UE 1600. Since the UE 1600 and the layer-3 sidelink relay 1630 are able to perform layer-3 sidelink relay operations, there is no need to maintain the layer-2 sidelink relay configuration information for layer-2 sidelink relay, which has been configured by base station 1 1640. The UE 1600 and the layer-3 sidelink relay 1630 may transmit, to base station 1 1640, RRC messages including information (e.g., no interest on layer 2 U2N relay) indicating no interest in layer-2 U2N relay in operations 1618 and 1617 in order to release the unnecessarily configured SRAP entity for layer-2 sidelink relay and the configuration for layer-2 sidelink relay.

According to an embodiment, an example of the RRC messages that the UE 1600 and the layer-3 sidelink relay 1630 may transmit in operations 1618 and 1617 may include a SidelinkUEInformationNR message. A procedure performed by the UE 1600 and the layer-3 sidelink relay 1630 to process the SidelinkUEInformationNR message transmitted to release the layer-2 sidelink relay configuration and the example of the messages may include [Table 14] below.

According to an embodiment, when base station 1 1640 receives, from the UE 1600 and the layer-3 sidelink relay 1630, the SidelinkUEInformationNR message for reporting that the layer-2 U2N relay operation will no longer be performed, base station 1 1640 may transmit, to the UE 1600 and the layer-3 sidelink relay 1630, RRC messages to release the layer-2 sidelink relay configuration information in operations 1620 and 1619, respectively.

According to an embodiment, base station 1 1640 may transmit, to the UE 1600, RRCReconfiguration with sync (as handover command) which indicates path switching, so that the UE 1600 is directly connected to the cell of base station 1 1640.

According to an embodiment, the UE 1600 and the layer-3 sidelink relay 1630 may process the indication information of operations 1620 and 1619, and release the layer-2 sidelink relay configuration information (including the SRAP layer entity configuration) in operations 1621 and 1622. The UE 1600 may transmit an RRCReconfigurationComplete message to base station 1 1640 in operation 1623. The UE 1600 may perform data transmission and reception to and from the network via relay transmission of the layer-3 sidelink relay 1630 in operation 1624. The UE 1600 may perform a sidelink relay change procedure by discovering and/or selecting a layer-3 sidelink other than the layer-3 sidelink relay 1630 without involvement of base station 1 1640.

In the procedures of FIGS. 15 and 16, the base station has no knowledge about the UE being interested in relay transmission of layer-3 sidelink relay rather than that of layer-2 sidelink relay, and causes the UE to perform a path switching procedure to layer-3 sidelink relay by using a general layer-2 sidelink relay path switching procedure. Therefore, the base station unnecessarily provides layer-2 sidelink relay configuration information to the UE and the layer-3 sidelink relay, and the UE and the layer-3 sidelink relay unnecessarily process the layer-2 sidelink relay configuration. In order for a base station, a UE, and/or a layer-3 sidelink relay not to process such unnecessary layer-2 sidelink relay configuration, there is a need for a method by which the base station is able to determine whether the UE supports a connection to a layer-2 sidelink relay and a connection to a layer-3 sidelink relay, whether the UE intends to perform path switching from a connection to a layer-2 sidelink relay to a connection to a layer-3 sidelink relay, or whether the UE intends to perform path switching from a connection to a layer-3 sidelink relay to a connection to a layer-2 sidelink relay.

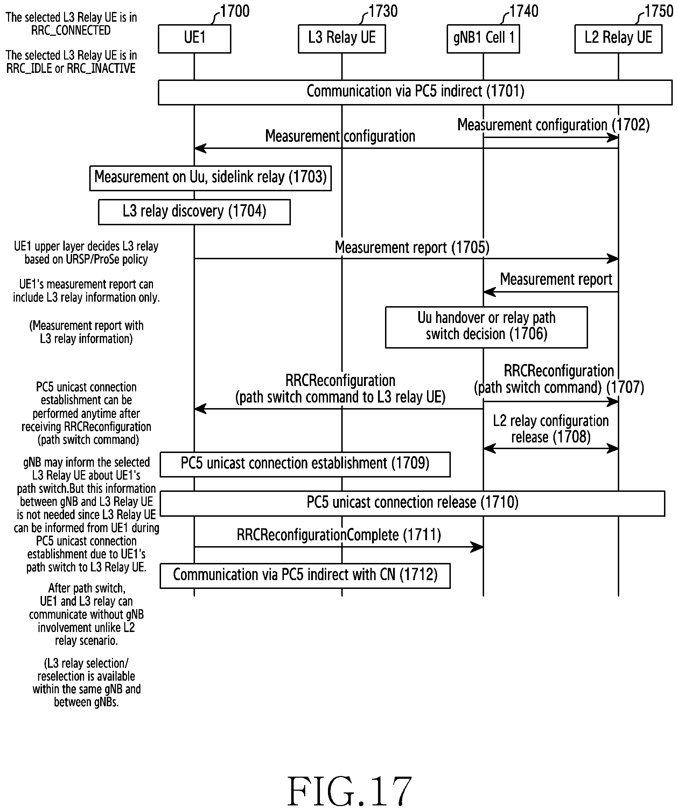

FIG. 17 is a diagram illustrating a sidelink relay path switching operation of a UE between layer-3 sidelink relay and layer-2 sidelink relay according to an embodiment of the disclosure.

Referring to FIG. 17, a UE 1700 according to an embodiment may perform data transmission and reception to and from base station 1 1740 via relay transmission of a layer-2 sidelink relay 1750 in operation 1701. The UE 1700 may support a connection to a layer-3 sidelink relay and support a connection to a layer-2 sidelink relay. The UE 1700 may report, to base station 1 1740, capability information regarding supporting of layer-3 sidelink relay and/or supporting of layer-2 sidelink relay.

According to an embodiment, base station 1 1740 may support handover and layer-2 sidelink relay path switching of the UE 1700, and may configure a measurement configuration message and transmit the same to the UE 1700 via relay transmission of the layer-2 sidelink relay 1750 in operation 1702.

According to an embodiment, the measurement configuration of operation 1702 may include configuration information for a Uu measurement object, a sidelink relay measurement object, and a measurement report, for example, at least some of the information in [Table 1], [Table 2], and/or [Table 3].

According to an embodiment, the UE 1700 may perform Uu cell and layer-2 sidelink relay measurement in operation 1703, based on the measurement configuration information of operation 1702. The UE 1700 may determine that a connection to a layer-3 sidelink relay is required instead of the connection to the layer-2 sidelink relay. The determination that a connection to a layer-3 sidelink relay is required may be made by a higher layer of the UE 1700 according to a URSP or a ProSe policy.

According to an embodiment, the UE 1700 may perform measurement on layer-3 side link relay while measuring a Uu cell in operation 1703, based on the measurement configuration information of operation 1702.

According to an embodiment, the UE 1700 may perform a layer-3 sidelink relay discovery procedure in operation 1704. The UE 1700 may transmit a measurement report as measurement results to base station 1 1740 via relay transmission of the layer-2 sidelink relay 1750 in operation 1705 according to the layer-3 sidelink relay measurement in operation 1703, the layer-3 sidelink relay discovery in operation 1704, and/or determination criteria for layer-3 sidelink relay, which is determined by the higher layer of the UE 1700.

When configuring the measurement report, the UE 1700 may perform at least one or a combination of procedures in [Table 7], [Table 8], and [Table 9]. When the UE 1700 determines that a connection to a layer-3 sidelink relay is required instead of the connection to the layer-2 sidelink relay, the measurement report of operation 1705 may be configured to include a measurement result for layer-3 sidelink relay. The measurement report that the UE 1700 transmits to base station 1 1740 may include measurement results for layer-3 sidelink relay in an RRC_CONNECTED state, layer-3 sidelink relay in an RRC_IDLE state, and/or layer-3 sidelink relay in an RRC_INACTIVE state. A case where the UE 1700 includes the measurement result for layer-3 sidelink relay may correspond to a case where a measurement object corresponding to the layer-2 sidelink relay of the measurement configuration provided by the base station 1740 in operation 1702 is also applicable to layer-3 sidelink relay.

According to an embodiment, base station 1 1740 has configured the measurement and report configuration applicable to layer-2 sidelink relay, but if the measurement and report configuration for layer-2 sidelink relay is determined to be applicable to layer-3 sidelink relay, the UE 1700 may use the configuration for measurement on layer-3 sidelink relay, and transmit a result of the measurement on layer-3 sidelink relay to base station 1 1740 by including the same in the measurement report.

According to another embodiment, base station 1740 may configure a measurement configuration including a measurement object corresponding to layer-3 sidelink relay, based on the capability information of the UE 1700 regarding supporting of layer-3 sidelink relay, and provide the measurement configuration to the UE 1700. In case that path switching to layer-3 sidelink relay is determined or identified to be necessary, the UE 1700 may process measurement and reporting of layer-3 sidelink relay based on the measurement object corresponding to layer-3 sidelink relay.

According to an embodiment, the UE 1700 may add a result of the measurement on layer-3 side link relay to the measurement report, and transmit or provide the measurement report to base station 1 1740 in operation 1705. When transmitting the measurement result for layer-3 sidelink relay in the measurement report, the UE 1700 may provide base station 1 1740 with indication information (e.g., a relay type) indicating that the measurement result is for layer-3 sidelink relay. When transmitting the measurement result for layer-2 sidelink relay in the measurement report, the UE 1700 may transmit or provide, to base station 1 1740, indication information (e.g., a relay type) indicating that the measurement result is for layer-2 sidelink relay.

According to an embodiment, when transmitting the measurement result for layer-3 sidelink relay in the measurement report, the UE 1700 may classify indication information, which indicates that the measurement result is for layer-3 sidelink relay, as release information of the standard (e.g., in case that the information is indicated as r18, the base station determines that the sidelink relay path switching procedure for layer-3 sidelink relay is supported in release18), and provides the indication information to base station 1 1740. In addition, in case that the measurement and report configuration, which has been configured by base station 1 1740 and is applicable to layer-2 sidelink relay, is determined or identified not to be applicable to layer-3 sidelink relay, the UE 1700 may configure the measurement report not to include the measurement result for sidelink relay, and transmit the measurement report to base station 1 1740. The measurement report of operation 1705 may include a result of Uu cell measurement. The base station 1 1740 may determine and process, as a layer-3 sidelink relay, the layer-3 sidelink relay included in the measurement report transmitted by the UE 1700 in operation 1705.

According to an embodiment, base station 1 1740 may determine handover to a Uu cell or path switching to a sidelink relay in operation 1706 by referring to the UE measurement result of operation 1705. The UE 1700 may determine or identify sidelink relay path switching to a layer-2 sidelink relay or sidelink relay path switching to a layer-3 sidelink relay, and the UE 1700 may add the measurement result for layer-2 sidelink relay to the measurement report if sidelink relay path switching to a layer-2 sidelink relay is required, and may add the measurement result for layer-3 sidelink relay to the measurement report in case that sidelink relay path switching to a layer-3 sidelink relay is required.

According to an embodiment, in case that base station 1 1740 is able to distinguish the measurement report of the UE 1700 for layer-2 sidelink relay or the measurement report for layer-3 sidelink relay, then in operation 1706, base station 1 1740 may determine or identify that the UE 1700 makes a direct connection to a cell or performs path switching to a layer-2 sidelink relay, or base station 1 1740 may determine or identify that the UE 1700 makes a direct connection to a cell or performs path switching to a layer-3 sidelink relay.

According to an embodiment, in case that the base station 1 1740 determines path switching to a layer-3 sidelink relay, the layer-3 sidelink relay determined by the base station 1 1740 may be a relay in an RRC_CONNECTED state, an RRC_INACTIVE state, or an RRC_IDLE state. For the determination of operation 1706, the base station 1 1740 may exchange, with a target base station, information for inter-base station handover or relay path switching with respect to a sidelink relay or a cell belonging to the target base station, based on the measurement result report of the UE 1700.

According to an embodiment, the base station 1 1340 may exchange, with the target base station via an inter-node message, sidelink relay information managed by base stations. The base station 1 1740 may exchange, via the inter-node message, information on the cell of the target base station or the sidelink relay of the target base station, to which the UE may perform handover and sidelink relay path switching, based on the Uu link measurement result and sidelink measurement result reported by the UE for connection mode mobility (e.g., handover or sidelink relay path switching) of the UE.

According to an embodiment, in case that the UE performs a handover procedure to the cell of the target base station or performs a path switching procedure to the sidelink relay of the target base station, base station 1 1740 and the target base station may exchange, via the inter-node message, at least one or a combination of a Uu capability of the UE, a sidelink capability of the UE, Uu SRB/DRB configuration information of the UE, PC5 SRB/DRB configuration information of the UE, PC5 SRB/DRB configuration information that may correspond to an end-to-end connection between the UE and the target base station, and information on the UE 1700 performing path switching to a layer-3 sidelink relay, wherein the capabilities and the information are required for establishing a connection to the cell of the target base station or to the sidelink relay of the target base station.

According to an embodiment, in operation 1707, base station 1 1740 may transmit or provide, to the UE 1700, an RRCReconfiguration message indicating handover or sidelink relay path switching (determining sidelink path switching to a layer-3 sidelink relay 1730 in base station 1 1740 in the embodiment of FIG. 17) according to the determination of operation 1706. The RRCReconfiguration message of operation 1707 may be transmitted or provided to the UE 1700 by using relay transmission of the layer-2 sidelink relay 1750. In case that the base station 1 1740 determines path switching of the UE 1700 to a layer-2 sidelink relay, layer-2 sidelink relay configuration information may be provided in the RRCReconfiguration message. In case that the base station 1 1740 determines path switching of the UE 1700 to a layer-3 sidelink relay, no separate configuration information needs to be provided in the RRCReconfiguration message, other than information indicating the path switching to a layer-3 sidelink relay. In case that base station 1 1740 determines path switching of the UE 1700 from a layer-2 sidelink relay to a layer-3 sidelink relay, base station 1 1740 may include, in the RRCReconfiguration message of operation 1707, information notifying to release configuration information configured for the UE 1700, the configuration information being required for performing layer-2 sidelink relay data transmission and reception.

According to an embodiment, in operation 1708, base station 1 1740 may transmit or provide, to the layer-2 sidelink relay 1750 currently connected to the UE 1700, a message indicating to release configuration information required for performing layer-2 sidelink relay data transmission and reception to and from the UE 1700.

According to an embodiment, the UE 1700 may perform a PC5 unicast connection establishment procedure with respect to the layer-3 sidelink relay 1730 in operation 1709. The UE 1700 may perform a PC5 unicast connection release procedure with respect to the layer-2 sidelink relay 1750 in operation 1710. The PC5 unicast connection establishment procedure with respect to the layer-3 sidelink relay may be performed at any time after the UE 1700 receives, from base station 1 1740, the RRCReconfiguration message including the indication of path switching to the layer-3 sidelink relay.

According to an embodiment, base station 1 1740 may inform the layer-3 sidelink relay 1730 about information on sidelink relay path switching of the UE 1700, or signaling for exchanging the information on sidelink relay path switching of the UE 1700 may not be required between base station 1 1740 and the layer-3 sidelink relay 1730. The layer-3 sidelink relay 1730 may determine or identify that the UE 1700 has performed sidelink relay path switching, while performing the PC5 unicast connection establishment procedure with respect to the UE 1700.

According to an embodiment, in case that a direct connection to the base station 1 1740 is possible using a cell, the UE 1700 may transmit, in operation 1711, an RRCReconfigurationComplete message informing base station 1 1740 that the sidelink relay path switching indicated in the RRCReconfiguration message of operation 1707 has been processed.

According to another embodiment, in case that a direct connection to base station 1 1740 by using a cell is determined to be impossible, the UE 1700 may transmit, to the layer-2 sidelink relay 1750, an RRCReconfigurationComplete message informing base station 1 1740 that the sidelink relay path switching indicated in the RRCReconfiguration message of operation 1710 has been processed, and then perform a PC5 unicast connection release procedure with respect to the layer-2 sidelink relay 1750 of operation 1710.

According to an embodiment, the UE 1700 may perform data transmission and reception to and from the network via relay transmission of the layer-3 sidelink relay 1730 in operation 1712. The UE 1700 may perform a sidelink relay change procedure by discovering and selecting a layer-3 sidelink other than the layer-3 sidelink relay 1730 without involvement of base station 1 1740.

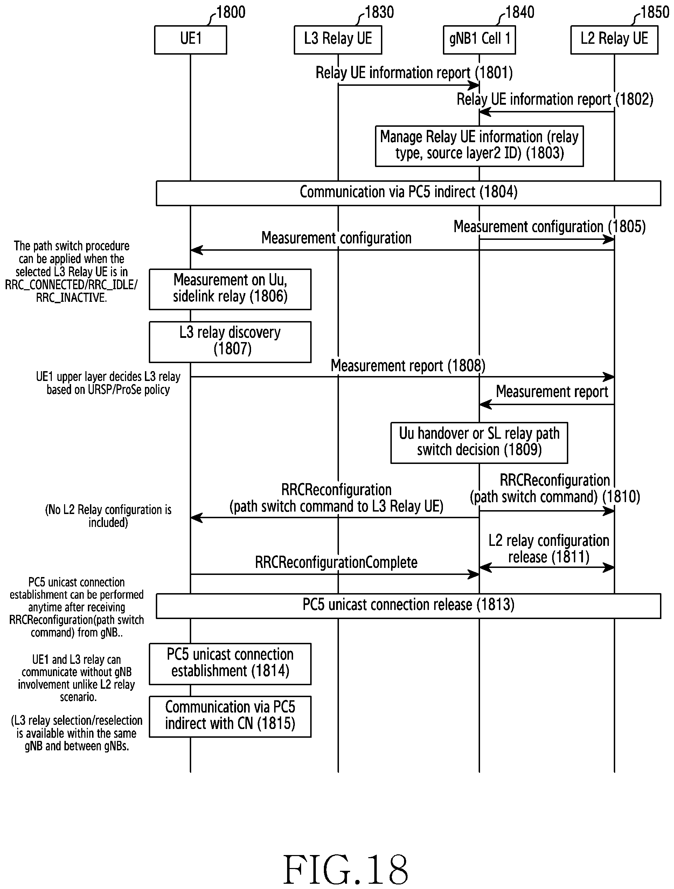

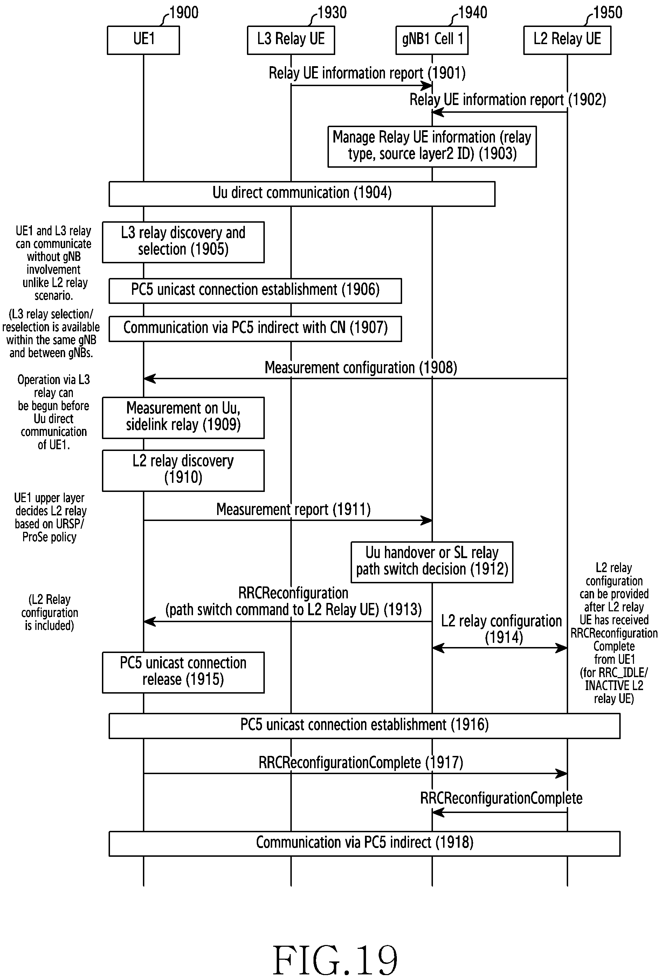

Referring to FIG. 18 and FIG. 19, descriptions are provided for an embodiment where, in case that a UE is able to perform data transmission and reception to and from a network via relay transmission of a layer-3 sidelink relay, and the UE is able to perform data transmission and reception to and from the network via relay transmission of a layer-2 sidelink relay, the UE that has been connected to the layer-2 sidelink relay performs a sidelink path switching procedure to the layer-3 sidelink relay. In addition, descriptions are provided for an embodiment where the UE that has been connected to a layer-3 sidelink relay performs a sidelink path switching procedure to a layer-2 sidelink relay.

In the embodiments of FIGS. 18 and 19, a layer-3 sidelink relay and a layer-2 sidelink relay may inform a base station about relay type information (e.g., a layer-3 sidelink relay type or a layer-2 sidelink relay type). The base station may determine or identify relay type information of a sidelink relay. In case that the UE needs to perform sidelink relay path switching, the base station may configure a measurement configuration according to the relay type information, process a measurement report according to the relay type information, and process configuration information of the sidelink relay path switching procedure according to the relay type information of a target sidelink relay.

According to an embodiment of the disclosure, in case that a sidelink relay transmits its relay type information to the base station, the sidelink relay may transmit capability information to the base station, as in the example of [Table 10]. In addition, the sidelink relay may transmit, to the base station, a SidelinkUEInformationNR message including information of [Table 15] below. In addition, the information in [Table 15] may be used when the UE informs the base station about a relay type of operations to be performed. The sidelink relay and the UE may inform the base station about source identifier information thereof.

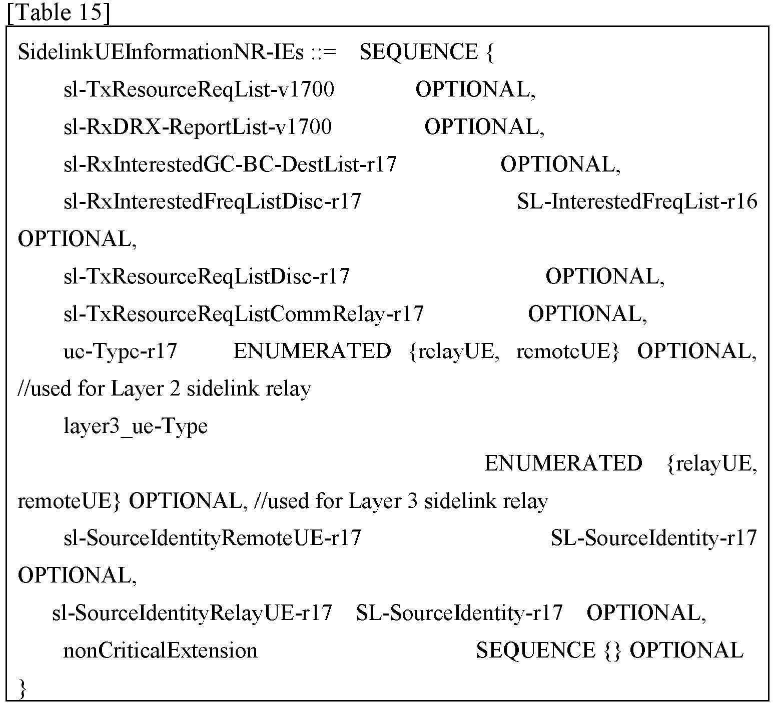

FIG. 18 is a diagram illustrating a sidelink relay path switching operation of a UE between layer-3 sidelink relay and layer-2 sidelink relay according to an embodiment of the disclosure.

Referring to FIG. 18, a layer-3 sidelink relay 1830 according to an embodiment of the disclosure may provide base station 1 1840 with information on layer-3 sidelink relay in operation 1801, wherein the layer-3 sidelink relay 1830 is connected to a base station 1 1840.

According to an embodiment, a layer-2 sidelink relay 1850 may provide base station 1 1840 with information on layer-2 sidelink relay in operation 1802, wherein the layer-2 sidelink relay 1850 is connected to the base station 1 1840. Information on the sidelink relays in operations 1801 and 1802 may include at least one or a combination of [Table 10] and [Table 15].

According to an embodiment, the base station 1 1840 may manage information (e.g., relay types, source identifiers of the relays, etc.) on the layer-3 sidelink relay and/or layer-2 sidelink relay which are connected to base station 1 1840 itself, in operation 1803.

According to an embodiment, a UE 1800 may perform data transmission and reception to and from base station 1 1840 via relay transmission of the layer-2 sidelink relay 1850 in operation 1804. The UE 1800 may support a connection to a layer-3 sidelink relay and support a connection to a layer-2 sidelink relay. The UE 1800 may report, to base station 1 1840, capability information regarding supporting of layer-3 sidelink relay and/or supporting of layer-2 sidelink relay. Sidelink relay support information of the UE 1800 may be transmitted to base station 1 1840 by using at least one or a combination of [Table 10] and [Table 15].

According to an embodiment, base station 1 1840 may support handover and sidelink relay path switching of the UE 1800, and the base station 1 1840 may configure a measurement configuration message and transmit the same to the UE 1800 via relay transmission of the layer-2 sidelink relay 1850 in operation 1805. The measurement configuration of operation 1805 may include configuration information for a Uu measurement obj ect, a sidelink relay measurement object, and a measurement report, for example, at least some of the information in [Table 1], [Table 2], and/or [Table 3]. The base station 1 1840 may configure a measurement object including sidelink frequency information corresponding to layer-3 sidelink relay and a measurement object including sidelink frequency information corresponding to layer-2 sidelink relay, based on the sidelink relay information managed in operation 1803.

According to an embodiment, the UE 1800 may perform measurement on Uu cell, layer-2 sidelink relay, and layer-3 sidelink relay in operation 1806, based on the measurement configuration information of operation 1805. The UE 1800 may determine or identify that a connection to a layer-3 sidelink relay is required instead of the connection to the layer-2 sidelink relay. The determination that a connection to a layer-3 sidelink relay is required may be made by a higher layer of the UE 1800 according to a URSP or a ProSe policy. The UE 1800 may perform measurement on layer-3 side link relay while measuring a Uu cell, based on the measurement configuration information of operation 1805.

According to an embodiment, the UE 1800 may perform a layer-3 sidelink relay discovery procedure in operation 1807. The UE 1800 may transmit or provide a measurement report as measurement results to base station 1 1840 via relay transmission of the layer-2 sidelink relay 1850 in operation 1808 according to the layer-3 sidelink relay measurement in operation 1806, the layer-3 sidelink relay discovery in operation 1807, and/or determination criteria for layer-3 sidelink relay, which is determined by the higher layer of the UE 1800.

According to an embodiment, when the UE 1800 determines that a connection to a layer-3 sidelink relay is required instead of the connection to the layer-2 sidelink relay, the measurement report of operation 1808 may be configured to include a measurement result for layer-3 sidelink relay. When configuring the measurement report by including measurement information on layer-3 sidelink relay, the UE 1800 may perform at least one or a combination of procedures in [Table 7], [Table 8], and [Table 9]. The measurement report that the UE 1800 transmits to base station 1 1840 may include measurement results for layer-3 sidelink relay in an RRC_CONNECTED state and layer-3 sidelink relay in an RRC_IDLE state or layer-3 sidelink relay in an RRC _INACTIVE state.

According to an embodiment, a case where the UE 1800 includes the measurement result for layer-3 sidelink relay may correspond to a case where the measurement object corresponding to the layer-2 sidelink relay of the measurement configuration provided by the base station 1840 in operation 1805 is also applicable to layer-3 sidelink relay. Base station 1 1840 has configured the measurement and report configuration applicable to layer-2 sidelink relay, but if the measurement and report configuration for layer-2 sidelink relay is determined to be applicable to layer-3 sidelink relay, the UE 1800 may use the configuration for measurement on layer-3 sidelink relay, and transmit a result of the measurement on layer-3 sidelink relay to base station 1 1840 by including the same in the measurement report.

According to another embodiment, the base station 1 1840 may configure a measurement configuration including the measurement object corresponding to layer-3 sidelink relay, based on the capability information of the UE 1800 regarding supporting of layer-3 sidelink relay and/or the sidelink relay information managed by base station 1 1840 in operation 1803, and provide the measurement configuration to the UE 1800. In case that path switching to layer-3 sidelink relay is determined to be necessary, the UE 1800 may process measurement and reporting of layer-3 sidelink relay, based on the measurement object corresponding to layer-3 sidelink relay.

According to an embodiment of the disclosure, the UE 1800 may add a result of the measurement on layer-3 side link relay to the measurement report, and transmit or provide the measurement report to base station 1 1840 in operation 1808. When transmitting the measurement result for layer-3 sidelink relay in the measurement report, the UE 1800 may provide base station 1 1840 with indication information (e.g., at least one or a combination of a relay type and a source identifier) indicating that the measurement result is for layer-3 sidelink relay. When transmitting the measurement result for layer-2 sidelink relay in the measurement report, the UE 1800 may provide or transmit, to base station 1 1840, indication information (e.g., at least one or a combination of a relay type and a source identifier) indicating that the measurement result is for layer-2 sidelink relay.

According to an embodiment, when transmitting the measurement result for layer-3 sidelink relay in the measurement report, the UE 1800 may classify indication information, which indicates that the measurement result is for layer-3 sidelink relay, as release information of the standard (e.g., in case that the information is indicated as r18, the base station determines that the sidelink relay path switching procedure for layer-3 sidelink relay is supported in release18), and provides the indication information to base station 1 1840. **In** addition, in case that the measurement and report configuration, which has been configured by base station 1 1840 and is applicable to layer-2 sidelink relay, is determined or identified not to be applicable to layer-3 sidelink relay, the UE 1800 may configure the measurement report not to include the measurement result for sidelink relay, and transmit the measurement report to base station 1 1840. The measurement report of operation 1808 may include a result of Uu cell measurement. Base station 1 1840 may determine and process, as a layer-3 sidelink relay, the layer-3 sidelink relay included in the measurement report transmitted by the UE 1800 in operation 1808. Base station 1 1840 may determine whether the UE 1800 wants to connect to a layer-2 sidelink relay (e.g., path switching) or wants to connect to a layer-3 sidelink relay (e.g., path switching), based on the information included in the measurement report of the UE 1800 and the information managed in operation 1803, wherein base station 1 1840 may determine a connection to the layer-3 sidelink relay or a connection to the layer-2 sidelink relay, based on at least one or a combination of the relay type information and source identifier of the sidelink relay, which are reported by the UE 1800.

According to an embodiment of the disclosure, base station 1 1840 may determine or identify handover to a Uu cell or path switching to a sidelink relay in operation 1809 by referring to the UE measurement result of operation 1808. The UE 1800 may determine or identify sidelink relay path switching to a layer-2 sidelink relay or sidelink relay path switching to a layer-3 sidelink relay, and the UE 1800 may add the measurement result for layer-2 sidelink relay to the measurement report in case that sidelink relay path switching to a layer-2 sidelink relay is required, and may add the measurement result for layer-3 sidelink relay to the measurement report in case that sidelink relay path switching to a layer-3 sidelink relay is required.

If base station 1 1840 according to an embodiment is able to distinguish the measurement report of the UE 1800 for layer-2 sidelink relay or the measurement report for layer-3 sidelink relay, then in operation 1809, base station 1 1840 may determine that the UE 1800 makes a direct connection to a cell or performs path switching to a layer-2 sidelink relay, or base station 1 1840 may determine that the UE 1800 makes a direct connection to a cell or performs path switching to a layer-3 sidelink relay.

According to an embodiment, in case that base station 1 1840 determines path switching to a layer-3 sidelink relay, the layer-3 sidelink relay determined by base station 1 1840 may be a relay in an RRC_CONNECTED state, an RRC _INACTIVE state, or an RRC_IDLE state. For the determination of operation 1809, base station 1 1840 may exchange, with a target base station, information for inter-base station handover or relay path switching with respect to a sidelink relay or a cell belonging to the target base station, based on the measurement result report of the UE 1800. Base station 1 1840 may exchange, with the target base station via an inter-node message, sidelink relay information managed by base stations, and may exchange, via the inter-node message, information on the cell of the target base station or the sidelink relay of the target base station, to which the UE may perform handover and sidelink relay path switching, based on the Uu link measurement result and sidelink measurement result reported by the UE for connection mode mobility (e.g., handover or sidelink relay path switching) of the UE.

According to an embodiment, in case that the UE performs a handover procedure to the cell of the target base station or performs a path switching procedure to the sidelink relay of the target base station, base station 1 1840 and the target base station may exchange, via the inter-node message, at least one or a combination of a Uu capability of the UE, a sidelink capability of the UE, Uu SRB/DRB configuration information of the UE, PC5 SRB/DRB configuration information of the UE, PC5 SRB/DRB configuration information that may correspond to an end-to-end connection between the UE and the target base station, and information on the UE 1800 performing path switching to a layer-3 sidelink relay, wherein the capabilities and the information are required for establishing a connection to the cell of the target base station or to the sidelink relay of the target base station.

According to an embodiment, in operation 1810, base station 1 1840 may transmit or provide, to the UE 1800, an RRCReconfiguration message indicating handover or sidelink relay path switching (determining sidelink path switching to the layer-3 sidelink relay 1830 in base station 1 1840 in the embodiment of FIG. 18) according to the determination of operation 1809.

According to an embodiment, the RRCReconfiguration message of operation 1810 may be transmitted or provided to the UE 1800 by using relay transmission of the layer-2 sidelink relay 1850. In case that base station 1 1840 determines or identifies path switching of the UE 1800 to a layer-2 sidelink relay, layer-2 sidelink relay configuration information may be provided in the RRCReconfiguration message. In case that base station 1 1840 determines path switching of the UE 1800 to a layer-3 sidelink relay, no separate configuration information needs to be provided in the RRCReconfiguration message, other than information indicating the path switching to a layer-3 sidelink relay. Base station 1 1840 may include, in the RRCReconfiguration message of operation 1810, information indicating to release the layer-2 sidelink relay configuration information configured for data transmission and reception to and from the layer-2 sidelink relay 1850 that is currently connected to the UE 1800.

According to an embodiment, in operation 1811, base station 1 1840 may transmit or provide, to the layer-2 sidelink relay 1850 currently connected to the UE 1800, a message indicating to release configuration information required for performing layer-2 sidelink relay data transmission and reception to and from the UE 1800.

According to an embodiment, in case that a direct connection to base station 1 1840 is possible using a cell, the UE 1800 may transmit, in operation 1812, an RRCReconfigurationComplete message informing base station 1 1840 that the sidelink relay path switching indicated in the RRCReconfiguration message of operation 1810 has been processed.

According to another embodiment, in case that a direct connection to base station 1 1840 by using a cell is determined to be impossible, the UE 1800 may transmit, to the layer-2 sidelink relay 1850, an RRCReconfigurationComplete message informing base station 1 1840 that the sidelink relay path switching indicated in the RRCReconfiguration message of operation 1810 has been processed, and then perform a PC5 unicast connection release procedure with respect to the layer-2 sidelink relay 1850 of operation 1813. The UE 1800 may perform a PC5 unicast connection release procedure with respect to the layer-2 sidelink relay 1850 in operation 1813.

According to an embodiment, the UE 1800 may perform a PC5 unicast connection establishment procedure with respect to the layer-3 sidelink relay 1830 in operation 1814. The PC5 unicast connection establishment procedure with respect to the layer-3 sidelink relay 1830 may be performed at any time after the UE 1800 receives, from base station 1 1840, the RRCReconfiguration message including the indication of path switching to the layer-3 sidelink relay.

According to an embodiment, base station 1 1840 may inform the layer-3 sidelink relay 1830 about information on sidelink relay path switching of the UE 1800, or signaling for exchanging the information on sidelink relay path switching of the UE 1800 may not be required between base station 1 1840 and the layer-3 sidelink relay 1830. The layer-3 sidelink relay 1830 may determine or identify that the UE 1800 has performed sidelink relay path switching, while performing the PC5 unicast connection establishment procedure with respect to the UE 1800. The UE 1800 may perform data transmission and reception to and from the network via relay transmission of the layer-3 sidelink relay 1830 in operation 1815. The UE 1800 may perform a sidelink relay change procedure by discovering and/or selecting a layer-3 sidelink other than the layer-3 sidelink relay 1830 without involvement of base station 1 1840.

FIG. 19 is a diagram illustrating a sidelink relay path switching operation of a UE between layer-3 sidelink relay and layer-2 sidelink relay according to an embodiment of the disclosure.

Referring to FIG. 19, a layer-3 sidelink relay 1930 according to an embodiment may provide or transmit, to base station 1 1940, information on layer-3 sidelink relay in operation 1901, wherein the layer-3 sidelink relay 1930 is connected to base station 1 1940.

According to an embodiment of the disclosure, a layer-2 sidelink relay 1950 may provide base station 1 1940 with information on layer-2 sidelink relay in operation 1902, wherein the layer-2 sidelink relay 1950 is connected to base station 1 1940. Information on the sidelink relays in operations 1901 and 1902 may include at least one or a combination of [Table 10] and [Table 15].

According to an embodiment of the disclosure, base station 1 1940 may manage information (e.g., relay types, source identifiers of the relays, etc.) on the layer-3 sidelink relay and/or layer-2 sidelink relay which are connected to base station 1 1940 itself, in operation 1903.

According to an embodiment of the disclosure, the UE 1900 may transmit and receive data via a direct connection to base station 1 1940 in operation 1904. The UE 1900 may support a connection to a layer-3 sidelink relay and support a connection to a layer-2 sidelink relay. The UE 1900 may report, to base station 1 1940, capability information regarding supporting of layer-3 sidelink relay and/or supporting of layer-2 sidelink relay. Sidelink relay support information of the UE 1900 may be transmitted to base station 1 1940 by using at least one or a combination of [Table 10] and [Table 15].

According to an embodiment of the disclosure, the UE 1900 may perform discovery and selection procedures for layer-3 sidelink relay in operation 1905 without involvement of base station 1 1940.

According to an embodiment of the disclosure, the UE 1900 may select the layer-3 sidelink relay 1930 and perform a PC5 unicast connection establishment procedure in operation 1906. The UE 1900 may perform data transmission and reception to and from the network via the layer-3 sidelink relay 1930 in operation 1907. The embodiment of FIG. 19 illustrates a scenario in which the UE 1900 is able to perform data transmission and reception via a direct connection to base station 1 1940 and via relay transmission of the layer-3 sidelink relay 1930. Base station 1 1940 may have no knowledge about the UE 1900 being connected also to the layer-3 sidelink relay 1930, or may be aware or identify that the UE 1900 is being connected to the layer-3 sidelink relay 1930, based on the information in [Table 15] informed by the UE 1900.

According to an embodiment of the disclosure, base station 1 1940 may support handover and sidelink relay path switching of the UE 1900, and base station 1 1940 may configure a measurement configuration message and transmit the same to the UE 1900 in operation 1908. The measurement configuration of operation 1908 may include configuration information for a Uu measurement object, a sidelink relay measurement object, and a measurement report, for example, at least some of the information in [Table 1], [Table 2], and/or [Table 3]. Base station 1 1940 may configure a measurement object including sidelink frequency information corresponding to layer-3 sidelink relay and a measurement object including sidelink frequency information corresponding to layer-2 sidelink relay, based on the sidelink relay information managed in operation 1903.

According to an embodiment of the disclosure, the UE 1900 may perform measurement on Uu cell, layer-2 sidelink relay, and layer-3 sidelink relay in operation 1909, based on the measurement configuration information of operation 1908. The UE 1900 may determine that a connection to a layer-2 sidelink relay is required instead of the connection to the layer-3 sidelink relay. The determination that a connection to a layer-2 sidelink relay is required may be made by a higher layer of the UE 1900 according to a URSP or a ProSe policy. The UE 1900 may perform measurement on layer-2 side link relay while measuring a Uu cell, based on the measurement configuration information of operation 1908.

According to an embodiment of the disclosure, the UE 1900 may perform a layer-2 sidelink relay discovery procedure in operation 1910.

According to an embodiment of the disclosure, the UE 1900 may transmit a measurement report as measurement results to base station 1 1940 in operation 1911, based on the layer-2 sidelink relay measurement in operation 1909, the layer-2 sidelink relay discovery in operation 1910, and/or determination criteria for layer-3 sidelink relay, which is determined by the higher layer of the UE 1900.

According to an embodiment, when the UE 1900 determines that a connection to a layer-2 sidelink relay is required instead of the connection to the layer-3 sidelink relay, the measurement report of operation 1911 may be configured to include a measurement result for layer-2 sidelink relay. When configuring the measurement report by including measurement information on layer-2 sidelink relay, the UE 1900 may perform at least one or a combination of procedures in [Table 4], [Table 5], and [Table 6]. The measurement report that the UE 1900 transmits to base station 1 1940 may include measurement results for layer-2 sidelink relay in an RRC_CONNECTED state, layer-2 sidelink relay in an RRC_IDLE state, and/or layer-2 sidelink relay in an RRC_INACTIVE state. A case in which the UE 1900 includes the measurement result for layer-2 sidelink relay may be achieved base on the measurement object corresponding to the layer-3 sidelink relay of the measurement configuration provided by the base station 1940 in operation 1908.

According to an embodiment of the disclosure, the UE 1900 may add a result of the measurement on layer-2 side link relay to the measurement report, and transmit the measurement report to base station 1 1940 in operation 1911. When transmitting the measurement result for layer-2 sidelink relay in the measurement report, the UE 1900 may provide base station 1 1940 with a measurement report for a general layer-2 sidelink relay, which includes source identifier information of layer-2 sidelink relay.

According to another embodiment, when transmitting the measurement result for layer-2 sidelink relay in the measurement report, the UE 1900 may provide base station 1 1940 with indication information (e.g., at least one or a combination of a relay type and a source identifier) indicating that the measurement result is for layer-2 sidelink relay. **In** addition, the measurement report of operation 1911, which is transmitted by the UE 1900, may include a result of Uu cell measurement. Base station 1 1940 may determine whether the UE 1900 wants to connect to a layer-2 sidelink relay (e.g., path switching) or wants to connect to a layer-3 sidelink relay (e.g., path switching), based on the information included in the measurement report of the UE 1900 and the information managed in operation 1903, wherein base station 1 1940 may determine or identify a connection to the layer-3 sidelink relay or a connection to the layer-2 sidelink relay, based on at least one or a combination of the relay type information and source identifier of the sidelink relay, which are reported by the UE 1900.

According to an embodiment, base station 1 1940 may determine or identify handover to a Uu cell or path switching to a sidelink relay in operation 1912 by referring to the measurement report transmitted by the UE 1900 in operation 1911. The UE 1900 may determine sidelink relay path switching to a layer-2 sidelink relay or sidelink relay path switching to a layer-3 sidelink relay, and the UE 1900 may add the measurement result for layer-2 sidelink relay to the measurement report if sidelink relay path switching to a layer-2 sidelink relay is required, and may add the measurement result for layer-3 sidelink relay to the measurement report if sidelink relay path switching to a layer-3 sidelink relay is required.

According to an embodiment, in case that the base station 1 1940 is able to distinguish the measurement report of the UE 1900 for layer-2 sidelink relay or the measurement report for layer-3 sidelink relay, then in operation 1912, the base station 1 1940 may determine that the UE 1900 makes a direct connection to a cell or performs path switching to a layer-2 sidelink relay, or base station 1 1940 may determine that the UE 1900 makes a direct connection to a cell or performs path switching to a layer-3 sidelink relay. In case that the base station 1 1940 determines path switching to a layer-2 sidelink relay, the layer-2 sidelink relay determined by the base station 1 1940 may be a relay in an RRC_CONNECTED state, an RRC _INACTIVE state, or an RRC_IDLE state.

According to an embodiment, for the determination of operation 1912, the base station 1 1940 may exchange, with a target base station, information for inter-base station handover or relay path switching with respect to a sidelink relay or a cell belonging to the target base station, based on the measurement result report of the UE 1900. The base station 1 1940 may exchange, with the target base station via an inter-node message, sidelink relay information managed by base stations, and base station 1 1940 may exchange, via the inter-node message, information on the cell of the target base station or the sidelink relay of the target base station, to which the UE may perform handover and sidelink relay path switching, based on the Uu link measurement result and sidelink measurement result reported by the UE for connection mode mobility (e.g., handover or sidelink relay path switching) of the UE.

According to an embodiment, in case that the UE performs a handover procedure to the cell of the target base station or performs a path switching procedure to the sidelink relay of the target base station, base station 1 1940 and the target base station may exchange, via the inter-node message, at least one or a combination of a Uu capability of the UE, a sidelink capability of the UE, Uu SRB/DRB configuration information of the UE, PC5 SRB/DRB configuration information of the UE, PC5 SRB/DRB configuration information that may correspond to an end-to-end connection between the UE and the target base station, and information on the UE 1900 performing path switching to a layer-3 sidelink relay, wherein the capabilities and the information are required for establishing a connection to the cell of the target base station or to the sidelink relay of the target base station.

According to an embodiment, in operation 1913, base station 1 1940 may transmit or provide, to the UE 1900, an RRCReconfiguration message indicating the UE 1900 to perform handover or sidelink relay path switching (determining sidelink path switching to the layer-2 sidelink relay 1950 in base station 1 1940 in the embodiment of FIG. 19) according to the determination of operation 1912. In case that base station 1 1940 determines path switching of the UE 1900 to a layer-2 sidelink relay, layer-2 sidelink relay configuration information may be provided or transmitted in the RRCReconfiguration message.

According to an embodiment of the disclosure, in operation 1914, base station 1 1940 may provide configuration information, which is required for performing layer-2 sidelink relay data transmission and reception to and from the UE 1900, to the target layer-2 sidelink relay 1950 to which the UE 900 is to perform connection change. In case that the target sidelink relay 1950 is not in an RRC_CONNECTED state, the procedure of operation 1914 may be performed after the target sidelink relay 1950 transitions to the RRC_CONNECTED state. For example, the target sidelink relay 1950 may determine that the UE 1900 has transmitted an RRCReconfigurationComplete message to the target sidelink relay 1950, and perform transition to the RRC_CONNECTED state.

According to an embodiment of the disclosure, the UE 1900 may perform a PC5 unicast connection establishment procedure with respect to the layer-3 sidelink relay 1930 in operation 1915. The PC5 unicast connection release procedure of the UE 1900 and the layer-3 sidelink relay 1930 may be performed at any time after the UE 1900 receives, from base station 1 1940, the RRCReconfiguration message including the indication of path switching to the layer-2 sidelink relay.

According to an embodiment, base station 1 1940 may inform the layer-3 sidelink relay 1930 about information on sidelink relay path switching of the UE 1900, or signaling for exchanging the information on sidelink relay path switching of the UE 1900 may not be required between base station 1 1940 and the layer-3 sidelink relay 1930.

According to an embodiment, the UE 1900 may perform a PC5 unicast connection establishment procedure with respect to the layer-2 sidelink relay 1950 in operation 1916. The UE 1900 may transmit the RRCReconfigurationComplete message to base station 1 1940 in operation 1917 by using relay transmission of the layer-2 sidelink relay 1950. Then, the UE 1900 may perform data transmission and reception to and from base station 1 1940 via the layer-2 sidelink relay 1950 in operation 1918.

According to an embodiment, a method performed by a terminal in a wireless communication system may include receiving, from a base station, first configuration information for first sidelink measurement and second configuration information for second sidelink measurement, via a first user equipment to network (U2N) relay for sidelink communication, performing the first sidelink measurement for the first U2N relay based on the first configuration information, performing the second sidelink measurement for a second U2N relay based on the second configuration information, transmitting, if a result of the first sidelink measurement is lower (worse) than a first threshold value and a result of the second sidelink measurement is higher (better) than a second threshold value, information including the result of the first sidelink measurement and the result of the second sidelink measurement to the base station, receiving a message indicating to establish a connection for the sidelink communication with respect to the second U2N relay, based on the information, and establishing the connection to the second U2N relay based on the message.

According to an embodiment, the result of the first sidelink measurement and the result of the second sidelink measurement may each include a sidelink discovery reference signal received power (SD-RSRP) or a sidelink (SL)-RSRP.

According to an embodiment, the first configuration information may include information on the first threshold value and information on the second threshold value, and the second threshold value may be configured to be higher than the first threshold value.

According to an embodiment, the first U2N relay and the second U2N relay may each correspond to a layer 2 (L2) U2N relay or a layer 3 (L3) U2N relay.

According to an embodiment, a UE in a wireless communication system may include a transceiver and a controller coupled with the transceiver. According to an embodiment, the controller may be configured to receive, from a base station, first configuration information for first sidelink measurement and second configuration information for second sidelink measurement, via a first user equipment to network (U2N) relay for sidelink communication, perform the first sidelink measurement for the first U2N relay based on the first configuration information, perform the second sidelink measurement for a second U2N relay based on the second configuration information, transmit, if a result of the first sidelink measurement is lower (worse) than a first threshold value and a result of the second sidelink measurement is higher (better) than a second threshold value, information including the result of the first sidelink measurement and the result of the second sidelink measurement to the base station, receive a message indicating to establish a connection for the sidelink communication with respect to the second U2N relay, based on the information, and establish the connection to the second U2N relay based on the message.

According to an embodiment, the result of the first sidelink measurement and the result of the second sidelink measurement may each include a sidelink discovery reference signal received power (SD-RSRP) or a sidelink (SL)-RSRP.

According to an embodiment, the first configuration information may include information on the first threshold value and information on the second threshold value, and the second threshold value may be configured to be higher than the first threshold value.

According to an embodiment, the first U2N relay and the second U2N relay may each correspond to a layer 2 (L2) U2N relay or a layer 3 (L3) U2N relay.

According to an embodiment, a method performed by a first user equipment to network (U2N) relay for sidelink communication in a wireless communication system may include transmitting, to a terminal, first configuration information for first sidelink measurement and second configuration information for second sidelink measurement, transmitting a signal for the first sidelink measurement to the terminal, transmitting, in case that a result of the first sidelink measurement based on the first configuration information is lower than a first threshold value and a result of second sidelink measurement for a second U2N relay, which is based on the second configuration information, is higher than a second threshold value, information including the result of the first sidelink measurement and the result of the second sidelink measurement to a base station, and transmitting, to the terminal, a message indicating to establish a connection for the sidelink communication with respect to the second U2N relay. The message may be based on the information, and the connection for the sidelink communication may be established between the UE and the second U2N relay based on the message.

According to an embodiment, the result of the first sidelink measurement and the result of the second sidelink measurement may each include a sidelink discovery reference signal received power (SD-RSRP) or a sidelink (SL)-RSRP.

According to an embodiment, the first configuration information may include information on the first threshold value and information on the second threshold value, and the second threshold value may be configured to be higher than the first threshold value.

According to an embodiment, the first U2N relay and the second U2N relay may each correspond to a layer 2 (L2) U2N relay or a layer 3 (L3) U2N relay.

According to an embodiment, a first user equipment to network (U2N) relay for sidelink communication in a wireless communication system may include a transceiver and a controller coupled with the transceiver, wherein the controller is configured to transmit, to a terminal, first configuration information for first sidelink measurement and second configuration information for second sidelink measurement, transmit a signal for the first sidelink measurement to the terminal, transmit, if a result of the first sidelink measurement based on the first configuration information is lower than a first threshold value and a result of second sidelink measurement for a second U2N relay, which is based on the second configuration information, is higher than a second threshold value, information including the result of the first sidelink measurement and the result of the second sidelink measurement to a base station, and transmit, to the terminal, a message indicating to establish a connection for the sidelink communication with respect to the second U2N relay. The message may be based on the information, and the connection for the sidelink communication may be established between the UE and the second U2N relay based on the message.

According to an embodiment, the result of the first sidelink measurement and the result of the second sidelink measurement may each include a sidelink discovery reference signal received power (SD-RSRP) or a sidelink (SL)-RSRP.

According to an embodiment, the first configuration information may include information on the first threshold value and information on the second threshold value, and the second threshold value may be configured to be higher than the first threshold value.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station via a first user equipment to network (U2N) relay for sidelink communication, first configuration information for first sidelink measurement and second configuration information for second sidelink measurement;
performing the first sidelink measurement for the first U2N relay, based on the first configuration information;
performing the second sidelink measurement for a second U2N relay, based on the second configuration information;
in case that a result of the first sidelink measurement is lower (worse) than a first threshold value and a result of the second sidelink measurement is higher (better) than a second threshold value, transmitting, to the base station, information comprising the result of the first sidelink measurement and the result of the second sidelink measurement;
receiving a message indicating to establish a connection to the second U2N relay for the sidelink communication, based on the information; and
establishing the connection to the second U2N relay based on the message.

2. The method of claim 1, wherein each of the result of the first sidelink measurement and the result of the second sidelink measurement comprises a sidelink discovery reference signal received power (SD-RSRP) or a sidelink (SL)-RSRP.

3. The method of claim 1, wherein the first configuration information comprises information on the first threshold value and information on the second threshold value, and
wherein the second threshold value is configured to be higher than the first threshold value.

4. The method of claim 1, wherein the first U2N relay and the second U2N relay each correspond to a layer 2 (L2) U2N relay or a layer 3 (L3) U2N relay.

5. A terminal in a wireless communication system, the terminal comprising:
a transceiver; and
a controller coupled with the transceiver,
wherein the controller is configured to:
receive, from a base station via a first user equipment to network (U2N) relay for sidelink communication, first configuration information for first sidelink measurement and second configuration information for second sidelink measurement;
perform the first sidelink measurement for the first U2N relay, based on the first configuration information;
perform the second sidelink measurement for a second U2N relay, based on the second configuration information;
in case that a result of the first sidelink measurement is lower (worse) than a first threshold value and a result of the second sidelink measurement is higher (better) than a second threshold value, transmit, to the base station, information comprising the result of the first sidelink measurement and the result of the second sidelink measurement;
receive a message indicating to establish a connection to the second U2N relay for the sidelink communication, based on the information; and
establish the connection to the second U2N relay based on the message.

6. The terminal of claim 5, wherein each of the result of the first sidelink measurement and the result of the second sidelink measurement comprises a sidelink discovery reference signal received power (SD-RSRP) or a sidelink (SL)-RSRP.

7. The terminal of claim 5, wherein the first configuration information comprises information on the first threshold value and information on the second threshold value, and
wherein the second threshold value is configured to be higher than the first threshold value.

8. The terminal of claim 5, wherein the first U2N relay and the second U2N relay each correspond to a layer 2 (L2) U2N relay or a layer 3 (L3) U2N relay.

9. A method performed by a first user equipment to network (U2N) relay for sidelink communication in a wireless communication system, the method comprising:
transmitting, to a terminal, first configuration information for first sidelink measurement and second configuration information for second sidelink measurement;
transmitting, to the terminal, a signal for the first sidelink measurement;
in case that a result of the first sidelink measurement based on the first configuration information is lower (worse) than a first threshold value, and a result of second sidelink measurement for a second U2N relay based on the second configuration information is higher (better) than a second threshold value, transmitting information comprising the result of the first sidelink measurement and the result of the second sidelink measurement to a base station; and
transmitting, to the terminal, a message indicating to establish a connection to the second U2N relay for the sidelink communication,
wherein the message is based on the information, and
wherein based on the message, the connection for the sidelink communication is established between the terminal and the second U2N relay.

10. The method of claim 9, wherein the result of the first sidelink measurement and the result of the second sidelink measurement each comprise a sidelink discovery reference signal received power (SD-RSRP) or a sidelink (SL)-RSRP.

11. The method of claim 9, wherein the first configuration information comprises information on the first threshold value and information on the second threshold value, and
wherein the second threshold value is configured to be higher than the first threshold value.

12. Th method of claim 9, wherein the first U2N relay and the second U2N relay each correspond to a layer 2 (L2) U2N relay or a layer 3 (L3) U2N relay.

13. A first user equipment to network (U2N) relay for sidelink communication in a wireless communication system, the relay comprising:
a transceiver; and
a controller coupled with the transceiver,
wherein the controller is configured to:
transmit, to a terminal, first configuration information for first sidelink measurement and second configuration information for second sidelink measurement,
transmit, to a terminal, a signal for the first sidelink measurement,
in case that a result of the first sidelink measurement based on the first configuration information is lower (worse) than a first threshold value, and a result of second sidelink measurement for a second U2N relay based on the second configuration information is higher (better) than a second threshold value, transmit information comprising the result of the first sidelink measurement and the result of the second sidelink measurement to a base station, and
transmit, to the terminal, a message indicating to establish a connection to the second U2N relay for the sidelink communication, and
wherein the message is based on the information, and
wherein based on the message, the connection for the sidelink communication is established between the terminal and the second U2N relay.

14. The relay of claim 13, wherein the result of the first sidelink measurement and the result of the second sidelink measurement each comprise a sidelink discovery reference signal received power (SD-RSRP) or a sidelink (SL)-RSRP.

15. The relay of claim 13, wherein the first configuration information comprises information on the first threshold value and information on the second threshold value, and
wherein the second threshold value is configured to be higher than the first threshold value.
